(19) Europäisches Patentamt
European Patent Office
Office européen des brevets

(11) **EP 3 641 321 A1**

(12) **EUROPEAN PATENT APPLICATION**
published in accordance with Art. 153(4) EPC

(43) Date of publication:
**22.04.2020 Bulletin 2020/17**

(51) Int Cl.:
*H04N 21/434* (2011.01)   *H04N 21/4725* (2011.01)
*H04N 21/81* (2011.01)

(21) Application number: **18818160.6**

(22) Date of filing: **20.02.2018**

(86) International application number:
**PCT/KR2018/002052**

(87) International publication number:
**WO 2018/230809 (20.12.2018 Gazette 2018/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **15.06.2017 US 201762520508 P
23.08.2017 US 201762549404 P
26.09.2017 US 201762563099 P**

(71) Applicant: **LG Electronics Inc.
Seoul 07336 (KR)**

(72) Inventors:
• **LEE, Sooyeon
Seoul 06772 (KR)**
• **OH, Sejin
Seoul 06772 (KR)**

(74) Representative: **Mooser, Sebastian Thomas
Wuesthoff & Wuesthoff
Patentanwälte PartG mbB
Schweigerstraße 2
81541 München (DE)**

(54) **METHOD FOR TRANSMITTING 360-DEGREE VIDEO, METHOD FOR RECEIVING 360-DEGREE VIDEO, DEVICE FOR TRANSMITTING 360-DEGREE VIDEO, AND DEVICE FOR RECEIVING 360-DEGREE VIDEO**

(57)   Disclosed according to an aspect of the present invention is a method for transmitting a 360-degree video. A method for transmitting a 360-degree video according to an embodiment of the present invention comprises the steps of: generating a 360-degree video service including a plurality of 360-degree video contents, wherein at least two 360-degree video contents among the plurality of 360-degree video contents are connected to each other through a hot spot; generating signaling information for the 360-degree video service, wherein the signaling information includes information related to the hot spot, and the information related to the hot spot includes hot spot number information indicating the number of hot spots existing in the scenes included in the 360-degree video contents, hot spot identification information for identifying each of the hot spots, and hot spot location information indicating the location of each of the hot spots; and transmitting a data signal including the 360-degree video service and the signaling information.

FIG. 42

| Generate 360-degree video service containing a plurality of 360-degree video contents | SH42100 |

↓

| Generate signaling information for the 360-degree video service | SH42200 |

↓

| Transmit data signal including the 360-degree video service and the signaling information | SH42300 |

**Description**

[Technical Field]

The present disclosure relates to a method for transmitting a 360-degree video, a method for receiving a 360-degree video, a device for transmitting a 360-degree video, a device for receiving a 360-degree video.

[Background Art]

A virtual reality (VR) system provides a user with an experience of being in an electronically projected environment. The VR system may be enhanced in order to provide images with higher definition and spatial sounds. The VR system may allow a user to interactively use VR content.

Currently, VR content (360-degree content) is provided in a limited area in the form of a 360-degree sphere. In other words, the current VR content provides a service for a 360-degree area with a fixed center.

[Disclosure]

[Technical Problem]

The VR system needs to be improved in order to provide a VR environment to the user more efficiently. To this end, data transmission efficiency for transmission of a large amount of data such as VR content, robustness between transmission and reception networks, network flexibility considering a mobile reception device, and methods for efficient play and signaling should be proposed.

MPEG-I, which is developing standards for the next generation of media, attempts to provide a new type of contents service (e.g., light field, omnidirectional 360, etc.) that may cover a wider area than a 360-degree service having a fixed center. In other words, there is an ongoing effort to expand the range of services that users can experience compared to the existing fixed sphere.

An object of the present disclosure is to provide a method for efficiently processing video data even when a plurality of VR contents (360-degree contents) is provided.

Another object of the present disclosure is to provide a method for configuring a file/transport format for efficient scene change between 360-degree contents when a plurality of 360-degree contents is to be streamed.

Another object of the present disclosure is to provide a method for configuring a file format for signaling one or more hot spots using a timed metadata scheme.

Another object of the present disclosure is to provide a method for signaling a location of a hot spot in a VR content currently being reproduced in a file format.

Another object of the present disclosure is to provide a method for signaling a position of an initial viewport in new VR content linked via a hot spot.

Another object of the present disclosure is to provide a method for signaling a position with respect to a sub-window of a navigator capable of providing a user guide for relative positions between linked VR contents.

[Technical Solution]

The object of the present disclosure may be achieved by providing a method for transmitting a 360-degree video, a method for receiving a 360-degree video, a device for transmitting a 360-degree video, and a device for receiving a 360-degree video.

In one aspect of the present disclosure, provided herein is a device for receiving a 360-degree video.

According to an example, the device for receiving a 360-degree video may include a receiver configured to receive a data signal including a 360-degree video service containing a plurality of 360-degree video contents and signaling information for the 360-degree video service, wherein at least two 360-degree video contents of the plurality of 360-degree video contents are linked to each other through a hot spot, wherein the signaling information comprises hot spot related information, wherein the hot spot related information comprises hot spot number information indicating the number of hot spots present in a scene included in the 360-degree video contents, hot spot identification information for identifying each of the hot spots, and hot spot location information indicating a location of each of the hot spots; a signaling parser configured to parse the signaling information; and a display configured to display the 360-degree video service.

The hot spot location information may be information indicating a location of a hot spot in the 360-degree video contents.

The hot spot location information may include center information indicating a center of the hot spot and range information indicating horizontal and vertical ranges with respect to the center of the hot spot.

The hot spot location information may include coordinate values of at least three vertices defining a boundary of the hot spot.

The hot spot related information may further include content indication information indicating a 360-degree video content linked through each of the hot spots, start time information about the 360-degree video content indicated by the content indication information, and initial viewport information about the 360-degree video content indicated by the content indication information.

The signaling information may further include navigation information for providing location and orientation information about a 360-degree video content being played, wherein the location and orientation information about the 360-degree video content being played may indicate a relative location and orientation in relation to the 360-degree video service.

The navigation information may include window area information defining an area of a navigator window displayed in a viewport of the 360-degree video content being played.

The 360-degree video reception device may further include a renderer configured to render the 360 degree video service in a 3D space.

In another aspect of the present disclosure, provided herein is a method for transmitting a 360-degree video.

According to example, the method for transmitting a 360-degree video may include generating a 360-degree video service containing a plurality of 360-degree video contents, wherein at least two 360-degree video contents of the plurality of 360-degree video contents are linked to each other through a hot spot; generating signaling information for the 360-degree video service, wherein the signaling information may include hot spot related information, wherein the hot spot related information may include hot spot number information indicating the number of hot spots present in a scene included in the 360-degree video contents, hot spot identification information for identifying each of the hot spots, and hot spot location information indicating a location of each of the hot spots; and transmitting a data signal including the 360-degree video service and the signaling information.

The hot spot location information may be information indicating a location of a hot spot in the 360-degree video contents.

The hot spot location information may include center information indicating a center of the hot spot and range information indicating horizontal and vertical ranges with respect to the center of the hot spot.

The hot spot location information may include coordinate values of at least three vertices defining a boundary of the hot spot.

The hot spot related information may further include content indication information indicating a 360-degree video content linked through each of the hot spots, start time information about the 360-degree video content indicated by the content indication information, and initial viewport information about the 360-degree video content indicated by the content indication information.

The signaling information may further include navigation information for providing location and orientation information about a 360-degree video content being played, wherein the location and orientation information about the 360-degree video content being played may indicate a relative location and orientation in relation to the 360-degree video service.

The navigation information may include window area information defining an area of a navigator window displayed in a viewport of the 360-degree video content being played.

In another aspect of the present disclosure, provided herein are a 360-degree video transmission device and a method for receiving a 360-degree video.

[Advantageous Effects]

According to the present disclosure, 360-degree content may be efficiently transmitted in an environment supporting next-generation hybrid broadcasting that employs a terrestrial broadcasting network and an Internet network.

The present disclosure may provide a method for providing an interactive experience in consumption of 360-degree content by a user.

The present disclosure may provide a method for signaling that accurately reflects the intention of a 360-degree content producer in consumption of 360-degree content by a user.

The present disclosure may provide a method for efficiently increasing transmission capacity and delivering necessary information in 360-degree content delivery.

The present disclosure may provide a plurality of 360-degree contents. More specifically, the present disclosure may provide a plurality of 360-degree contents within a 360-degree video, and provide a next-generation media service that provides the 360-degree video. The present disclosure may also provide a method for efficiently processing video data when a plurality of 360-degree contents is provided within a 360-degree video.

[Description of Drawings]

FIG. 1 illustrates an architecture for providing 360-degree video according to the present invention.

FIG. 2 illustrates a 360-degree video transmission device according to one aspect of the present invention.

FIG. 3 illustrates a 360-degree video reception device according to another aspect of the present invention.

FIG. 4 illustrates a 360-degree video transmission device/360-degree video reception device according to another embodiment of the present invention.

FIG. 5 illustrates the concept of aircraft principal axes for describing a 3D space according to the present invention.

FIG. 6 illustrates projection schemes according to one embodiment of the present invention.

FIG. 7 illustrates tiles according to one embodiment of the present invention.

FIG. 8 illustrates 360-degree video related metadata according to one embodiment of the present invention.

FIG. 9 illustrates the structure of a media file according to an example of the present disclosure.

FIG. 10 illustrates a hierarchical structure of boxes in ISOBMFF according to an example of the present disclosure.

FIG. 11 illustrates the overall operation of a DASH-based adaptive streaming model according to an example of the present disclosure.

FIG. 12 illustrates linking VR contents through a hot spot according to an example of the present disclosure.

FIG. 13 illustrates various examples of hot spots.

FIG. 14 illustrates a data structure including hot spot related information according to an example of the present disclosure.

FIG. 15 illustrates a data structure including hot spot related information according to another example of the present disclosure.

FIG. 16 is a reference diagram illustrating a method for defining a region based on a shape type according to an example of the present disclosure.

FIG. 17 illustrates a data structure including hot spot related information according to another example of the present disclosure.

FIG. 18 illustrates a data structure including hot spot related information according to another example of the present disclosure.

FIG. 19 illustrates a data structure including hot spot related information according to another example of the present disclosure.

FIG. 20 illustrates a data structure including hot spot related information according to another example of the present disclosure.

FIG. 21 illustrates a data structure including hot spot related information according to another example of the present disclosure.

FIG. 22 illustrates a data structure including hot spot related information according to another example of the present disclosure.

FIG. 23 illustrates a data structure including hot spot related information according to another example of the present disclosure.

FIG. 24 illustrates a data structure including hot spot related information according to another example of the present disclosure.

FIG. 25 illustrates a data structure including hot spot related information according to another example of the present disclosure.

FIG. 26 illustrates a case where HotspotStruct() according to various examples of the present disclosure is included in HotspotSampleEntry or HotspotSample().

FIG. 27 illustrates an example of signaling a data structure including hot spot related information through an ISO BMFF box according to various examples of the present disclosure.

FIG. 28 illustrates an example of signaling a data structure including hot spot related information through an ISO BMFF box according to various examples of the present disclosure.

FIG. 29 illustrates a tref box according to an example of the present disclosure.

FIG. 30 illustrates a data structure including hot spot related information according to another example of the present disclosure.

FIG. 31 illustrates a data structure including hot spot related information according to another example of the present disclosure.

FIG. 32 is a diagram illustrating an example of sample grouping for switching of streaming between VR contents.

FIG. 33 illustrates a sample group box for switching of streaming between VR contents.

FIG. 34 illustrates a sample group entry for delivering grouped VR contents in a predetermined order.

FIG. 35 illustrates a data structure including navigation information according to an example of the present disclosure.

FIG. 36 illustrates a data structure including navigation information according to another example of the present disclosure.

FIG. 37 illustrates a case where navigation information is included in NavigatorSampleEntry according to various examples of the present disclosure.

FIG. 38 illustrates an example of signaling a data structure including navigation information according to various examples of the present disclosure through an ISO BMFF box.

FIG. 39 illustrates a tref box according to another example of the present disclosure.

FIG. 40 illustrates a data structure including navigation information according to another example of the present disclosure.

FIG. 41 illustrates SphereRegionStruct according to an example of the present disclosure.

FIG. 42 is a flowchart illustrating a method for transmitting a 360-degree video according to an example of the present disclosure.

FIG. 43 is a block diagram illustrating a configuration of a 360-degree video transmission device according to an example of the present disclosure.

FIG. 44 is a block diagram illustrating a configuration of a 360-degree video reception device according to an example of the present disclosure.

FIG. 45 is a flowchart illustrating a method for receiving a 360-degree video according to an example of the present disclosure.

[Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention.

Although most terms of elements in this specification have been selected from general ones widely used in the art taking into consideration functions thereof in this specification, the terms may be changed depending on the intention or convention of those skilled in the art or the introduction of new technology. Some terms have been arbitrarily selected by the applicant and their meanings are explained in the following description as needed. Thus, the terms used in this specification should be construed based on the overall content of this specification together with the actual meanings of the terms rather than their simple names or meanings.

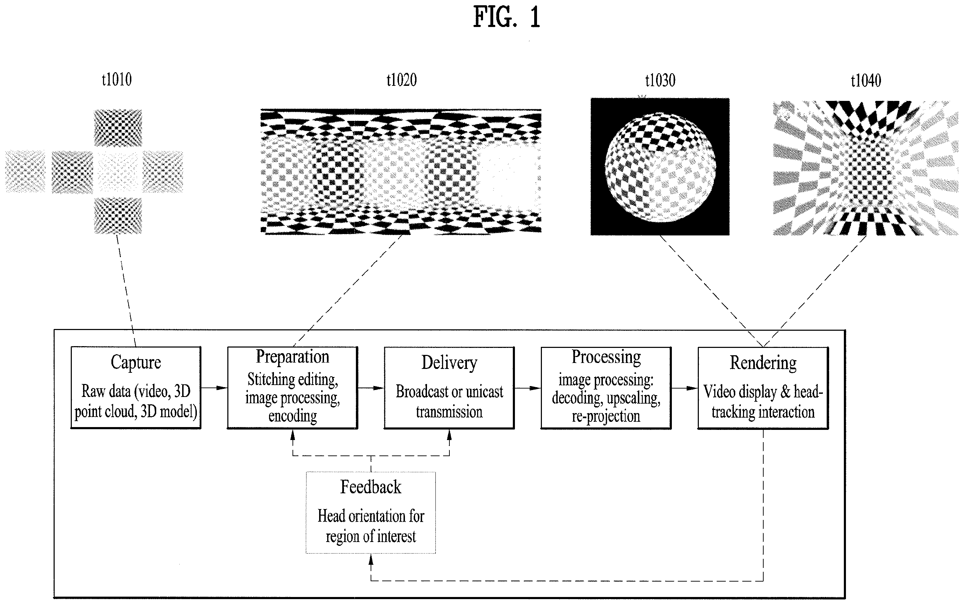

FIG. 1 illustrates an architecture for providing 360-degree video according to the present invention.

The present invention proposes a method for providing 360-degree content or omnidirectional media in order to provide VR (Virtual Reality) to users. VR refers to a technique or an environment for replicating an actual or virtual environment. VR artificially provides sensuous experiences to users and thus users can experience electronically projected environments.

360-degree content refers to convent for realizing and providing VR and may include 360-degree video and/or 360-degree audio. 360-degree video may refer to video or image content which is necessary to provide VR and is captured or reproduced in all directions (360 degrees). 360-degree video may refer to video or an image represented on 3D spaces in various forms according to 3D models. For example, 360 video can be represented on a spherical plane. 360 audio is audio content for providing VR and may refer to spatial audio content which can be recognized as content having an audio generation source located on a specific space. 360 content may be generated, processed and transmitted to users, and users may consume VR experiences using the 360 content. Hereinafter, 360 content/video/image/audio may be represented as 360 content/video/image/audio without a unit (degree) or VR content/video/image/audio. Further, 360 content/video/image/audio may be used interchangeably with omnidirectional content/video/image/audio.

The present invention proposes a method for effectively providing 360degree video. To provide 360 video, first, 360 video may be captured using one or more cameras. The captured 360 video is transmitted through a series of processes, and a reception side may process received data into the original 360 video and render the 360 video. Accordingly, the 360 video can be provided to a user.

Specifically, a procedure for providing 360 video may include a capture process, a preparation process, a transmission process, a processing process, a rendering process and/or a feedback process.

The capture process may refer to a process of capturing images or videos for a plurality of viewpoints through one or more cameras. An image/video data t1010 shown in the figure can be generated through the capture process. Each plane of the shown image/video data t1010 may refer to an image/video for each viewpoint. The captured images/videos may be called raw data. In the capture process, metadata related to capture may be generated.

For capture, a special camera for VR may be used. When 360 video for a virtual space generated using a computer is provided according to an embodiment, capture using a camera may not be performed. In this case, the capture process may be replaced by a process of simply generating related data.

The preparation process may be a process of processing the captured images/videos and metadata generated in the capture process. The captured images/videos may be subjected to stitching, projection, region-wise packing and/or encoding in the preparation process.

First, the images/videos may pass through a stitching process. The stitching process may be a process of connecting the captured images/videos to create a single panorama image/video or a spherical image/video.

Then, the stitched images/videos may pass through a projection process. In the projection process, the stitched images/videos can be projected onto a 2D image. This 2D image may be called a 2D image frame. Projection on a 2D image may be represented as mapping to the 2D image. The projected image/video data can have a form of a 2D image t1020 as shown in the figure.

The video data projected onto the 2D image can pass through a region-wise packing process in order to increase video coding efficiency. Region-wise packing may refer to a process of dividing the video data projected onto the 2D image into regions and processing the regions. Here, regions may refer to regions obtained by dividing a 2D image on which 360 video data is projected. Such regions may be obtained by dividing the 2D image equally or randomly according to an embodiment. Regions may be divided depending on a projection scheme according to an embodiment. The region-wise packing process is an optional process and thus may be omitted in the preparation process.

According to an embodiment, this process may include a process of rotating the regions or rearranging the regions on the 2D image in order to increase video coding efficiency. For example, the regions can be rotated such that specific sides of regions are positioned in proximity to each other to increase coding efficiency.

According to an embodiment, this process may include a process of increasing or decreasing the resolution of a specific region in order to differentiate the resolution for regions of the 360 video. For example, the resolution of regions corresponding to a relatively important part of the 360 video can be increased to higher than other regions. The video data projected onto the 2D image or the region-wise packed video data can pass through an encoding process using a video codec.

According to an embodiment, the preparation process may additionally include an editing process. In the editing process, the image/video data before or after projection may be edited. In the preparation process, metadata with respect to stitching/projection/encoding/editing may be generated. In addition, metadata with respect to the initial viewpoint or ROI (region of interest) of the video data projected onto the 2D image may be generated.

The transmission process may be a process of processing and transmitting the image/video data and metadata which have passed through the preparation process. For transmission, processing according to an arbitrary transmission protocol may be performed. The data that has been processed for transmission may be delivered over a broadcast network and/or broadband. The data may be delivered to a reception side in an on-demand manner. The reception side may receive the data through various paths.

The processing process refers to a process of decoding the received data and reprojecting the projected image/video data on a 3D model. In this process, the image/video data projected onto the 2D image may be re-projected onto a 3D space. This process may be called mapping projection. Here, the 3D space on which the data is mapped may have a form depending on a 3D model. For example, 3D models may include a sphere, a cube, a cylinder and a pyramid.

According to an embodiment, the processing process may further include an editing process, an up-scaling process, etc. In the editing process, the image/video data before or after re-projection can be edited. When the image/video data has been reduced, the size of the image/video data can be increased through up-scaling of samples in the up-scaling process. As necessary, the size may be decreased through down-scaling.

The rendering process may refer to a process of rendering and displaying the image/video data re-projected onto the 3D space. Re-projection and rendering may be collectively represented as rendering on a 3D model. The image/video re-projected (or rendered) on the 3D model may have a form t1030 as shown in the figure. The form t1030 corresponds to a case in which the image/video data is re-projected onto a spherical 3D model. A user can view a region of the rendered image/video through a VR display or the like. Here, the region viewed by the user may have a form t1040 shown in the figure.

The feedback process may refer to a process of delivering various types of feedback information which can be acquired in the display process to a transmission side. Through the feedback process, interactivity in 360 video consumption can be provided. According to an embodiment, head orientation information, viewport information indicating a region currently viewed by a user, etc. can be delivered to the transmission side in the feedback process. According to an embodiment, the user may interact with content realized in a VR environment. In this case, information related to the interaction may be delivered to the transmission side or a service provider in the feedback process. According to an embodiment, the feedback process may not be performed.

The head orientation information may refer to information about the position, angle and motion of a user's head. On the basis of this information, information about a region of 360 video currently viewed by the user, that is, viewport information can be calculated.

The viewport information may be information about a region of 360 video currently viewed by a user. Gaze analysis may be performed using the viewport information to check a manner in which the user consumes 360 video, a region of the 360 video at which the user gazes, and how long the user gazes at the region. Gaze analysis may be performed by the reception side and the analysis result may be delivered to the transmission side through a feedback channel. A device such as a VR display may extract a viewport region on the basis of the position/direction of a user's head, vertical or horizontal FOV supported by the device, etc.

According to an embodiment, the aforementioned feedback information may be consumed at the reception side as well as being delivered to the transmission side. That is, decoding, re-projection and rendering processes of the reception side can be performed using the aforementioned feedback information. For example, only 360 video corresponding to the region currently viewed by the user can be preferentially decoded and rendered using the head orientation information and/or the viewport information.

Here, a viewport or a viewport region can refer to a region of 360 video currently viewed by a user. A viewpoint is a point in 360 video which is viewed by the user and may refer to a center point of a viewport region. That is, a viewport is a region based on a viewpoint, and the size and form of the region can be determined by FOV (field of view) which will be described below.

In the above-described architecture for providing 360 video, image/video data which is subjected to a series of capture/projection/encoding/transmission/ decoding/re-projection/rendering processes can be called 360 video data. The term "360 video data" may be used as the concept including metadata or signaling information related to such image/video data.

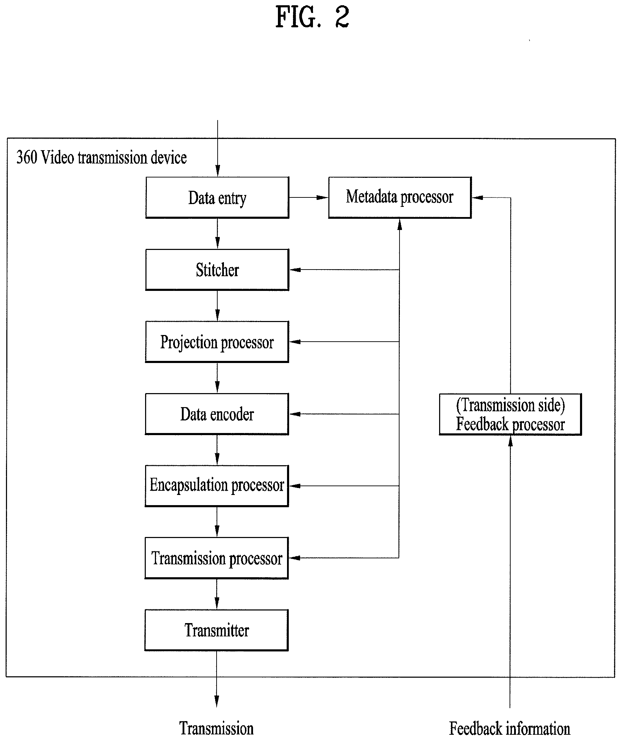

FIG. 2 illustrates a 360 video transmission device according to one aspect of the present invention.

According to one aspect, the present invention may relate to a 360 video transmission device. The 360 video transmission device according to the present invention may perform operations related to the above-described preparation process to the transmission process. The 360 video transmission device according to the present invention may include a data input unit, a stitcher, a projection processor, a region-wise packing processor (not shown), a metadata processor, a (transmission side) feedback processor, a data encoder, an encapsulation processor, a transmission processor and/or a transmitter as internal/external elements.

The data input unit may receive captured images/videos for respective viewpoints. The images/videos for the viewpoints may be images/videos captured by one or more cameras. In addition, the data input unit may receive metadata generated in the capture process. The data input unit may deliver the received images/videos for the viewpoints to the stitcher and deliver the metadata generated in the capture process to a signaling processor.

The stitcher may stitch the captured images/videos for the viewpoints. The stitcher may deliver the stitched 360 video data to the projection processor. The stitcher may receive necessary metadata from the metadata processor and use the metadata for stitching operation as necessary. The stitcher may deliver the metadata generated in the stitching process to the metadata processor. The metadata in the stitching process may include information indicating whether stitching has been performed, a stitching type, etc.

The projection processor may project the stitched 360 video data on a 2D image. The projection processor may perform projection according to various schemes which will be described below. The projection processor may perform mapping in consideration of the depth of 360 video data for each viewpoint. The projection processor may receive metadata necessary for projection from the metadata processor and use the metadata for the projection operation as necessary. The projection processor may deliver metadata generated in the projection process to the metadata processor. The metadata of the projection process may include a projection scheme type.

The region-wise packing processor (not shown) may perform the aforementioned region-wise packing process. That is, the region-wise packing processor may perform a process of dividing the projected 360 video data into regions, rotating or rearranging the regions or changing the resolution of each region. As described above, the region-wise packing process is an optional process, and when region-wise packing is not performed, the region-wise packing processor can be omitted. The region-wise packing processor may receive metadata necessary for region-wise packing from the metadata processor and use the metadata for the region-wise packing operation as necessary. The metadata of the region-wise packing processor may include a degree to which each region is rotated, the size of each region, etc.

The aforementioned stitcher, the projection processor and/or the region-wise packing processor may be realized by one hardware component according to an embodiment.

The metadata processor may process metadata which can be generated in the capture process, the stitching process, the projection process, the region-wise packing process, the encoding process, the encapsulation process and/or the processing process for transmission. The metadata processor may generate 360 video related metadata using such metadata. According to an embodiment, the metadata processor may generate the 360 video related metadata in the form of a signaling table. The 360 video related metadata may be called metadata or 360 video related signaling information according to context. Furthermore, the metadata processor may deliver acquired or generated metadata to internal elements of the 360 video transmission device as necessary. The metadata processor may deliver the 360 video related metadata to the data encoder, the encapsulation processor and/or the transmission processor such that the metadata can be transmitted to the reception side.

The data encoder may encode the 360 video data projected onto the 2D image and/or the region-wise packed 360 video data. The 360 video data may be encoded in various formats.

The encapsulation processor may encapsulate the encoded 360 video data and/or 360 video related metadata into a file. Here, the 360 video related metadata may be delivered from the metadata processor. The encapsulation processor may encapsulate the data in a file format such as ISOBMFF, CFF or the like or process the data into a DASH segment. The encapsulation processor may include the 360 video related metadata in a file format according to an embodiment. For example, the 360 video related metadata can be included in boxes of various levels in an ISOBMFF file format or included as data in an additional track in a file. The encapsulation processor may encapsulate the 360 video related metadata into a file according to an embodiment. The transmission processor may perform processing for transmission on the 360 video data encapsulated in a file format. The transmission processor may process the 360 video data according to an arbitrary transmission protocol. The processing for transmission may include processing for delivery through a broadcast network and processing for delivery over a broadband. According to an embodiment, the transmission processor may receive 360 video related metadata from the metadata processor in addition to the 360 video data and perform processing for transmission on the 360 video related metadata.

The transmission unit may transmit the processed 360 video data and/or the 360 video related metadata over a broadcast network and/or broadband. The transmission unit may include an element for transmission over a broadcast network and an element for transmission over a broadband.

According to an embodiment of the present invention, the 360 video transmission device may further include a data storage unit (not shown) as an internal/external element. The data storage unit may store the encoded 360 video data and/or 360 video related metadata before delivery to the transmission processor. Such data may be stored in a file format such as ISOBMFF. When 360 video is transmitted in real time, the data storage unit may not be used. However, 360 video is delivered on demand, in non-real time or over a broadband, encapsulated 360 data may be stored in the data storage unit for a predetermined period and then transmitted.

According to another embodiment of the present invention, the 360 video transmission device may further include a (transmission side) feedback processor and/or a network interface (not shown) as internal/external elements. The network interface may receive feedback information from a 360 video reception device according to the present invention and deliver the feedback information to the (transmission side) feedback processor. The feedback processor may deliver the feedback information to the stitcher, the projection processor, the region-wise packing processor, the data encoder, the encapsulation processor, the metadata processor and/or the transmission processor. The feedback information may be delivered to the metadata processor and then delivered to each internal element according to an embodiment. Upon reception of the feedback information, internal elements may reflect the feedback information in 360 video data processing.

According to another embodiment of the 360 video transmission device of the present invention, the region-wise packing processor may rotate regions and map the regions on a 2D image. Here, the regions may be rotated in different directions at different angles and mapped on the 2D image. The regions may be rotated in consideration of neighboring parts and stitched parts of the 360 video data on the spherical plane before projection. Information about rotation of the regions, that is, rotation directions and angles may be signaled using 360 video related metadata. According to another embodiment of the 360 video transmission device according to the present invention, the data encoder may perform encoding differently on respective regions. The data encoder may encode a specific region with high quality and encode other regions with low quality. The feedback processor at the transmission side may deliver the feedback information received from the 360 video reception device to the data encoder such that the data encoder can use encoding methods differentiated for regions. For example, the feedback processor can deliver viewport information received from the reception side to the data encoder. The data encoder may encode regions including a region indicated by the viewport information with higher quality (UHD) than other regions.

According to another embodiment of the 360 video transmission device according to the present invention, the transmission processor may perform processing for transmission differently on respective regions. The transmission processor may apply different transmission parameters (modulation orders, code rates, etc.) to regions such that data delivered for the regions have different robustnesses.

Here, the feedback processor may deliver the feedback information received from the 360 video reception device to the transmission processor such that the transmission processor can perform transmission processing differentiated for respective regions. For example, the feedback processor can deliver viewport information received from the reception side to the transmission processor. The transmission processor may perform transmission processing on regions including a region indicated by the viewport information such that the regions have higher robustness than other regions.

The aforementioned internal/external elements of the 360 video transmission device according to the present invention may be hardware elements. According to an embodiment, the internal/external elements may be modified, omitted, replaced by other elements or integrated with other elements. According to an embodiment, additional elements may be added to the 360 video transmission device.

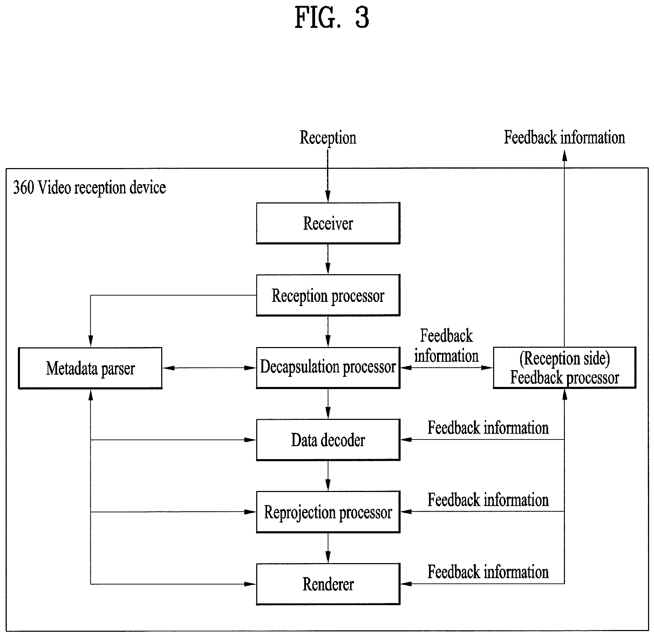

FIG. 3 illustrates a 360 video reception device according to another aspect of the present invention.

According to another aspect, the present invention may relate to a 360 video reception device. The 360 video reception device according to the present invention may perform operations related to the above-described processing process and/or the rendering process. The 360 video reception device according to the present invention may include a reception unit, a reception processor, a decapsulation processor, a data decoder, a metadata parser, a (reception side) feedback processor, a re-projection processor and/or a renderer as internal/external elements.

The reception unit may receive 360 video data transmitted from the 360 video transmission device according to the present invention. The reception unit may receive the 360 video data through a broadcast network or a broadband depending on a transmission channel.

The reception processor may perform processing according to a transmission protocol on the received 360 video data. The reception processor may perform a reverse of the process of the transmission processor. The reception processor may deliver the acquired 360 video data to the decapsulation processor and deliver acquired 360 video related metadata to the metadata parser. The 360 video related metadata acquired by the reception processor may have a form of a signaling table.

The decapsulation processor may decapsulate the 360 video data in a file format received from the reception processor. The decapsulation processor may decapsulate files in ISOBMFF to acquire 360 video data and 360 video related metadata. The acquired 360 video data may be delivered to the data decoder and the acquired 360 video related metadata may be delivered to the metadata parser. The 360 video related metadata acquired by the decapsulation processor may have a form of box or track in a file format. The decapsulation processor may receive metadata necessary for decapsulation from the metadata parser as necessary.

The data decoder may decode the 360 video data. The data decoder may receive metadata necessary for decoding from the metadata parser. The 360 video related metadata acquired in the data decoding process may be delivered to the metadata parser.

The metadata parser may parse/decode the 360 video related metadata. The metadata parser may deliver the acquired metadata to the data decapsulation processor, the data decoder, the re-projection processor and/or the renderer.

The re-projection processor may re-project the decoded 360 video data. The re-projection processor may re-project the 360 video data on a 3D space. The 3D space may have different forms depending on used 3D models. The re-projection processor may receive metadata necessary for re-projection from the metadata parser. For example, the re-projection processor may receive information about the type of a used 3D model and detailed information thereof from the metadata parser. According to an embodiment, the re-projection processor may re-project only 360 video data corresponding to a specific region on the 3D space using the metadata necessary for re-projection.

The renderer may render the re-projected 360 video data. This may be represented as rendering of the 360 video data on a 3D space as described above. When two processes are simultaneously performed in this manner, the re-projection processor and the renderer may be integrated and the processes may be performed in the renderer. According to an embodiment, the renderer may render only a region viewed by the user according to view information of the user.

The user may view part of the rendered 360 video through a VR display. The VR display is a device for reproducing 360 video and may be included in the 360 video reception device (tethered) or connected to the 360 video reception device as a separate device (un-tethered).

According to an embodiment of the present invention, the 360 video reception device may further include a (reception side) feedback processor and/or a network interface (not shown) as internal/external elements. The feedback processor may acquire feedback information from the renderer, the re-projection processor, the data decoder, the decapsulation processor and/or the VR display and process the feedback information. The feedback information may include viewport information, head orientation information, gaze information, etc. The network interface may receive the feedback information from the feedback processor and transmit the same to the 360 video transmission device.

As described above, the feedback information may be used by the reception side in addition to being delivered to the transmission side. The reception side feedback processor can deliver the acquired feedback information to internal elements of the 360 video reception device such that the feedback information is reflected in a rendering process. The reception side feedback processor can deliver the feedback information to the renderer, the re-projection processor, the data decoder and/or the decapsulation processor. For example, the renderer can preferentially render a region viewed by the user using the feedback information. In addition, the decapsulation processor and the data decoder can preferentially decapsulate and decode a region viewed by the user or a region to be viewed by the user.

The internal/external elements of the 360 video reception device according to the present invention may be hardware elements. According to an embodiment, the internal/external elements may be modified, omitted, replaced by other elements or integrated with other elements. According to an embodiment, additional elements may be added to the 360 video reception device.

Another aspect of the present invention may relate to a method of transmitting 360 video and a method of receiving 360 video. The methods of transmitting/receiving 360 video according to the present invention may be performed by the above-described 360 video transmission/reception devices or embodiments thereof.

The aforementioned embodiments of the 360 video transmission/reception devices and embodiments of the internal/external elements thereof may be combined. For example, embodiments of the projection processor and embodiments of the data encoder can be combined to create as many embodiments of the 360 video transmission device as the number of the embodiments. The combined embodiments are also included in the scope of the present invention.

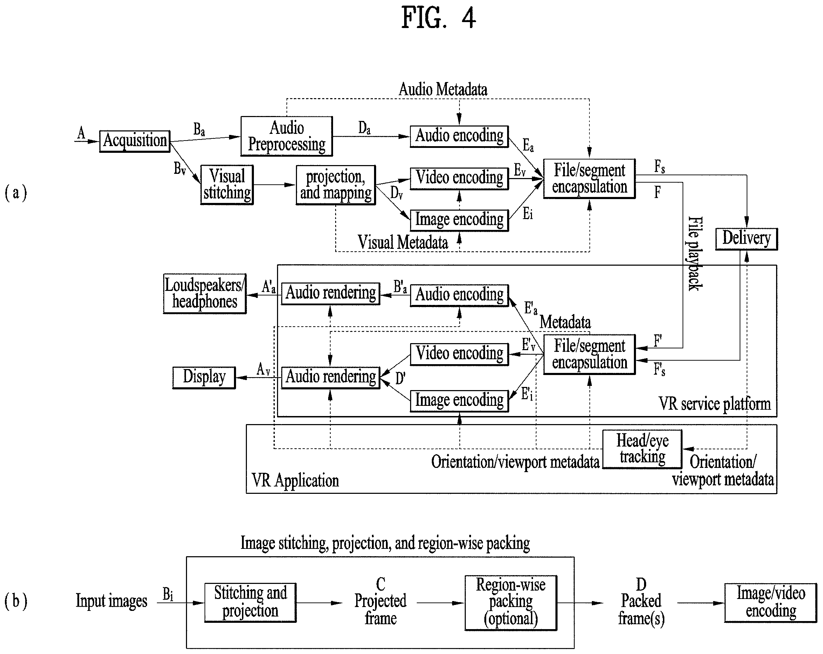

FIG. 4 illustrates a 360 video transmission device/360 video reception device according to another embodiment of the present invention.

As described above, 360 content may be provided according to the architecture shown in (a). The 360 content may be provided in the form of a file or in the form of a segment based download or streaming service such as DASH. Here, the 360 content may be called VR content.

As described above, 360 video data and/or 360 audio data may be acquired.

The 360 audio data may be subjected to audio preprocessing and audio encoding. Through these processes, audio related metadata may be generated, and the encoded audio and audio related metadata may be subjected to processing for transmission (file/segment encapsulation).

The 360 video data may pass through the aforementioned processes. The stitcher of the 360 video transmission device may stitch the 360 video data (visual stitching). This process may be omitted and performed at the reception side according to an embodiment. The projection processor of the 360 video transmission device may project the 360 video data on a 2D image (projection and mapping (packing)).

The stitching and projection processes are shown in (b) in detail. In (b), when the 360 video data (input images) is delivered, stitching and projection may be performed thereon. The projection process may be regarded as projecting the stitched 360 video data on a 3D space and arranging the projected 360 video data on a 2D image. In the specification, this process may be represented as projecting the 360 video data on a 2D image. Here, the 3D space may be a sphere or a cube. The 3D space may be identical to the 3D space used for re-projection at the reception side.

The 2D image may also be called a projected frame C. Region-wise packing may be optionally performed on the 2D image. When region-wise packing is performed, the positions, forms and sizes of regions may be indicated such that the regions on the 2D image can be mapped on a packed frame D. When region-wise packing is not performed, the projected frame may be identical to the packed frame. Regions will be described below. The projection process and the region-wise packing process may be represented as projecting regions of the 360 video data on a 2D image. The 360 video data may be directly converted into the packed frame without an intermediate process according to design.

In (a), the projected 360 video data may be image-encoded or video-encoded. Since the same content may be present for different viewpoints, the same content may be encoded into different bit streams. The encoded 360 video data may be processed into a file format such as ISOBMFF according to the aforementioned encapsulation processor. Alternatively, the encapsulation processor may process the encoded 360 video data into segments. The segments may be included in an individual track for DASH based transmission.

Along with processing of the 360 video data, 360 video related metadata may be generated as described above. This metadata may be included in a video bitstream or a file format and delivered. The metadata may be used for encoding, file format encapsulation, processing for transmission, etc.

The 360 audio/video data may pass through processing for transmission according to the transmission protocol and then be transmitted. The aforementioned 360 video reception device may receive the 360 audio/video data over a broadcast network or broadband.

In (a), a VR service platform may correspond to an embodiment of the aforementioned 360 video reception device. In (a), loudspeakers/headphones, display and head/eye tracking components are performed by an external device or a VR application of the 360 video reception device. According to an embodiment, the 360 video reception device may include all of these components. According to an embodiment, the head/eye tracking components may correspond to the aforementioned reception side feedback processor.

The 360 video reception device may perform processing for reception (file/segment decapsulation) on the 360 audio/video data. The 360 audio data may be subjected to audio decoding and audio rendering and then provided to the user through a speaker/headphone.

The 360 video data may be subjected to image decoding or video decoding and visual rendering and provided to the user through a display. Here, the display may be a display supporting VR or a normal display.

As described above, the rendering process may be regarded as a process of reprojecting 360 video data on a 3D space and rendering the re-projected 360 video data. This may be represented as rendering of the 360 video data on the 3D space.

The head/eye tracking components may acquire and process head orientation information, gaze information and viewport information of a user. This has been described above.

The reception side may include a VR application which communicates with the aforementioned processes of the reception side.

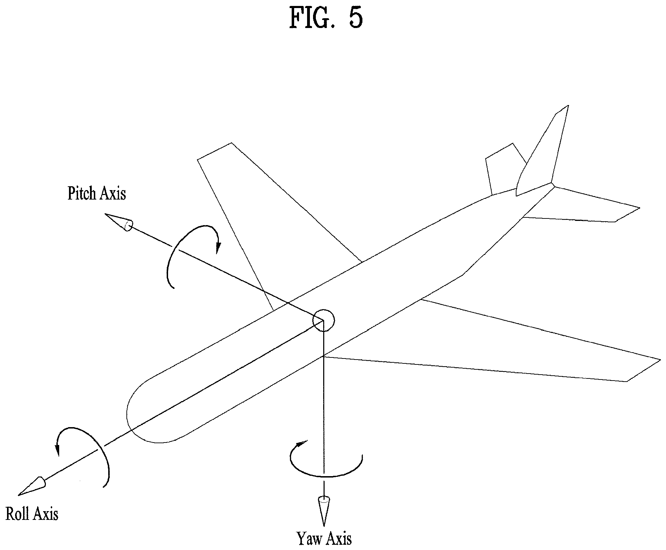

FIG. 5 illustrates the concept of aircraft principal axes for describing a 3D space of the present invention.

In the present invention, the concept of aircraft principal axes may be used to represent a specific point, position, direction, spacing and region in a 3D space.

That is, the concept of aircraft principal axes may be used to describe a 3D space before projection or after re-projection and to signal the same. According to an embodiment, a method using X, Y and Z axes or a spherical coordinate system may be used.

An aircraft can feely rotate in the three dimension. Axes which form the three dimension are called pitch, yaw and roll axes. In the specification, these may be represented as pitch, yaw and roll or a pitch direction, a yaw direction and a roll direction.

The pitch axis may refer to a reference axis of a direction in which the front end of the aircraft rotates up and down. In the shown concept of aircraft principal axes, the pitch axis can refer to an axis connected between wings of the aircraft.

The yaw axis may refer to a reference axis of a direction in which the front end of the aircraft rotates to the left/right. In the shown concept of aircraft principal axes, the yaw axis can refer to an axis connected from the top to the bottom of the aircraft.

The roll axis may refer to an axis connected from the front end to the tail of the aircraft in the shown concept of aircraft principal axes, and rotation in the roll direction can refer to rotation based on the roll axis.

As described above, a 3D space in the present invention can be described using the concept of the pitch, yaw and roll.

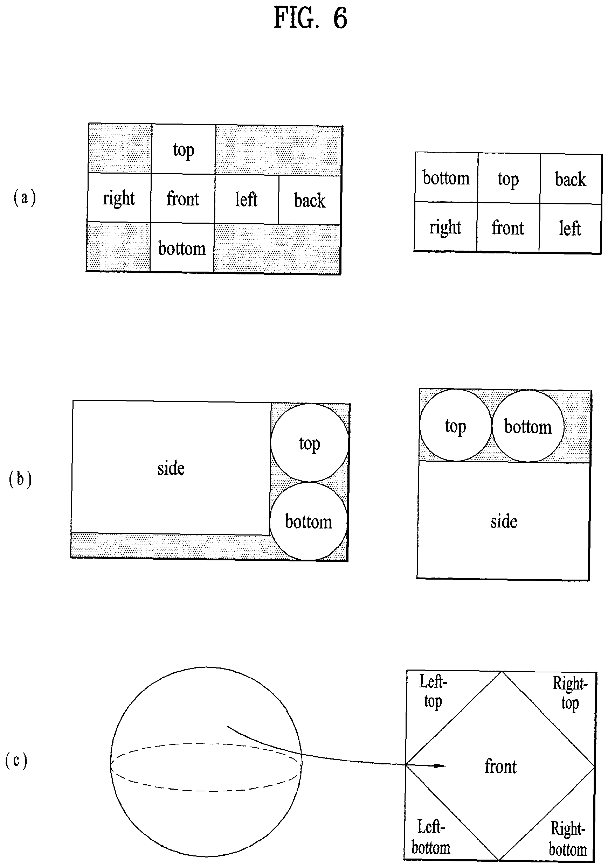

FIG. 6 illustrates projection schemes according to an embodiment of the present invention.

As described above, the projection processor of the 360 video transmission device according to the present invention may project stitched 360 video data on a 2D image. In this process, various projection schemes can be used.

According to another embodiment of the 360 video transmission device according to the present invention, the projection processor may perform projection using a cubic projection scheme. For example, stitched video data can be represented on a spherical plane. The projection processor may segment the 360 video data into faces of a cube and project the same on the 2D image. The 360 video data on the spherical plane may correspond to the faces of the cube and be projected onto the 2D image as shown in (a).

According to another embodiment of the 360 video transmission device according to the present invention, the projection processor may perform projection using a cylindrical projection scheme. Similarly, if stitched video data can be represented on a spherical plane, the projection processor can segment the 360 video data into parts of a cylinder and project the same on the 2D image. The 360 video data on the spherical plane can correspond to the side, top and bottom of the cylinder and be projected onto the 2D image as shown in (b).

According to another embodiment of the 360 video transmission device according to the present invention, the projection processor may perform projection using a pyramid projection scheme. Similarly, if stitched video data can be represented on a spherical plane, the projection processor can regard the 360 video data as a pyramid form, segment the 360 video data into faces of the pyramid and project the same on the 2D image. The 360 video data on the spherical plane can correspond to the front, left top, left bottom, right top and right bottom of the pyramid and be projected onto the 2D image as shown in (c).

According to an embodiment, the projection processor may perform projection using an equirectangular projection scheme and a panoramic projection scheme in addition to the aforementioned schemes.

As described above, regions may refer to regions obtained by dividing a 2D image on which 360 video data is projected. Such regions need not correspond to respective faces of the 2D image projected according to a projection scheme. However, regions may be divided such that the faces of the projected 2D image correspond to the regions and region-wise packing may be performed according to an embodiment. Regions may be divided such that a plurality of faces may correspond to one region or one face may correspond to a plurality of regions according to an embodiment. In this case, the regions may depend on projection schemes. For example, the top, bottom, front, left, right and back sides of the cube can be respective regions in (a). The side, top and bottom of the cylinder can be respective regions in (b). The front, left top, left bottom, right top and right bottom sides of the pyramid can be respective regions in (c).

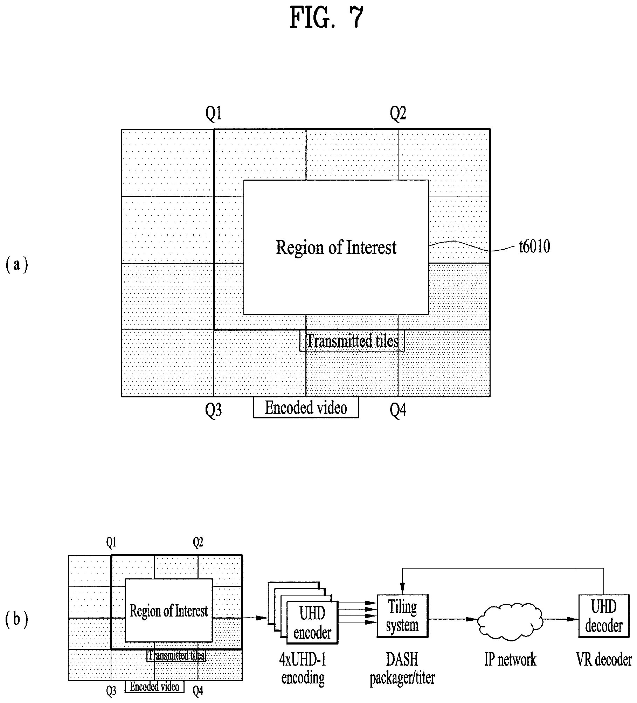

FIG. 7 illustrates tiles according to an embodiment of the present invention.

360 video data projected onto a 2D image or region-wise packed 360 video data may be divided into one or more tiles. (a) shows that one 2D image is divided into 16 tiles. Here, the 2D image may be the aforementioned projected frame or packed frame. According to another embodiment of the 360 video transmission device of the present invention, the data encoder may independently encode the tiles.

The aforementioned region-wise packing can be discriminated from tiling. The aforementioned region-wise packing may refer to a process of dividing 360 video data projected onto a 2D image into regions and processing the regions in order to increase coding efficiency or adjusting resolution. Tiling may refer to a process through which the data encoder divides a projected frame or a packed frame into tiles and independently encode the tiles. When 360 video is provided, a user does not simultaneously use all parts of the 360 video. Tiling enables only tiles corresponding to important part or specific part, such as a viewport currently viewed by the user, to be transmitted to or consumed by the reception side on a limited bandwidth. Through tiling, a limited bandwidth can be used more efficiently and the reception side can reduce computational load compared to a case in which the entire 360 video data is processed simultaneously.

A region and a tile are discriminated from each other and thus they need not be identical. However, a region and a tile may refer to the same area according to an embodiment. Region-wise packing may be performed based on tiles and thus regions can correspond to tiles according to an embodiment. Furthermore, when sides according to a projection scheme correspond to regions, each side, region and tile according to the projection scheme may refer to the same area according to an embodiment. A region may be called a VR region and a tile may be called a tile region according to context.

ROI (Region of Interest) may refer to a region of interest of users, which is provided by a 360 content provider. When the 360 content provider produces 360 video, the 360 content provider can produce the 360 video in consideration of a specific region which is expected to be a region of interest of users. According to an embodiment, ROI may correspond to a region in which important content of the 360 video is reproduced.

According to another embodiment of the 360 video transmission/reception devices of the present invention, the reception side feedback processor may extract and collect viewport information and deliver the same to the transmission side feedback processor. In this process, the viewport information can be delivered using network interfaces of both sides. In the 2D image shown in (a), a viewport t6010 is displayed. Here, the viewport may be displayed over nine tiles of the 2D images.

In this case, the 360 video transmission device may further include a tiling system. According to an embodiment, the tiling system may be located following the data encoder (b), may be included in the aforementioned data encoder or transmission processor, or may be included in the 360 video transmission device as a separate internal/external element.

The tiling system may receive viewport information from the transmission side feedback processor. The tiling system may select only tiles included in a viewport region and transmit the same. In the 2D image shown in (a), only nine tiles including the viewport region t6010 among 16 tiles can be transmitted. Here, the tiling system may transmit tiles in a unicast manner over a broadband because the viewport region is different for users.

In this case, the transmission side feedback processor may deliver the viewport information to the data encoder. The data encoder may encode the tiles including the viewport region with higher quality than other tiles.

Furthermore, the transmission side feedback processor may deliver the viewport information to the metadata processor. The metadata processor may deliver metadata related to the viewport region to each internal element of the 360 video transmission device or include the metadata in 360 video related metadata.

By using this tiling method, transmission bandwidths can be saved and processes differentiated for tiles can be performed to achieve efficient data processing/transmission.

The above-described embodiments related to the viewport region can be applied to specific regions other than the viewport region in a similar manner. For example, the aforementioned processes performed on the viewport region can be performed on a region determined to be a region in which users are interested through the aforementioned gaze analysis, ROI, and a region (initial view, initial viewpoint) initially reproduced when a user views 360 video through a VR display.

According to another embodiment of the 360 video transmission device of the present invention, the transmission processor may perform processing for transmission differently on tiles. The transmission processor may apply different transmission parameters (modulation orders, code rates, etc.) to tiles such that data delivered for the tiles has different robustnesses.

Here, the transmission side feedback processor may deliver feedback information received from the 360 video reception device to the transmission processor such that the transmission processor can perform transmission processing differentiated for tiles. For example, the transmission side feedback processor can deliver the viewport information received from the reception side to the transmission processor. The transmission processor can perform transmission processing such that tiles including the corresponding viewport region have higher robustness than other tiles.

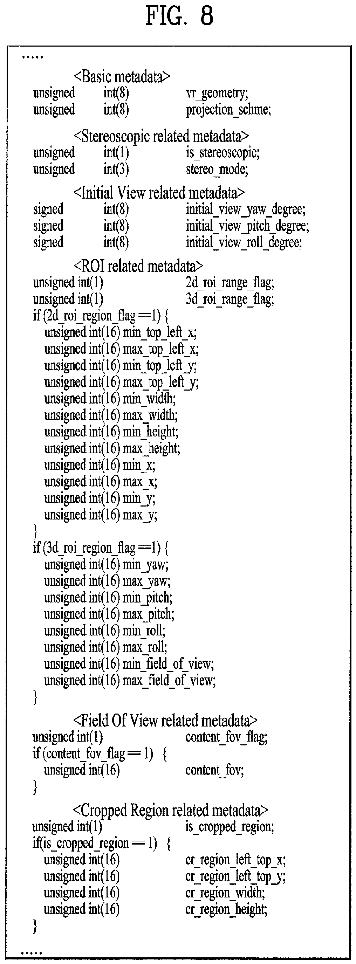

FIG. 8 illustrates 360 video related metadata according to an embodiment of the present invention.

The aforementioned 360 video related metadata may include various types of metadata related to 360 video. The 360 video related metadata may be called 360 video related signaling information according to context. The 360 video related metadata may be included in an additional signaling table and transmitted, included in a DASH MPD and transmitted, or included in a file format such as ISOBMFF in the form of box and delivered. When the 360 video related metadata is included in the form of box, the 360 video related metadata may be included in various levels such as a file, fragment, track, sample entry, sample, etc. and may include metadata about data of the corresponding level.

According to an embodiment, part of the metadata, which will be described below, may be configured in the form of a signaling table and delivered, and the remaining part may be included in a file format in the form of a box or a track.

According to an embodiment of the 360 video related metadata, the 360 video related metadata may include basic metadata related to a projection scheme, stereoscopic related metadata, initial view/initial viewpoint related metadata, ROI related metadata, FOV (Field of View) related metadata and/or cropped region related metadata. According to an embodiment, the 360 video related metadata may include additional metadata in addition to the aforementioned metadata.

Embodiments of the 360 video related metadata according to the present invention may include at least one of the aforementioned basic metadata, stereoscopic related metadata, initial view/initial viewpoint related metadata, ROI related metadata, FOV related metadata, cropped region related metadata and/or additional metadata. Embodiments of the 360 video related metadata according to the present invention may be configured in various manners depending on the number of cases of metadata included therein. According to an embodiment, the 360 video related metadata may further include additional metadata in addition to the aforementioned metadata.

The basic metadata may include 3D model related information, projection scheme related information and the like. The basic metadata may include a vr_geometry field, a projection_scheme field, etc. According to an embodiment, the basic metadata may further include additional information.

The vr_geometry field can indicate the type of a 3D model supported by the corresponding 360 video data. When the 360 video data is re-projected onto a 3D space as described above, the 3D space may have a form according to a 3D model indicated by the vr_geometry field. According to an embodiment, a 3D model used for rendering may differ from the 3D model used for re-projection, indicated by the vr_geometry field. In this case, the basic metadata may further include a field which indicates the 3D model used for rendering. When the field has values of 0, 1, 2 and 3, the 3D space can conform to 3D models of a sphere, a cube, a cylinder and a pyramid. When the field has the remaining values, the field can be reserved for future use. According to an embodiment, the 360 video related metadata may further include detailed information about the 3D model indicated by the field. Here, the detailed information about the 3D model may refer to the radius of a sphere, the height of a cylinder, etc. for example. This field may be omitted.

The projection_scheme field can indicate a projection scheme used when the 360 video data is projected onto a 2D image. When the field has values of 0, 1, 2, 3, 4, and 5, the field indicates that the equirectangular projection scheme, cubic projection scheme, cylindrical projection scheme, tile-based projection scheme, pyramid projection scheme and panoramic projection scheme are used. When the field has a value of 6, the field indicates that the 360 video data is directly projected onto the 2D image without stitching. When the field has the remaining values, the field can be reserved for future use. According to an embodiment, the 360 video related metadata may further include detailed information about regions generated according to a projection scheme specified by the field. Here, the detailed information about regions may refer to information indicating whether regions have been rotated, the radius of the top region of a cylinder, etc. for example.

The stereoscopic related metadata may include information about 3D related attributes of the 360 video data. The stereoscopic related metadata may include an is_stereoscopic field and/or a stereo_mode field. According to an embodiment, the stereoscopic related metadata may further include additional information.

The is_stereoscopic field can indicate whether the 360 video data supports 3D. When the field is 1, the 360 video data supports 3D. When the field is 0, the 360 video data does not support 3D. This field may be omitted.

The stereo_mode field can indicate 3D layout supported by the corresponding 360 video. Whether the 360 video supports 3D can be indicated only using this field. In this case, the is_stereoscopic field can be omitted. When the field is 0, the 360 video may be a mono mode. That is, the projected 2D image can include only one mono view. In this case, the 360 video may not support 3D.

When this field is set to 1 and 2, the 360 video can conform to left-right layout and top-bottom layout. The left-right layout and top-bottom layout may be called a side-by-side format and a top-bottom format. In the case of the left-right layout, 2D images on which left image/right image are projected can be positioned at the left/right on an image frame. In the case of the top-bottom layout, 2D images on which left image/right image are projected can be positioned at the top/bottom on an image frame. When the field has the remaining values, the field can be reserved for future use.

The initial view/initial viewpoint related metadata may include information about a view (initial view) which is viewed by a user when initially reproducing 360 video. The initial view/initial viewpoint related metadata may include an initial_view_yaw_degree field, an initial_view_pitch_degree field and/or an initial_view_roll_degree field. According to an embodiment, the initial view/initial viewpoint related metadata may further include additional information.

The initial_view_yaw_degree field, initial_view_pitch_degree field and initial_view_roll_degree field can indicate an initial view when the 360 video is reproduced. That is, the center point of a viewport which is initially viewed when the 360 video is reproduced can be indicated by these three fields. The fields can indicate the center point using a direction (sign) and a degree (angle) of rotation on the basis of yaw, pitch and roll axes. Here, the viewport which is initially viewed when the 360 video is reproduced according to FOV. The width and height of the initial viewport based on the indicated initial view may be determined through FOV. That is, the 360 video reception device can provide a specific region of the 360 video as an initial viewport to a user using the three fields and FOV information.

According to an embodiment, the initial view indicated by the initial view/initial viewpoint related metadata may be changed per scene. That is, scenes of the 360 video change as 360 content proceeds with time. The initial view or initial viewport which is initially viewed by a user can change for each scene of the 360 video. In this case, the initial view/initial viewpoint related metadata can indicate the initial view per scene. To this end, the initial view/initial viewpoint related metadata may further include a scene identifier for identifying a scene to which the initial view is applied. In addition, since FOV may change per scene of the 360 video, the initial view/initial viewpoint related metadata may further include FOV information per scene which indicates FOV corresponding to the relative scene.

The ROI related metadata may include information related to the aforementioned ROI. The ROI related metadata may include a 2d_roi_range_flag field and/or a 3d_roi_range_flag field. These two fields can indicate whether the ROI related metadata includes fields which represent ROI on the basis of a 2D image or fields which represent ROI on the basis of a 3D space. According to an embodiment, the ROI related metadata may further include additional information such as differentiate encoding information depending on ROI and differentiate transmission processing information depending on ROI.

When the ROI related metadata includes fields which represent ROI on the basis of a 2D image, the ROI related metadata may include a min_top_left_x field, a max_top_left_x field, a min_top_left_y field, a max_top_left_y field, a min_width field, a max_width field, a min_height field, a max_height field, a min_x field, a max_x field, a min_y field and/or a max_y field.

The min_top_left_x field, max_top_left_x field, min_top_left_y field, max_top_left_y field can represent minimum/maximum values of the coordinates of the left top end of the ROI. These fields can sequentially indicate a minimum x coordinate, a maximum x coordinate, a minimum y coordinate and a maximum y coordinate of the left top end.

The min_width field, max_width field, min_height field and max_height field can indicate minimum/maximum values of the width and height of the ROI. These fields can sequentially indicate a minimum value and a maximum value of the width and a minimum value and a maximum value of the height.

The min_x field, max_x field, min_y field and max_y field can indicate minimum and maximum values of coordinates in the ROI. These fields can sequentially indicate a minimum x coordinate, a maximum x coordinate, a minimum y coordinate and a maximum y coordinate of coordinates in the ROI. These fields can be omitted.

When ROI related metadata includes fields which indicate ROI on the basis of coordinates on a 3D rendering space, the ROI related metadata may include a min_yaw field, a max_yaw field, a min_pitch field, a max_pitch field, a min_roll field, a max_roll field, a min_field_of_view field and/or a max_field_of_view field.

The min_yaw field, max_yaw field, min_pitch field, max_pitch field, min_roll field and max_roll field can indicate a region occupied by ROI on a 3D space using minimum/maximum values of yaw, pitch and roll. These fields can sequentially indicate a minimum value of yaw-axis based reference rotation amount, a maximum value of yaw-axis based reference rotation amount, a minimum value of pitch-axis based reference rotation amount, a maximum value of pitch-axis based reference rotation amount, a minimum value of roll-axis based reference rotation amount, and a maximum value of roll-axis based reference rotation amount.

The min_field_of_view field and max_field_of_view field can indicate minimum/maximum values of FOV of the corresponding 360 video data. FOV can refer to the range of view displayed at once when 360 video is reproduced. The min_field_of_view field and max_field_of_view field can indicate minimum and maximum values of FOV. These fields can be omitted. These fields may be included in FOV related metadata which will be described below.

The FOV related metadata may include the aforementioned FOV related information. The FOV related metadata may include a content_fov_flag field and/or a content_fov field. According to an embodiment, the FOV related metadata may further include additional information such as the aforementioned minimum/maximum value related information of FOV.

The content_fov_flag field can indicate whether corresponding 360 video includes information about FOV intended when the 360 video is produced. When this field value is 1, a content_fov field can be present.

The content_fov field can indicate information about FOV intended when the 360 video is produced. According to an embodiment, a region displayed to a user at once in the 360 video can be determined according to vertical or horizontal FOV of the 360 video reception device. Alternatively, a region displayed to a user at once in the 360 video may be determined by reflecting FOV information of this field according to an embodiment.

Cropped region related metadata may include information about a region including 360 video data in an image frame. The image frame may include a 360 video data projected active video area and other areas. Here, the active video area can be called a cropped region or a default display region. The active video area is viewed as 360 video on an actual VR display and the 360 video reception device or the VR display can process/display only the active video area. For example, when the aspect ratio of the image frame is 4:3, only an area of the image frame other than an upper part and a lower part of the image frame can include 360 video data. This area can be called the active video area.

The cropped region related metadata can include an is_cropped_region field, a cr_region_left_top_x field, a cr_region_left_top_y field, a cr_region_width field and/or a cr_region_height field. According to an embodiment, the cropped region related metadata may further include additional information.

The is_cropped_region field may be a flag which indicates whether the entire area of an image frame is used by the 360 video reception device or the VR display. That is, this field can indicate whether the entire image frame indicates an active video area. When only part of the image frame is an active video area, the following four fields may be added.

A cr_region_left_top_x field, a cr_region_left_top_y field, a cr_region_width field and a cr_region_height field can indicate an active video area in an image frame. These fields can indicate the x coordinate of the left top, the y coordinate of the left top, the width and the height of the active video area. The width and the height can be represented in units of pixel.

As described above, 360-degree video related signaling information or metadata can be included in an arbitrarily defined signaling table, included in the form of box in a file format such as ISOBMFF or common file format or included in a DASH MPD and transmitted. In addition, 360-degree media data may be included in such a file format or a DASH segment and transmitted.

The ISOBMFF and DASH MPD will be sequentially described below.

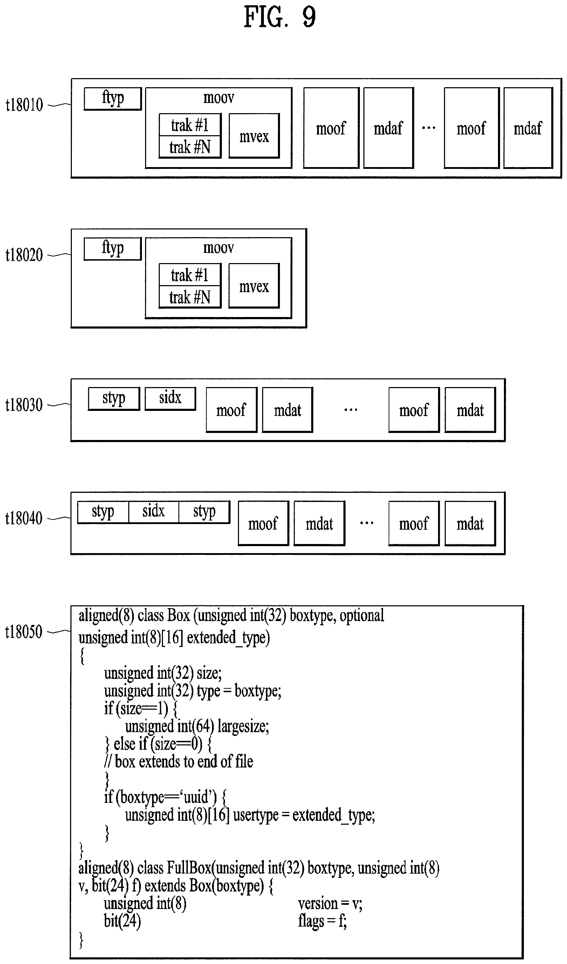

FIG. 9 illustrates the structure of a media file according to an example of the present disclosure.

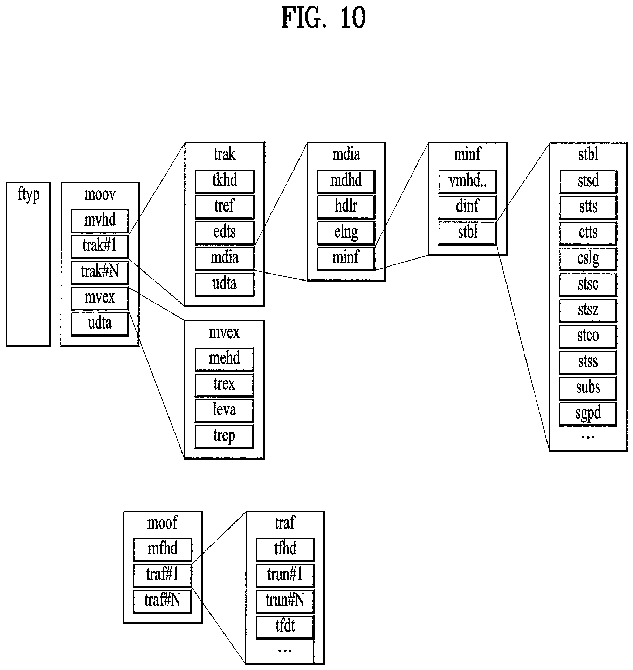

FIG. 10 illustrates a hierarchical structure of boxes in ISOBMFF according to an example of the present disclosure.

In order to store and transmit media data such as audio or video data, a standardized media file format may be defined. According to an example, a media file may have a file format based on the ISO base media file format (ISO BMFF).

The media file according to the present disclosure may include at least one box. The box may be a data block or an object including media data or metadata related to the media data. The boxes may be configured in a hierarchical structure, and thus data may be classified such that the media file may take a form suitable for storing and/or transmitting a large amount of media data. In addition, the media file may have a structure facilitating access to media information, as in a case where a user moves to a specific point of the media content.

The media file according to the present disclosure may include an ftyp box, a moov box, and/or an mdat box.

The ftyp box (file type box) may provide file type or compatibility related information about a corresponding media file. The ftyp box may include configuration version information about media data of the media file. The decoder may identify the media file by referring to the ftyp box.

The moov box (movie box) may be a box including metadata about the media data of the media file. The moov box may serve as a container for all metadata. The moov box may be a box of the highest layer among the metadata related boxes. According to an example, only one moov box may be present in a media file.

The mdat box (media data box) may be a box containing actual media data of the media file. The media data may include audio samples and/or video samples. The mdat box may serve as a container to contain these media samples.

According to an example, the moov box described above may further include an mvhd box, a trak box, and/or an mvex box as sub-boxes.

The mvhd box (movie header box) may include media presentation related information of media data included in the media file. That is, the mvhd box may include information such as media generation time, change time, time specification, and duration of the media presentation.

The trak box (track box) may provide information related to a track of the media data. The trak box may include information such as stream related information, presentation related information, and access related information about an audio track or a video track. There may be a plurality of trak boxes depending on the number of tracks.

According to an example, the trak box may further include a tkhd box (track header box) as a sub-box. The tkhd box may include information about the track indicated by the trak box. The tkhd box may include information such as a generation time, a change time, and a track identifier of the corresponding track.

The mvex box (movie extend box) may indicate that a moof box, which will described later, may be present in the media file. To identify all the media samples of a specific track, the moof boxes may need to be scanned.

According to an example, the media file of the present disclosure may be divided into a plurality of fragments (t18010). Thus, the media file may be divided so as to be stored or transmitted. The media data (mdat boxes) of the media file may be divided into a plurality of fragments, and each fragment may include a moof box and a divided mdat box. According to an example, information of the ftyp box and/or the moov box may be needed to utilize the fragments.

The moof box (movie fragment box) may provide metadata about the media data of corresponding fragment. The moof box may be a box of the highest layer among metadata-related boxes of the corresponding fragment.

The mdat box (media data box) may contain actual media data as described above. The mdat box may include media samples of the media data corresponding to each corresponding fragment.

According to an example, the moof box described above may further include an mfhd box and/or a traf box as sub-boxes.

The mfhd box (movie fragment header box) may include information related to an association between multiple divided fragments. The mfhd box may include a sequence number to indicate the sequential position of the divided media data of the corresponding fragment. In addition, it may be checked whether there is missing data among the divided data through the mfhd box.

The traf box (track fragment box) may include information about a corresponding track fragment. The traf box may provide metadata about a divided track fragment included in the fragment. The traf box may provide the metadata such that the media samples in the track fragment may be decoded/played back. There may be a plurality of traf boxes depending on the number of track fragments.

According to an example, the traf box described above may further include a tfhd box and/or a trun box as sub-boxes.

The tfhd box (track fragment header box) may include header information about the corresponding track fragment. The tfhd box may provide information such as a basic sample size, a duration, an offset, and an identifier for the media samples of the track fragment indicated by the traf box described above.

The trun box (track fragment run box) may include corresponding track fragment related information. The trun box may include information such as a duration, a size, and a play time of each media sample.

The above-described media file or the fragments of the media file may be processed into segments and transmitted. The segments may include an initialization segment and/or a media segment.

The file of the illustrated example t18020 may be a file including information related to initialization of the media decoder except media data. This file may correspond to, for example, the initialization segment described above. The initialization segment may include the ftyp box and/or moov box described above.

The file of the illustrated example t18030 may be a file including the fragment described above. This file may correspond to, for example, the media segment described above. The media segment may include the moof box and/or mdat box described above. The media segment may further include a styp box and/or a sidx box.

The styp box (segment type box) may provide information for identifying the media data of a divided fragment. The styp box may have the same function as the ftyp box described above for the divided fragment. According to an example, the styp box may have the same format as the ftyp box.

The sidx box (segment index box) may provide information indicating an index for the divided fragment. Thereby, it may indicate the sequential position of the corresponding fragments among other fragments.

According to an example (t18040), an ssix box may be further included. The ssix box (sub-segment index box) may provide information indicating an index of a sub-segment when the segment is further divided into sub-segments.

The boxes in the media file may include further extended information based on the box as in the illustrated example t18050 or a FullBox form. In this example, the size field and the largesize field may indicate the length of the corresponding box in bytes. The version field may indicate the version of the box format. The type field may indicate the type or identifier of the box. The flags field may indicate a flag or the like related to the box.

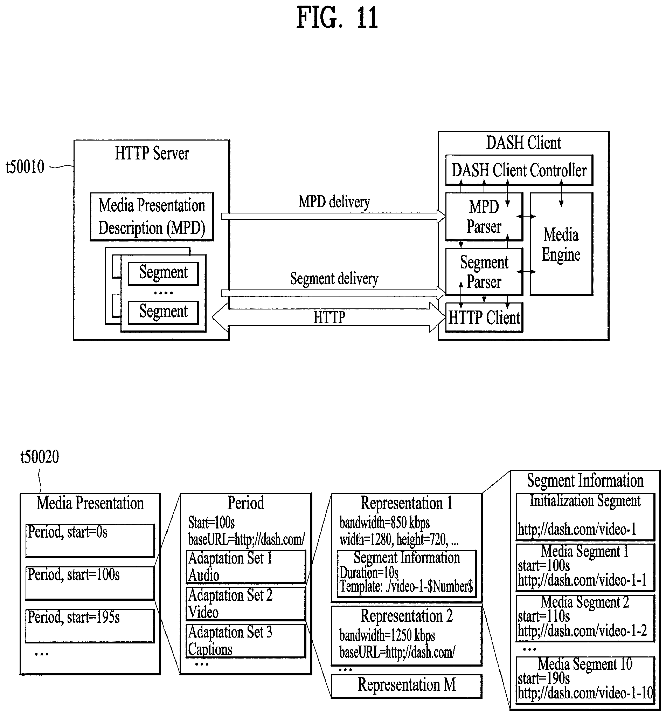

FIG. 11 illustrates the overall operation of a DASH-based adaptive streaming model according to an example of the present disclosure.

The DASH-based adaptive streaming model according to the illustrated example t50010 describes the operation between the HTTP server and the DASH client. Here, DASH (Dynamic Adaptive Streaming over HTTP), which is a protocol for supporting HTTP-based adaptive streaming, may dynamically support streaming according to network conditions. Accordingly, AV content may be played back seamlessly.

The DASH client may acquire an MPD. The MPD may be delivered from a service provider such as the HTTP server. Based on the information about access to segments described in the MPD, the DASH client may make a request to the server for the segments. In this case, the request may be made by reflecting the network state.

After acquiring the segments, the DASH client may process the segments through the media engine and display the processed segments on a screen. The DASH client may request and acquire a necessary segment by reflecting a play time and/or a network condition (Adaptive Streaming) in real time. Thereby, the content may be played back seamlessly.

The MPD (Media Presentation Description) is a file containing detailed information for allowing the DASH client to dynamically acquire a segment, and may be represented in XML form.

The DASH client controller may generate a command for requesting an MPD and/or a segment in consideration of the network condition. In addition, the controller may control the acquired information to be used in an internal block such as the media engine.

The MPD parser may parse the acquired MPD in real time. This may allow the DASH client controller to generate a command for acquiring a necessary segment.

The segment parser may parse the acquired segment in real time. Internal blocks such as the media engine may perform a specific operation according to the information included in the segment.

The HTTP client may make a request to the HTTP server for a necessary MPD and/or segments. The HTTP client may pass the MPD and/or segments obtained from the server to the MPD parser or the segment parser.

The media engine may display content on the screen based on the media data included in the segment. At this time, the information of the MPD may be utilized.

The DASH data model may have a hierarchy structure t50020. Media presentation may be described by the MPD. The MPD may describe a temporal sequence of a plurality of periods that configure a media presentation. A period may represent one section of the media content.

In one period, the data may be included in adaptation sets. An adaptation set may be a set of a plurality of media content components that may be exchanged with each other. The adaptation may include a set of representations. The representation may correspond to a media content component. Within one representation, content may be divided in time into a plurality of segments. This may be intended for proper accessibility and delivery. The URL of each segment may be provided to access each segment.

The MPD may provide information related to the media presentation. A period element, an adaptation set element, and a presentation element may describe a corresponding period, a corresponding adaptation set, and a corresponding presentation, respectively. A representation may be divided into sub-representations, and a sub-representation element may describe a correspond sub-representation.

Here, common properties/elements may be defined, and may be applied to (included in) an adaptation set, a representation, a sub-representations, and the like. The common properties/elements may include EssentialProperty and/or SupplementalProperty.

EssentialProperty may be information including elements that are considered essential in processing the media presentation related data. SupplementalProperty may be information including elements that may be used in processing the media presentation related data. According to an example, in a case where signaling information, which will be described later, is delivered through an MPD, the signaling information may be defined in EssentialProperty and/or SupplementalProperty.

A DASH-based descriptor may include an @schemeIdUri field, an @value field, and/or an @id field. The @schemeIdUri field may provide a URI for identifying the scheme of the descriptor. The @value field may have values whose meanings are defined by a scheme indicated by the @schemeIdUri field. That is, the @value field may have values of descriptor elements according to the scheme, which may be called parameters. The values may be distinguished from each other by ','. @id may indicate an identifier of the descriptor. In the case where the same identifier is given, the same scheme ID, value, and parameter may be included.

Each example of the 360 video related metadata may be rewritten in the form of a DASH based descriptor. When 360 video data is delivered according to DASH, 360 video related metadata may be described in the form of a DASH descriptor and included in an MPD so as to be transmitted to a receiver. These descriptors may be delivering in the form of the EssentialProperty descriptor and/or the SupplementalProperty descriptor. These descriptors may be included in the adaptation set, representation, sub-representation, and the like of the MPD.

Hereinafter, a method for streaming a 360-degree video service including a plurality of 360-degree contents will be described.

In order to secure the expandability of the content, a plurality of 360-degree contents (or VR contents) may be linked in a 360-degree video service. As the plurality of 360-degree contents is linked within the 360-degree video, more areas may be displayed for the user in a 360-degree form. This configuration may be realized through a hot spot technique described herein.

When two or more 360-degree contents overlap each other, or there is a medium linking the two or more 360-degree contents, the hot spot technique may link the two or more 360-degree contents. The hot spot may be a medium or mediation information for linking two or more 360 degree contents. In a specific example, the hot spot may be shown to the user in the form of a point or area within the 360-degree video screen.

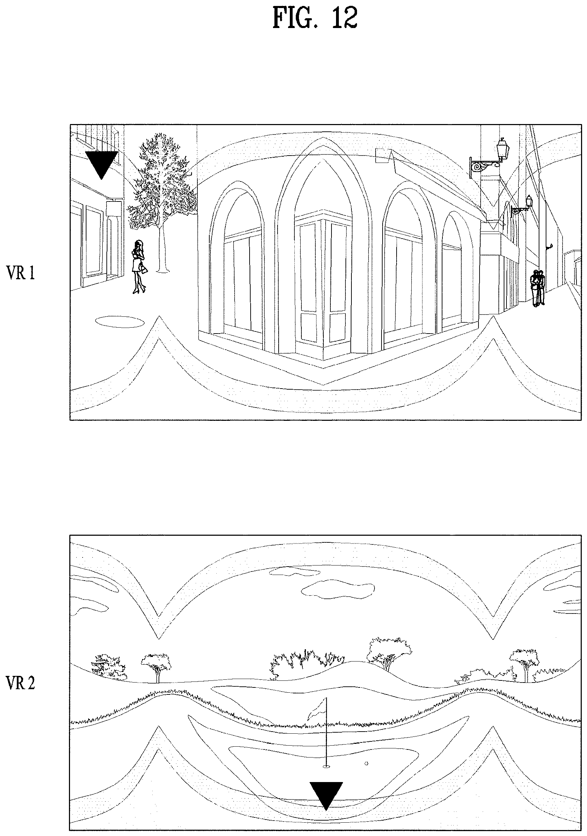

FIG. 12 illustrates linking VR contents through a hot spot according to an example of the present disclosure.

As shown in FIG. 12, a hot spot may be exposed on 360 video (VR content) captured at two different viewpoints (see the inverted triangle in the drawing). That is, hot spots may be exposed to VR content 1 (VR1) and VR content 2 (VR2), respectively. When a user selects the hot spot exposed to VR content 1 (VR1), an environment is provided in which a stream of VR content 2 may be played back, and the user sees a predefined initial viewport for VR content 2. In addition, the hot spot linked to VR content 1 is exposed on VR content 2. While the conventional 360 video provides VR content of a limited area, the hot spot technique may provide VR content of an extended area.

The hot spot technique may be categorized into three types, which are shown in the figure.

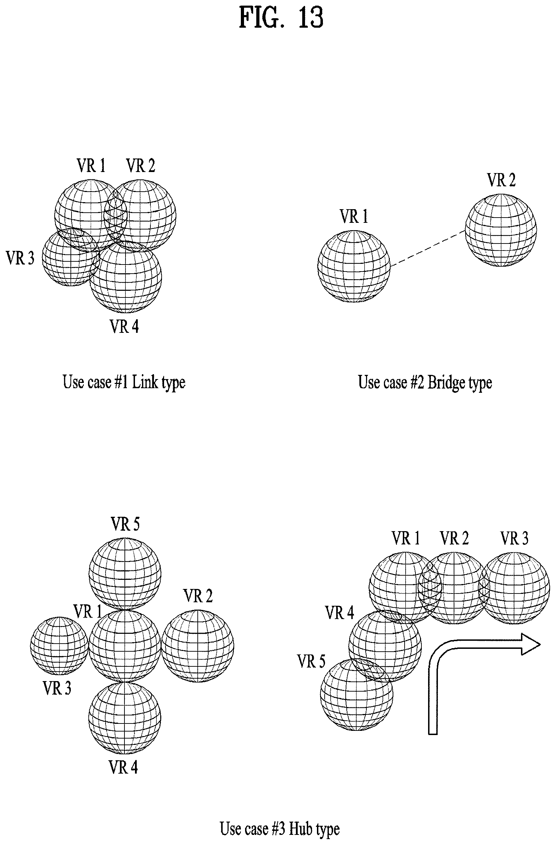

FIG. 13 illustrates various examples of hot spots.

FIG. 13 shows a link type corresponding to a first example (use case #1), a bridge type corresponding to a second example (use case #2), and a hub type corresponding to a third example (use case #3).

First, the link type corresponds to a case where movement between VR contents is unconstrained.

Next, the bridge type corresponds to a case where there is a medium for link to other VR content in a VR content that is being played back, and the medium serves to change scenes.

Next, the hub type corresponds to a case where VR content is classified into main VR content and sub VR content. This type corresponds to a case where there is only one main VR content to which the sub content is linked, or a case where VR contents are sequentially linked to each other, and the linked VR contents have an overlapping part, and the sequential relationship between the VR contents to be played back is clear.

The above-described three types are exemplary, and various types other than the use cases described above may be applied to VR video that is played back by linking multiple VR contents.

For hot spots, the file format for VR video may be newly defined.

Hereinafter, a VR video file format for a hot spot and a data selection/transmission method for linking a plurality of VR contents will be described. Here, the VR video file format for the hot spot may be the ISO BMFF-based file format described above.

First, a method for selecting/reproducing hot spot transmission data using timed metadata at a file format level is described. When a plurality of VR contents is linked to each other through hot spots in a VR video stream, the number of hot spots linked in a scene, identification information about each hot spot, and location information about each hot spot, and information (e.g., initial viewport, etc.) needed after linking to new VR content should be defined. In addition, the current omnidirectional media application format (OMAF) standard or the ISO 14496-12 standard does not include a function of announcing the end time of exposure of a hot spot according to a scene being streamed together with the hot spot. Accordingly, to implement this function, timed metadata that is separately defined for each sample may be utilized. A file format to implement the function may be defined.

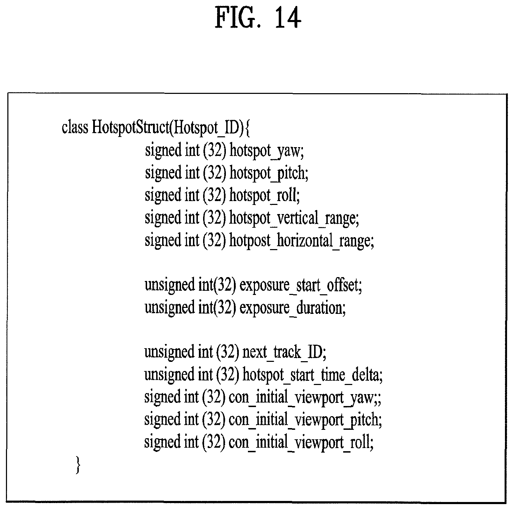

FIG. 14 illustrates a data structure including hot spot related information according to an example of the present disclosure.

Referring to the figure, a data structure including hot spot related information is shown.

HotspotStruct() is a data structure that includes detailed information on hot spots, which are spots that enable scene change between 360 contents. In one example, HotspotStruct() may be declared in each sample positioned in 'mdat' in ISO BMFF. Identification information (HotspotID[]) for each hot spot may be allocated according to the number of hot spots located in each sample, and a HotsHotspotStruct() value may be declared in each HotspotID[].

hotspot_yaw, hotspot_pitch, and hotspot_roll may indicate the center of a link location of a corresponding hot spot. hotspot_yaw, hotspot_pitch, and hotspot_roll may indicate angle values for yaw, pitch, and roll, respectively. hotspot_yaw, hotspot_pitch, and hotspot_roll may have values for defining a link location in a 360 video scene. hotspot_yaw may have a value between -90° and 90°, and hotspot_pitch and hotspot_roll may have a value between -180 ° and 180 °.

hotspot_vertical_range and hotspot_horizontal_range may indicate the horizontal and vertical ranges based on the link location of the hot spot. More specifically, hotspot_vertical_range, and hotspot_horizontal_range may indicate horizontal and vertical ranges from a center to represent a hot spot area with respect to the center information about the location indicated by the yaw, pitch, and roll of the hot spot. The values of hotspot_yaw, hotspot_pitch, hotspot_roll, hotspot_vertical_range, and/or hotspot_horizontal_range may be used to indicate a specific region on the sphere.

exposure_start_offset may indicate the location exposure start time for the hot spot in a corresponding scene and provide an offset value for the total play time line of a VR video that is being streamed. exposure_start_offset may always have a value greater than 0 and cannot exceed the play time of the entire VR video.

exposure_duration may indicate a duration in which a hot spot is linkable from the corresponding scene within the entire play time line of the entire VR video. exposure_duration is 0 seconds or longer and cannot be longer than the play time of the entire VR video. In other words, exposure_duration may indicate an available time for a hot spot in the corresponding scene, that is, a duration in which linking to other VR content through the hot spot is allowed.

next_track_ID may indicate a next track ID that is linked through a hot spot and should be played when the hot spot is selected by the user.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

In one example, HotspotStruct() described above may be positioned in a sample entry or 'mdat' of a timed metadata track in ISO BMFF. In this case, HotspotStruct() may be positioned in HotspotSampleEntry or HotspotSample(). In another example, HotspotStruct() may be present in another box in the ISO BMFF.

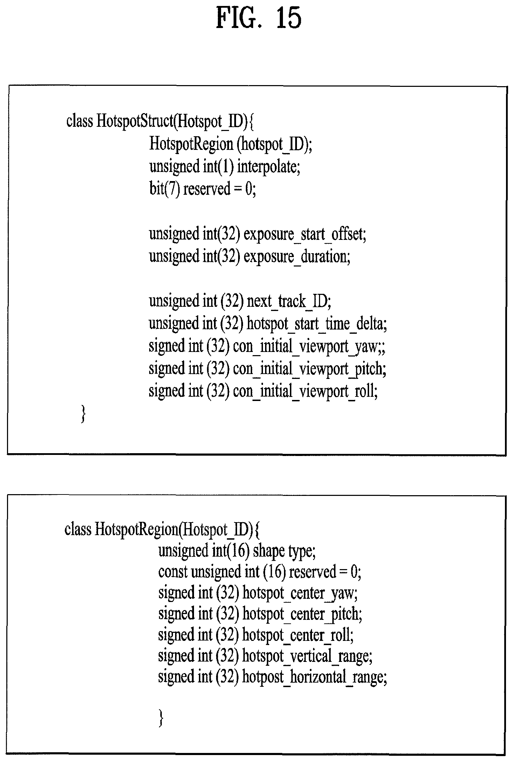

FIG. 15 illustrates a data structure including hot spot related information according to another example of the present disclosure.

Referring to the drawings, a data structure including hot spot related information is shown.

HotspotStruct() is a data structure that includes detailed information on hot spots, which are spots that enable scene change between 360 contents. In one example, HotspotStruct() may be declared in each sample positioned in 'mdat' in ISO BMFF. Identification information (HotspotID[]) for each hot spot may be allocated according to the number of hot spots located in each sample, and a HotsHotspotStruct() value may be declared in each HotspotID[].

In one example, HotspotRegion() may be included in HotspotStruct(). HotspotRegion() is a data structure representing location information about a hotspot and may define a center and range of the corresponding location.

"interpolate" may indicate whether a value provided from HotspotRegion() is to be applied or a linearly interpolated value is to be applied. In an example, when the interpolate value is 0, the value delivered from HotspotRegion() is presented in the target media sample. When the interpolate value is 1, the linearly interpolated value is applied.

exposure_start_offset may indicate the location exposure start time for the hot spot in a corresponding scene and provide an offset value for the total play time line of a VR video that is being streamed. exposure_start_offset may always have a value greater than 0 and cannot exceed the play time of the entire VR video.

exposure_duration may indicate a duration in which a hot spot is linkable from the corresponding scene within the entire play time line of the entire VR video. exposure_duration is 0 seconds or longer and cannot be longer than the play time of the entire VR video. In other words, exposure_duration may indicate an available time for a hot spot in the corresponding scene, that is, a duration in which linking to other VR content through the hot spot is allowed.

next_track_ID may indicate a next track ID that is linked through a hot spot and should be played when the hot spot is selected by the user.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

This may be another example of HotSpotStruct described above with reference to FIG. 14. As described above, HotspotStruct() described with reference to this figure may be present in a sample entry or a sample of a track in the ISO BMFF, or may be included in another box in the ISO BMFF.

HotspotRegion() is a data structure representing location information about a hotspot and may define a center and range of the corresponding location.

Shape type may be used to define the shape of a region that may be represented by a center and a range in defining the region of a hot spot in a sphere region. It may indicate whether the region is defined by 4 great circles, or by two yaw circles and two pitch circles. In one example, the shape type set to 0 may indicate that the region is defined by the four great circles, and the shape type set to 1 may indicate that the region is defined by the two yaw circles and the two pitch circles.

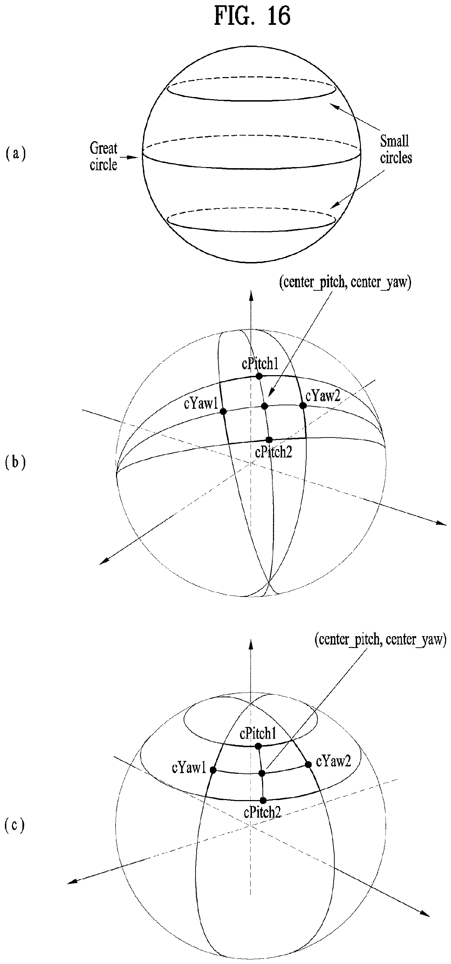

FIG. 16 is a reference diagram illustrating a method for defining a region based on a shape type according to an example of the present disclosure.

FIG. 16(a) shows a sphere-shaped 3D model, FIG. 16(b) shows a region defined by intersections of two great circles and two great circles, and FIG. 16(c) shows a region defined by intersections of two great circles and two small circles.

First, the meaning of the great circle, small circle, pitch circle and yaw circle will be described.

A great circle may refer to a circle whose center is at the center of a sphere. More specifically, the great circle may refer to points of intersection between the sphere and a plane passing through the center of the sphere. The great circle may be referred to as an orthodrome or a Riemannian circle. The center of the sphere and the center of the great circle may be at the same position.

A small circle may refer to a circle whose center is not at the center of the sphere.

A pitch circle may refer to a circle on the surface of a sphere that links all points having the same pitch value. Similar to the latitude on the earth, the pitch circle may not be a great circle.

A yaw circle may refer to a circle on the surface of a sphere that links all points having the same yaw value. Similar to the longitude on the earth, the yaw circle is always a great circle.

As described above, the shape type according to an example of the present disclosure may indicate a type specifying a region on a spherical surface.

FIG. 16(b) illustrates specifying a region on a spherical surface when the shape type according to an example of the present disclosure is 0.

Since the value of the shape type is 0, a region on the spherical surface is specified by four great circles. More specifically, a region on the spherical surface is specified by two pitch circles and two yaw circles.

As shown in the figure, the center of the specified region on the spherical surface may be represented by center_pitch and center_yaw. Center_pitch and center_yaw may be used together with field of view information such as a horizontal field of view (or width) and a vertical field of view (or height) in defining a viewport.

In other words, when shape_type is 0, the region may be a curved surface whose boundaries are two vertical great circles with yaw values of center_yaw - horizontal_field_of_view/2 and center_yaw + horizontal_field_of_view/2, and two horizontal great circles with pitch values of center_pitch - vertical_field_of_view/2 and center_pitch + vertieal_field_of_view/2.

FIG. 16(b) illustrates specifying a region on a spherical surface when the shape type according to an example of the present disclosure is 1.

Since the value of the shape type is 1, a region on the spherical surface is specified by two great circles and two small circles. More specifically, a region on the spherical surface is specified by two pitch circles and two yaw circles. Here, the two pitch circles are small circles, not great circles.

As shown in the figure, the center of the specified region on the spherical surface may be represented by center_pitch and center_yaw. Center_pitch and center_yaw may be used together with field of view information such as a horizontal field of view and a vertical field of view in defining a viewport.

In other words, when shape_type is 1, the region may be a curved surface whose boundaries are two vertical great circles with yaw values of center_yaw - horizontal_field_of_view/2 and center_yaw + horizontal_field_of_view/2, and two horizontal small circles having pitch values of center_pitch - vertical_field_of_view/2 and center_pitch + vertical_field_of_view/2.

hotspot_center_yaw, hotspot_center_pitch, and hotspot_center_roll may indicate the center of a link location of a corresponding hot spot. hotspot_center_yaw, hotspot_center_pitch, and hotspot_center_roll may indicate angle values for yaw, pitch, and roll, respectively. hotspot_center_yaw, hotspot_center_pitch, and hotspot_center_roll may have values for defining a link location in a 360 video scene. hotspot_center_yaw may have a value between -90° and 90°, and hotspot_center_pitch and hotspot_center_roll may have a value between -180° and 180°.

hotspot_vertical_range and hotspot_horizontal_range may indicate the horizontal and vertical ranges based on the link location of the hot spot. More specifically, hotspot_vertical_range, and hotspot_horizontal_range may indicate horizontal and vertical ranges from a center to represent a hot spot area with respect to the center information about the location indicated by the yaw, pitch, and roll of the hot spot. The values of hotspot_center_yaw, hotspot_center_pitch, hotspot_center_roll, hotspot_vertical_range, and/or hotspot_horizontal_range may be used to indicate a specific region on the sphere.

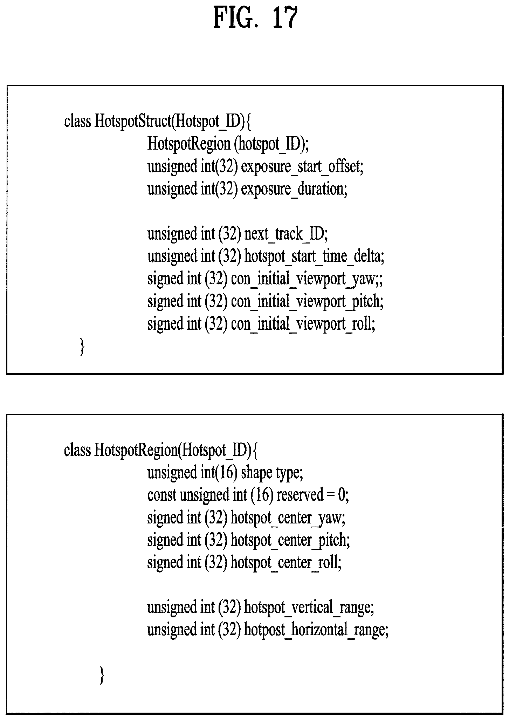

FIG. 17 illustrates a data structure including hot spot related information according to another example of the present disclosure.

Referring to the figure, a data structure including hot spot related information is shown.

HotspotStruct() is a data structure that includes detailed information on hot spots, which are spots that enable scene change between 360 contents. In one example, HotspotStruct() may be declared in each sample positioned in 'mdat' in ISO BMFF. Identification information (HotspotID[]) for each hot spot may be allocated according to the number of hot spots located in each sample, and a HotsHotspotStruct() value may be declared in each HotspotID[]. This may be another example of HotSpotStruct described above. As described above, HotspotStruct() described with reference to this figure may be present in a sample entry or a sample of a track in the ISO BMFF, or may be included in another box in the ISO BMFF.

In one example, HotspotRegion() may be included in HotspotStruct(). HotspotRegion() is a data structure representing location information about a hotspot and may define a center and range of the corresponding location.

exposure_start_offset may indicate the location exposure start time for the hot spot in a corresponding scene and provide an offset value for the total play time line of a VR video that is being streamed. exposure_start_offset may always have a value greater than 0 and cannot exceed the play time of the entire VR video.

exposure_duration may indicate a duration in which a hot spot is linkable from the corresponding scene within the entire play time line of the entire VR video. exposure_duration is 0 seconds or longer and cannot be longer than the play time of the entire VR video. In other words, exposure_duration may indicate an available time for a hot spot in the corresponding scene, that is, a duration in which linking to other VR content through the hot spot is allowed.

next_track_ID may indicate a next track ID that is linked through a hot spot and should be played when the hot spot is selected by the user.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

HotspotRegion() is a data structure representing location information about a hot spot and may define a center and range of the corresponding location.

The shape type may be used to define the shape of a region that may be represented by a center and a range in defining the region of a hot spot in a sphere region. It may indicate whether the region is defined by 4 great circles, or by two yaw circles and two pitch circles. In one example, the shape type set to 0 may indicate that the region is defined by the four great circles, and the shape type set to 1 may indicate that the region is defined by the two yaw circles and the two pitch circles. Specific examples are described above with reference to FIG. 16.

hotspot_yaw, hotspot_pitch, and hotspot_roll may indicate the center of a link location of a corresponding hot spot. hotspot_yaw, hotspot_pitch, and hotspot_roll may indicate angle values for yaw, pitch, and roll, respectively. hotspot_yaw, hotspot_pitch, and hotspot_roll may have values for defining a link location in a 360 video scene. hotspot_yaw may have a value between -90° and 90°, and hotspot_pitch and hotspot_roll may have a value between -180 ° and 180 °.

hotspot_vertical_range and hotspot_horizontal_range may indicate the horizontal and vertical ranges based on the link location of the hot spot. More specifically, hotspot_vertical_range, and hotspot_horizontal_range may indicate horizontal and vertical ranges from a center to represent a hot spot area with respect to the center information about the location indicated by the yaw, pitch, and roll of the hot spot. The values of hotspot_yaw, hotspot_pitch, hotspot_roll, hotspot_vertical_range, and/or hotspot_horizontal_range may be used to indicate a specific region on the sphere.

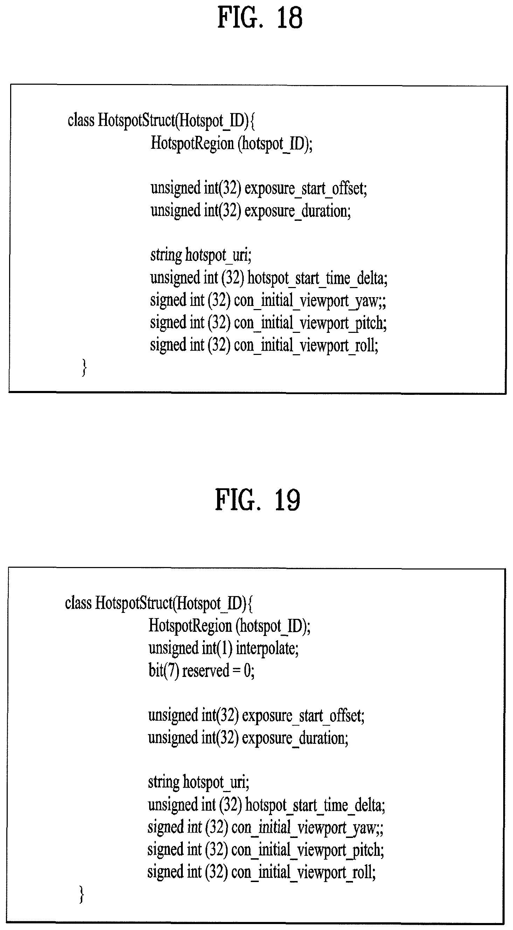

When VR contents are switched through a hotspot, the position may be shifted to another track in the same file, or may be linked to a track in another file via an external server. In this case, the link information may be provided through a Uniform Resource Identifier (URI). Specific examples of providing URI information are shown in FIGS. 18 and 19.

FIG. 18 illustrates a data structure including hot spot related information according to another example of the present disclosure.

Referring to the figure, a data structure including hot spot related information is shown.

HotspotStruct() is a data structure that includes detailed information on hot spots, which are spots that enable scene change between 360 contents. In one example, HotspotStruct() may be declared in each sample positioned in 'mdat' in ISO BMFF. Identification information (HotspotID[]) for each hot spot may be allocated according to the number of hot spots located in each sample, and a HotsHotspotStruct() value may be declared in each HotspotID[]. This may be another example of HotSpotStruct described above. As described above, HotspotStruct() described with reference to this figure may be present in a sample entry or a sample of a track in the ISO BMFF, or may be included in another box in the ISO BMFF.

In one example, HotspotRegion() may be included in HotspotStruct(). HotspotRegion() is a data structure representing location information about a hotspot and may define a center and range of the corresponding location.

exposure_start_offset may indicate the location exposure start time for the hot spot in a corresponding scene and provide an offset value for the total play time line of a VR video that is being streamed. exposure_start_offset may always have a value greater than 0 and cannot exceed the play time of the entire VR video.

exposure_duration may indicate a duration in which a hot spot is linkable from the corresponding scene within the entire play time line of the entire VR video. exposure_duration is 0 seconds or longer and cannot be longer than the play time of the entire VR video. In other words, exposure_duration may indicate an available time for a hot spot in the corresponding scene, that is, a duration in which linking to other VR content through the hot spot is allowed.

hotspot_uri is a null-terminated string based on UTF-8 characters. It may have an address value indicating the location of the next file or track to be played when a hot spot is selected by the user. The file or track should have a URI of the same format so as to be linked.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

While HotspotRegion() included in HotspotStruct() has not been described in detail in this example, Hotspot-Region() described above or below may be included in HotspotStruct().

FIG. 19 illustrates a data structure including hot spot related information according to another example of the present disclosure.

Referring to the figure, a data structure including hot spot related information is shown.

HotspotStruct() is a data structure that includes detailed information on hot spots, which are spots that enable scene change between 360 contents. In one example, HotspotStruct() may be declared in each sample positioned in 'mdat' in ISO BMFF. Identification information (HotspotID[]) for each hot spot may be allocated according to the number of hot spots located in each sample, and a HotsHotspotStruct() value may be declared in each HotspotID[]. This may be another example of HotSpotStruct described above. As described above, HotspotStruct() described with reference to this figure may be present in a sample entry or a sample of a track in the ISO BMFF, or may be included in another box in the ISO BMFF.

In one example, HotspotRegion() may be included in HotspotStruct(). HotspotRegion() is a data structure representing location information about a hotspot and may define a center and range of the corresponding location.

"interpolate" may indicate whether a value provided from HotspotRegion is to be applied or a linearly interpolated value is to be applied. In an example, when the interpolate value is 0, the value delivered from HotspotRegion is presented in the target media sample. When the interpolate value is 1, the linearly interpolated value is applied.

exposure_start_offset may indicate the location exposure start time for the hot spot in a corresponding scene and provide an offset value for the total play time line of a VR video that is being streamed. exposure_start_offset may always have a value greater than 0 and cannot exceed the play time of the entire VR video.

exposure_duration may indicate a duration in which a hot spot is linkable from the corresponding scene within the entire play time line of the entire VR video. exposure_duration is 0 seconds or longer and cannot be longer than the play time of the entire VR video.

hotspot_uri is a null-terminated string based on UTF-8 characters. It may have an address value indicating the location of the next file or track to be played when a hot spot is selected by the user. The file or track should have a URI of the same format so as to be linked.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

While HotspotRegion() included in HotspotStruct() has not been described in detail in this example, Hotspot-Region() described above or below may be included in HotspotStruct().

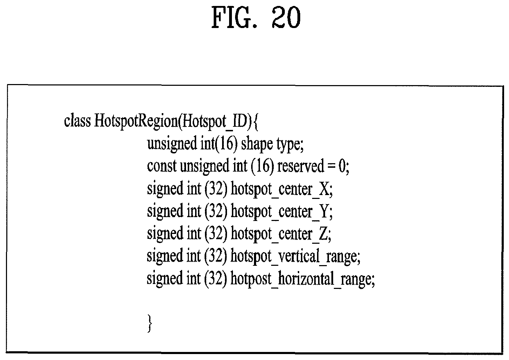

FIG. 20 illustrates a data structure including hot spot related information according to another example of the present disclosure.

Referring to the figure, a data structure including hot spot related information is shown.

HotspotRegion() is a data structure representing location information about a hot spot and may define a center and range of the corresponding location. In one example, HotspotRegion may define a region for the hot spot based on X, Y, Z coordinate values, which are Cartesian coordinates.

The shape type may be used to define the shape of a region that may be represented by a center and a range in defining the region of a hot spot in a sphere region. It may indicate whether the region is defined by 4 great circles, or by two yaw circles and two pitch circles. In one example, the shape type set to 0 may indicate that the region is defined by the four great circles, and the shape type set to 1 may indicate that the region is defined by the two yaw circles and the two pitch circles. Specific examples are described above with reference to FIG. 16.

hotspot_center_X, hotspot_center_Y, and hotspot_center_Z may indicate the center of a link location of a corresponding hot spot and be represented by X, Y, and Z coordinate values, respectively. hotspot_center_X, hotspot_center_Y, and hotspot_center_Z may have values for defining a link location in a 360 video scene. hotspot_center_X, hotspot_center_Y, and hotspot_center_Z may have values between -1 and 1.

hotspot_vertical_range and hotspot_horizontal_range may indicate horizontal and vertical range with respect to the center of the hot spot indicated by hotspot_center_X, hotspot_center_Y, and hotspot_center_Z. hotspot_vertical_range and hotspot_horizontal_range may indicate a specific area in a sphere or 3D image.

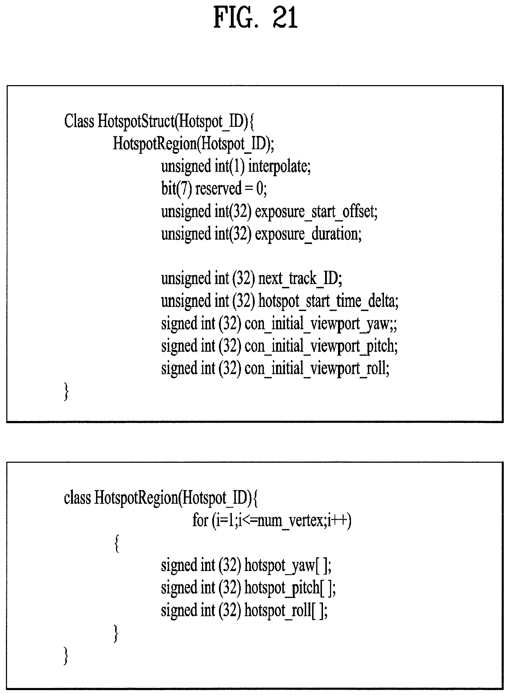

FIG. 21 illustrates a data structure including hot spot related information according to another example of the present disclosure.

There are a number of ways to mark a hot spot, which is the medium that links one scene to another. In general, hotspot regions may be divided into an unspecifiable region and a specifiable object. In both cases of the hotspot region, a linkable link may be defined as one point, or the entire region may be defined as a definite/indefinite region based on a vertex. HotspotRegion illustrated in FIG. 20 represents a method for defining a region that may be marked as a hot spot with multiple vertices having yaw, pitch, and roll values.

In one example, HotspotRegion() may be included in HotspotStruct(). HotspotRegion() is a data structure representing location information about a hotspot and may define a center and range of the corresponding location.

"interpolate" may indicate whether a value provided from HotspotRegion() is to be applied or a linearly interpolated value is to be applied. In an example, when the interpolate value is 0, the value delivered from HotspotRegion() is presented in the target media sample. When the interpolate value is 1, the linearly interpolated value is applied.

exposure_start_offset may indicate the location exposure start time for the hot spot in a corresponding scene and provide an offset value for the total play time line of a VR video that is being streamed. exposure_start_offset may always have a value greater than 0 and cannot exceed the play time of the entire VR video.

exposure_duration may indicate a duration in which a hot spot is linkable from the corresponding scene within the entire play time line of the entire VR video. exposure_duration is 0 seconds or longer and cannot be longer than the play time of the entire VR video. In other words, exposure_duration may indicate an available time for a hot spot in the corresponding scene, that is, a duration in which linking to other VR content through the hot spot is allowed.

next_track_ID may indicate a next track ID that is linked through a hot spot and should be played when the hot spot is selected by the user.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

HotspotRegion() is a data structure representing location information about a hotspot and may define a center and range of the corresponding location. HotspotRegion according to this example represents a method for defining a region that may be marked as a hot spot with multiple vertices. More specifically, HotspotRegion according to this example represents a method for defining a region that may be marked as a hot spot with multiple vertices having yaw, pitch, and roll values.

num_vertex indicates the number of vertices that configure a hot spot in declaring a hot spot region based on vertices.

hotspot_yaw[], hotspot_pitch[], and hotspot_roll[] may represent a link location of the hot spot positioned within a corresponding sample, and have a value for defining a link location in in the sample scene that is currently being played in the 2D projection format. One or more hotspot_yaw[], hotspot_pitch[], and hotspot_roll[] may indicate one or more coordinate values, wherein the one or more coordinate values may be vertices indicating the hot spot as a region. In one example, three or more hotspot_yaw[], hotspot_pitch[], and hotspot_roll[] may indicate three or more coordinate values, wherein the three or more coordinate values may be vertices indicating a hot spot as a region. hotspot_yaw[] may have a value between -90° and 90°, and hotspot_pitch[] and hotspot_roll[] may have a value between -180° and 180°.

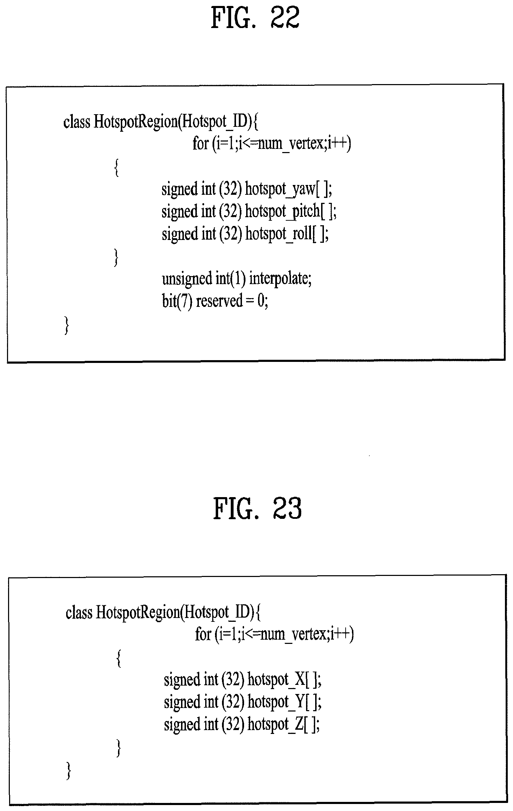

FIG. 22 illustrates a data structure including hot spot related information according to another example of the present disclosure.

HotspotRegion() is a data structure representing location information about a hotspot and may define a center and range of the corresponding location. HotspotRegion() may be included in HotspotStruct() described above. HotspotRegion according to this example represents a method for defining a region that may be marked as a hot spot with multiple vertices. More specifically, HotspotRegion according to this example represents a method for defining a region that may be marked as a hot spot with multiple vertices having yaw, pitch, and roll values.

num_vertex indicates the number of vertices that configure a hot spot in declaring a hot spot region based on vertices.

hotspot_yaw[], hotspot_pitch[], and hotspot_roll[] may represent a link location of the hot spot positioned within a corresponding sample, and have a value for defining a link location in in the sample scene that is currently being played in the 2D projection format. One or more hotspot_yaw[], hotspot_pitch[], and hotspot_roll[] may indicate one or more coordinate values, wherein the one or more coordinate values may be vertices indicating the hot spot as a region. In one example, three or more hotspot_yaw[], hotspot_pitch[], and hotspot_roll[] may indicate three or more coordinate values, wherein the three or more coordinate values may be vertices indicating a hot spot as a region. hotspot_yaw[] may have a value between -90° and 90°, and hotspot_pitch[] and hotspot_roll[] may have a value between -180° and 180°.

"interpolate" may indicate whether vertex coordinate values are to be applied or linearly interpolated values are to be applied. In an example, when the interpolate value is 0, the vertex coordinate values from HotspotRegion are presented in the target media sample. When the interpolate value is 1, linearly interpolated values are applied.

FIG. 23 illustrates a data structure including hot spot related information according to another example of the present disclosure.

HotspotRegion() is a data structure representing location information about a hotspot and may define a center and range of the corresponding location. HotspotRegion() may be included in HotspotStruct() described above. Hotspot-Region according to this example represents a method for defining a region that may be marked as a hot spot with multiple vertices. More specifically, HotspotRegion according to this example represents a method for defining a region that may be marked as a hot spot with multiple vertices having X, Y, and Z values.

num_vertex indicates the number of vertices that configure a hot spot in declaring a hot spot region based on vertices.

hotspot_X[], hotspot_Y[], and hotspot_Z[] may represent a link location of the hot spot positioned within a corresponding sample, and have a value for defining a link location in in the sample scene that is currently being played in the 2D projection format. One or more coordinate values may be vertices indicating the hot spot as a region. In one example, three or more hotspot_X[], hotspot_Y[], and hotspot_Z[] may indicate three or more coordinate values, wherein the three or more coordinate values may be vertices indicating a hot spot as a region. hotspot_X[], hotspot_Y[], and hotspot_Z[] may have values between -1 and 1, respectively.

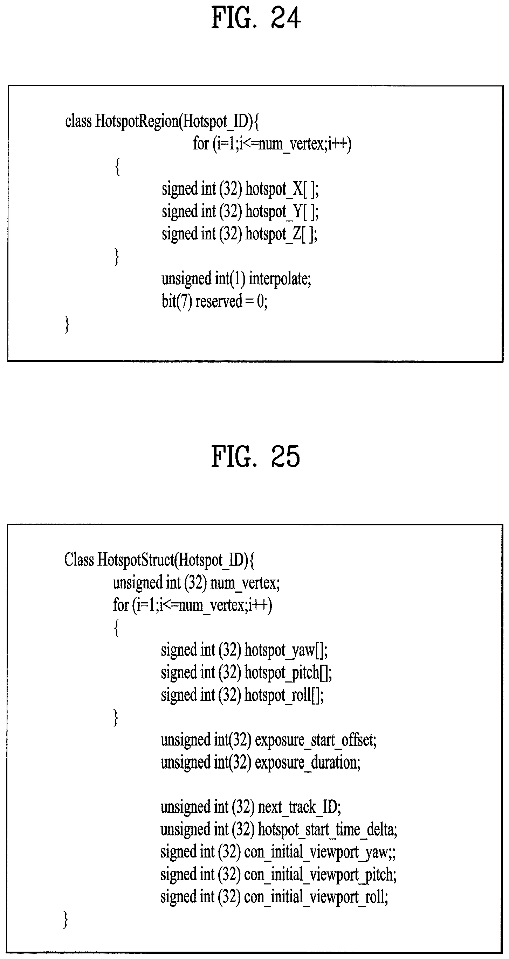

FIG. 24 illustrates a data structure including hot spot related information according to another example of the present disclosure.

HotspotRegion() is a data structure representing location information about a hotspot and may define a center and range of the corresponding location. HotspotRegion() may be included in HotspotStruct() described above. Hotspot-Region according to this example represents a method for defining a region that may be marked as a hot spot with multiple vertices. More specifically, HotspotRegion according to this example represents a method for defining a region that may be marked as a hot spot with multiple vertices having X, Y, and Z values.

num_vertex indicates the number of vertices that configure a hot spot in declaring a hot spot region based on vertices.

The shape type may be used to define the shape of a region that may be represented by a center and a range in defining the region of a hot spot in a sphere region. It may indicate whether the region is defined by 4 great circles, or by two yaw circles and two pitch circles. In one example, the shape type set to 0 may indicate four great circles, and the shape type set to 1 may indicate two yaw circles and two pitch circles.

hotspot_X[], hotspot_Y[], and hotspot_Z[] may indicate a link location of a hot spot positioned within a corresponding sample, and have values for defining a link location in the sample scene that is being currently played in the 2D projection format. One or more coordinate values may be vertices indicating the hot spot as a region. In one example, three or more hotspot_X[], hotspot_Y[], and hotspot_Z[] may indicate three or more coordinate values, wherein the three or more coordinate values may be vertices indicating a hot spot as a region. hotspot_X[], hotspot_Y[], and hotspot_Z[] may have values between -1 and 1, respectively.

"interpolate" may indicate whether vertex coordinate values are to be applied or linearly interpolated values are to be applied. In an example, when the interpolate value is 0, the vertex coordinate values from HotspotRegion are presented in the target media sample. When the interpolate value is 1, linearly interpolated values are applied.

FIG. 25 illustrates a data structure including hot spot related information according to another example of the present disclosure.

FIG. 25 illustrates an example in which location information about a hot spot that may be included in Hotspot-Region() described above is included in HotspotStruct().

HotspotStruct() is a data structure that includes detailed information on hot spots, which are spots that enable scene change between 360 contents. In one example, HotspotStruct() may be declared in each sample positioned in 'mdat' in ISO BMFF. Identification information (HotspotID[]) for each hot spot may be allocated according to the number of hot spots located in each sample, and a HotsHotspotStruct() value may be declared in each HotspotID[].

HotspotStruct() is a data structure that includes detailed information about hot spots, which are spots that enable scene change between 360 videos. It may be declared in each sample located in 'mdat' in the ISOBMFF. According to the number of hotspots in each sample, HotspotID[] may be assigned, and a HotsHotspotStruct() value may be declared in each HotspotID[]. This may be another example of HotSpotStruct described above. As described above, HotspotStruct() described with reference to this figure may be present in a sample entry or a sample of a track in the ISO BMFF, or may be included in another box in the ISO BMFF.

num_vertex indicates the number of vertices that configure a hot spot in declaring a hot spot region based on vertices.

hotspot_yaw[], hotspot_pitch[], and hotspot_roll[] may represent a link location of the hot spot positioned within a corresponding sample, and have a value for defining a link location in in the sample scene that is currently being played in the 2D projection format. One or more hotspot_yaw[], hotspot_pitch[], and hotspot_roll[] may indicate one or more coordinate values, wherein the one or more coordinate values may be vertices indicating the hot spot as a region. In one example, three or more hotspot_yaw[], hotspot_pitch[], and hotspot_roll[] may indicate three or more coordinate values, wherein the three or more coordinate values may be vertices indicating a hot spot as a region. hotspot_yaw[] may have a value between -90° and 90°, and hotspot_pitch[] and hotspot_roll[] may have a value between -180° and 180°.

exposure_start_offset may indicate the location exposure start time for the hot spot in a corresponding scene and provide an offset value for the total play time line of a VR video that is being streamed. exposure_start_offset may always have a value greater than 0 and cannot exceed the play time of the entire VR video.

exposure_duration may indicate a duration in which a hot spot is linkable from the corresponding scene within the entire play time line of the entire VR video. exposure_duration is 0 seconds or longer and cannot be longer than the play time of the entire VR video. In other words, exposure_duration may indicate an available time for a hot spot in the corresponding scene, that is, a duration in which linking to other VR content through the hot spot is allowed.

next_track_ID may indicate a next track ID that is linked through a hot spot and should be played when the hot spot is selected by the user.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

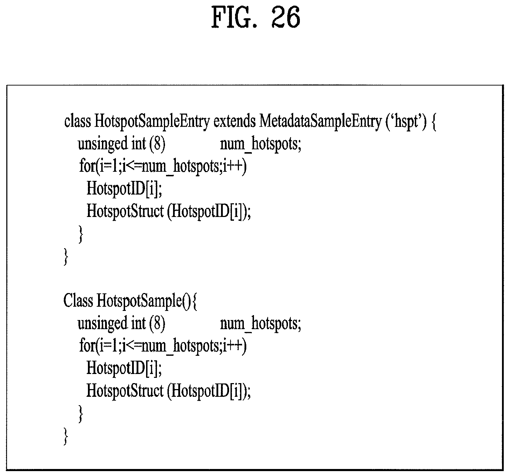

FIG. 26 illustrates a case where HotspotStruct() according to various examples of the present disclosure is included in HotspotSampleEntry or HotspotSample().

As described above, HotspotStruct() may be positioned in a sample entry or 'mdat' of a timed metadata track in ISOBMFF. HotspotStruct() may be positioned in HotspotSampleEntry or HotspotSample(). HotspotStruct() may be present in another box in ISOBMFF.

The upper part of FIG. 26 illustrates a case where HotspotStruct() according to an example of the present disclosure is included in HotspotSampleEntry, and the lower part of FIG. 26 illustrates a case where HotspotStruct() according to an example of the present disclosure is included in HotspotSample().

In FIG. 26, num_hotspots may indicate the number of hot spots. As shown in the upper part of FIG. 26, when this information is present in the sample entry, the number of hot spots included in each sample may be indicated. As shown in the lower part of FIG. 26, when the information is present in a sample, the number of hot spots included in the sample may be indicated.

In addition, HotspotID may represent identification information about a corresponding hot spot, that is, an identifier.

Hereinafter, an example of signaling a data structure including the aforementioned hot spot related information through an ISO BMFF box will be described.

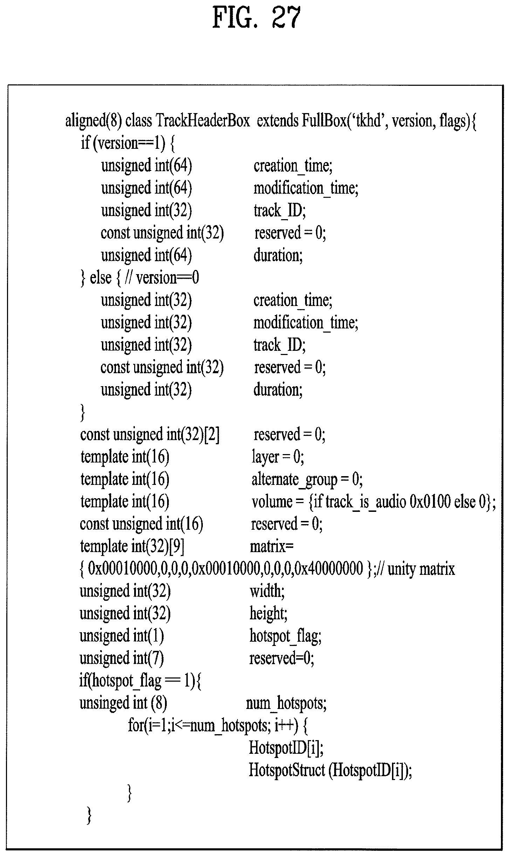

FIG. 27 illustrates an example of signaling a data structure including hot spot related information through an ISO BMFF box according to various examples of the present disclosure.

The above-described data structure (HotspotStruct() and/or HotspotRegion()) including metadata may be included in the track header ('tkhd') box of the ISO BMFF as shown in the figure. This track header box is included in the trak box in the moov box.

The version may be an integer specifying the version of the box.

Flags may be defined according to a value given as a 24-bit integer as follows. If the value of flags is x000001, this may indicate that the track is activated. If the value of flags is 0x000002, this may indicate that the track is used in the presentation. If the value of flags is 0x000004, this may indicate that the track is used in previewing the presentation.

creation_time may be an integer that declares the creation time of a track (in UTC time, a time after midnight January 1, 1904, in seconds)..

modification_time may be an integer that declares the last time the track was modified (in UTC time, a time after midnight January 1, 1904, in seconds).

track_ID may be an integer for identifying a track during the entire life-time of the corresponding presentation.

The duration may be an integer indicating the length of a track.

The layer may specify the sequential order of video tracks.

alternate_group may be an integer that specifies a group or collection of tracks.

"volume" may have a value that specifies a relative audio volume of the track. In one example, volume may have a fixed value of 8.8.

"matrix" may provide a transformation matrix for the video.

"width" and "height" may specify the visual presentation size of the track. In one example, width and height may have a fixed value of 16.16.

hotspot_flag may be a flag indicating whether hot spot information is included in the video track. In one example, when the value of hotspot_flag is 1, it may indicate that hot spot information is included in the video track. When the value of hotspot_flag is 0, it may indicate that hot spot information is not included in the video track.

num_hotspots may indicate the number of hot spots. When this information is present in the sample entry, it may indicate the number of hot spots included in each sample. When the information is present in a sample, it may refer to only the number of hotspots included in the sample.

HotspotID may indicate an identifier of a corresponding hot spot.

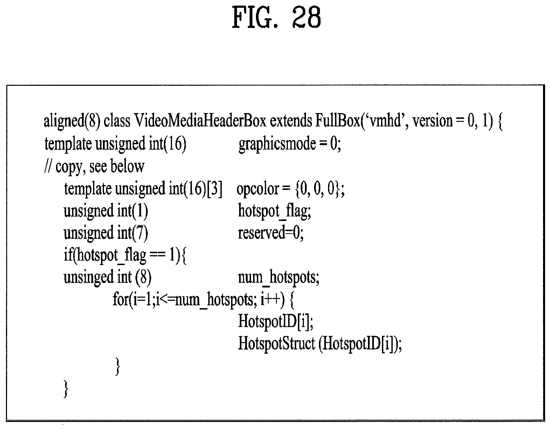

FIG. 28 illustrates an example of signaling a data structure including hot spot related information through an ISO BMFF box according to various examples of the present disclosure.

The above-described data structure (HotspotStruct() and/or HotspotRegion()) including metadata may be included in the video media header ('vmhd') box of the ISO BMFF as shown in the figure. The video media header box is included in the trak box in the moov box.

The version may be an integer specifying the version of the box.

"graphicsmode" may specify a composition mode for the video track.

"opcolor" may be a set of values of three colors (red, green, blue) available in the graphics mode.

hotspot_flag may be a flag indicating whether hot spot information is included in the video track. In one example, when the value of hotspot_flag is 1, it may indicate that hot spot information is included in the video track. When the value of hotspot_flag is 0, it may indicate that hot spot information is not included in the video track.

num_hotspots may indicate the number of hot spots. When this information is present in the sample entry, it may indicate the number of hot spots included in each sample. When the information is present in a sample, it may refer to only the number of hotspots included in the sample.

HotspotID may indicate an identifier of a corresponding hot spot.

When hot spot related metadata is included in the track header (tkhd) box and the video media header (vmhd) box at the same time, the values of hotspot_flag defined in the track header (tkhd) box and the respective elements of the hot spot related metadata may be overridden by the values defined in the video media header (vmhd) box.

<u><Reference type indicating presence or absence of a hotspot in the track reference box at the file format level></u>

A method for signaling a relationship between a metadata track and a 360-degree video track is described. Metadata tracks related to hot spot information may be stored and delivered separately from the VR video tracks. When metadata related to hot spot information is delivered in a separate metadata track, referencing between the metadata track related to the hot spot information and a VR video track associated with the metadata track may be required.

According to an example of the present disclosure, a metadata track related to a hot spot and a VR video track associated with the metadata track may be referenced using a 'cdsc' reference type pre-defined in a TrackReferenceBox ('tref') box, which is one of the boxes of ISO BMFF.

According to another example, a new reference type named 'hspi' may defined in the TrackReferenceBox ('tref') box to reference a metadata track related to a hot spot and a VR video track associated with the metadata track. 'hspi' may be used as a track reference for announcing that hot spot information is present in a corresponding track, and may provide track_ID to which a hot spot is linked.

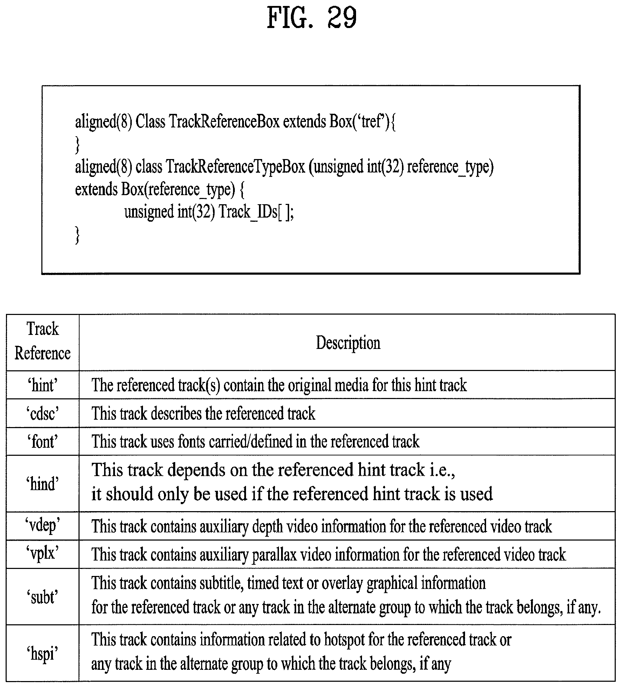

FIG. 29 illustrates a tref box according to an example of the present disclosure.

The TrackReference ('tref') box is a box that provides a reference between the track and another track included in the box. The TrackReference ('tref') box may include one or more track reference type boxes having a predetermined reference type and an identifier.

track_ID may be an integer that provides a reference to another track in the presentation in the track including the same. track_ID is not reused and cannot be 0.

reference_type may be set to one of the following values. Furthermore, reference_type may be set to a value not defined below.

The track referenced by 'hint' may contain the original media of the hint track.

The 'cdsc' track describes the referenced track. This track may contain timed metadata about the reference track.

The 'font' track may use fonts carried/defined in the referenced track.

The 'hind' track depends on the referenced hint track. In other words, this track may be used when the referenced hint track is used.

The 'vdep' track may contain auxiliary depth video information for the referenced video track.

The 'vplx' track may contain auxiliary parallax video information for the referenced video track.

The 'subt' track may contain a subtitle, a timed text, and/or overlay graphic information for the referenced track or any track in the alternate group to which the track belongs.

The 'hspi' track may contain hot spot related information for the referenced track or any track in the alternate group to which the track belongs.

<Method for selecting/playing hotspot transmission data declared in the handler box at the file format level>

As described above, a content is linked to another VR content through a hot spot within one VR video stream, the number of linked hot spots in one scene, the location of the hot spot corresponding to the ID of each hot spot, and information needed after linking to the new VR content need to be defined. In addition, the current omnidirectional media application format (OMAF) standard or the ISO 14496-12 standard does not include a function of announcing the end time of exposure of a hot spot according to a scene being streamed together with the hot spot. Accordingly, to implement this function, it is necessary to define an exposure start time and end time of a hot spot separately when indicating connectivity of each linked VR content. In one example, using a handler box ('hdlr' box) positioned in the 'meta' box, the location of the hot spot, the position at which the linked VR contents should be played, a duration for which information indicating that a hot spot is linked in a scene of VR content currently being played is to be exposed may be defined.

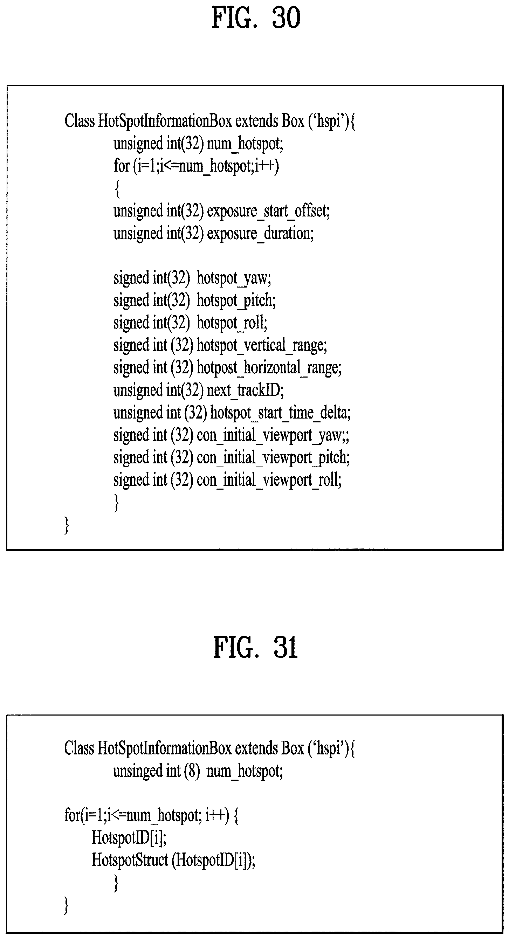

A specific example of the method for selecting/playing hot spot transmission data selection/reproduction declared in the handler (hdlr) box at the file format level is illustrated in FIGS. 30 and 31.

FIG. 30 illustrates a data structure including hot spot related information according to another example of the present disclosure.

In FIG. 30, a data structure including hot spot related information according to another example of the present disclosure may be included in the handler box. In a specific example, the handler box is HotspotInformationBox ('hspi') and may be configured as shown in the figure.

num_hotspot may indicate the number of hot spots linked in the corresponding VR video. When this information is present in the sample entry, it may indicate the number of hot spots included in each sample. When the information is present in the sample, it may indicate the number of hot spots included in the sample.

exposure_start_offset may indicate the location exposure start time for the hot spot in a scene that is currently being streamed in the corresponding video track and provide an offset value for the total play time line of a VR video that is being streamed. exposure_start_offset may always have a value greater than 0 and cannot exceed the play time of the entire VR video.

exposure_duration may indicate a duration in which a hotspot is linkable from a scene that is currently being streamed in the corresponding video track, within the entire play time line of the entire VR video. exposure_duration is 0 seconds or longer and cannot be longer than the play time of the entire VR video.

hotspot_yaw, hotspot_pitch, and hotspot_roll may indicate the center of a link location of a hot spot located in the sample. hotspot_yaw, hotspot_pitch, and hotspot_roll may have values for defining a link location in a sample scene currently being played in the 2D projection format. hotspot_yaw may have a value between -90° and 90°, and hotspot_pitch and hotspot_roll may have a value between -180° and 180°.

hotspot_vertical_range and hotspot_horizontal_range may be information for representing a hot spot region when the hot spot location information is given as yaw, pitch, and roll for the center of the corresponding location. hotspot_vertical_range and hotspot_horizontal_range may indicate horizontal and vertical ranges with respect to the center, respectively.

next_track_ID may indicate a next track ID that is linked through a hot spot and should be played when the hot spot is selected by the user.

hotspot_start_time_delta may be a value indicating spacing between 0 seconds and the time information value of the first scene to be played when the track of a corresponding trackID declared in HotspotStruct or a linked VR content is played. Here, 0 seconds may mean the start time of the entire VR video. hotspot_start_time_delta cannot be greater than the total play time of the linked VR content.

con_initial_viewport_yaw, con_initial_viewport_pitch, and con_initial_viewport_roll may have values indicating location information about an initial viewport in a new track or VR video that the linked VR video (360 video) should show first when the corresponding hot spot is selected. con_initial_viewport_yaw, con_initial_viewport_pitch, and con_initial_viewport_roll may represent angle values for yaw, pitch, and roll, respectively. con_initial_viewport_yaw may have a value between -90° and 90°, and con_initial_viewport_pitch and con_initial_viewport_roll may have a value between -180° and 180°.

FIG. 31 illustrates a data structure including hot spot related information according to another example of the present disclosure.

As described above, using a handler box ('hdlr' box) positioned in the 'meta' box, the location of the hot spot, the position at which the linked VR contents should be played, a duration for which information indicating that a hot spot is linked in a scene of VR content currently being played is to be exposed may be defined. In a specific example, the handler box is HotspotInformationBox ('hspi') and may be configured as shown in the figure.

num_hotspot may indicate the number of hot spots linked in the corresponding VR video. When this information is present in the sample entry, it may indicate the number of hot spots included in each sample. When the information is present in the sample, it may indicate the number of hot spots included in the sample.

HotspotID may indicate an identifier of a corresponding hot spot.

HotspotStruct() may be HotspotStruct() described above. HotspotSturct() may include Hotspotregion() described above.

<Signaling method for variable sample operation according to user selection>

When a plurality of VR contents can be bundled and linked to mutually dependent tracks, samples that are sequentially streamed may vary depending on whether a hot spot is selected. By pre-declaring grouping_type, switching may be allowed between VR contents. That is, streaming may be performed variably according to pre-declared grouping_type. For example, grouping_type may be pre-declared such that switching to VR content 2 is allowed at a specific point during streaming of VR content 1.

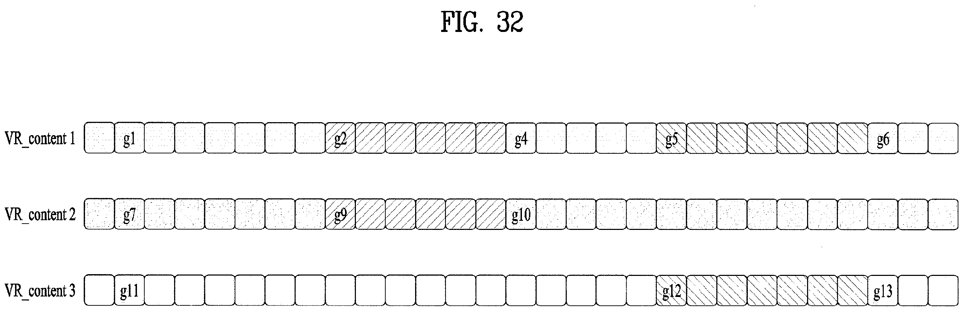

FIG. 32 is a diagram illustrating an example of sample grouping for switching of streaming between VR contents.

Referring to FIG. 32, three VR contents are shown. At least two VR contents are linked to each other through a hot spot in an arbitrary section. In this case, the VR contents may be grouped using SampleToGroupBox. Any one VR content being streamed through the hot spot may be switched to another VR content, and the other VR content may be streamed.

In the VR content streamed, information about presence or absence of a hot spot may be provided through signaling. Here, signaling about presence or absence of a hot spot may be pre-provided at any time before the switching time of streaming. Depending on whether a hot spot is selected, the sample to be streamed next may vary.

A procedure of switching streaming between VR contents will be discussed with reference to FIG. 32.

As a first example, it is assumed that VR video starts with VR content 1.

VR content 1 may be streamed on a sample-by-sample basis. A hot spot may be selected in a section corresponding to group g2. When the user selects a hot spot during group g2, streaming may be switched to VR content 2 in the sample at the selected time. That is, when the user selects a hot spot in group g2, streaming is switched from g2 of VR content 1 to g9 of VR content 2. In contrast, when the user does not select a hot spot during group g2, VR content 1 may continue to be streamed and a new hot spot for VR content 3 may be displayed in a section corresponding to group g5.

When the user selects a hot spot during group g5, streaming may be switched to VR content 3 in the sample at the selected time. That is, when the user selects a hot spot in group g5, streaming is switched from g5 of VR content 1 to g12 of VR content 3. In contrast, when the user does not select a hot spot in group g5, VR content 1 continues to be streamed.

As a second example, it is assumed that VR video starts with VR content 2.

VR content 2 may be streamed on a sample-by-sample basis. A hot spot may be selected in a section corresponding to group g9. When the user selects a hot spot in group g9, streaming may be switched to VR content 1 in the sample at the selected time. That is, when the user selects a hot spot in group g9, streaming may be switched from g9 of VR content 2 to g2 of VR content 1. In contrast, when the user does not select a hot spot in group g9, VR content 2 continues to be streamed.

As a third example, it is assumed that VR video starts with VR content 3.

VR content 3 may be streamed on a sample-by-sample basis. A hot spot may be selected in a section corresponding to group g12. When the user selects a hot spot in group g12, streaming may be switched to VR content 1 in the sample at the selected time. For example, when the user selects a hot spot in group g12, streaming is switched from g12 of VR content 3 to g5 of VR content 1. In contrast, when the user does not select a hot spot in group g12, VR content 3 continues to be streamed.

As described above, with SampleToGroupBox, streaming may be switched to group g9 of VR_content 2 by selecting a hot spot in group g2 of VR_content 1 and g10 may be streamed until another selection. On the other hand, when a hotspot is not selected at the g2 time, g4 may be subsequently performed. Similarly, when a hotspot is selected in VR_video1 at the time of group g5, streaming may be switched to g12. In contrast, when no hot spot is selected, g6 may be streamed after g5. The hot spot may be exposed during streaming. Grouping may be performed according to VR contents sharing a hot spot. Here, the same group has the same grouping_type. In one example, grouping_type may be declared in the 'sgpd' box positioned in the Sample table box 'stbl'. The streaming order according to each case may be pre-declared through grouping_type. That is, the streaming order may be pre-specified by continuously playing values having the same group_type by grouping samples linked through a hotspot among the samples present in VR contents 1, 2, and 3, without selecting a hotspot.

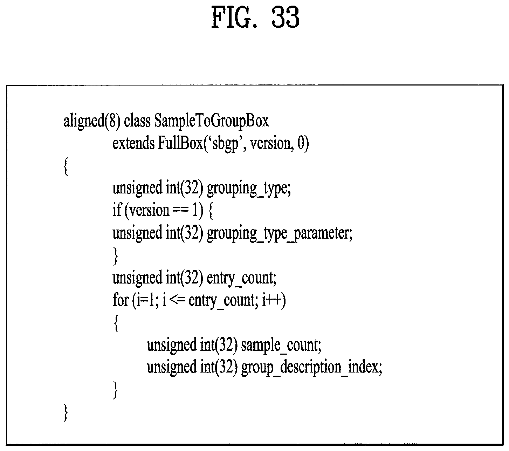

FIG. 33 illustrates a sample group box for switching of streaming between VR contents.

SampleToGroupBox of FIG. 33 includes grouping_type and group_description_index described above. As described above, the associated VR contents have the same grouping_type, and the order of streaming thereof may be declared through group_description_index.

The version may be an integer specifying the version of the box. In one example, version may be 0 or 1.

grouping_type may be an integer that identifies the type (i.e., a criterion used to form the sample groups) of the sample grouping and links it to its sample group description table with the same value for grouping type. At most one occurrence of this box with the same value for grouping_type (and, if used, grouping_type_parameter) shall exist for a track.

grouping_type_parameter may be an indication of the sub-type of the grouping.

entry_count may be an integer that gives the number of entries in the following table.

sample_count may be an integer that gives the number of consecutive samples with the same sample group descriptor. If the sum of the sample count in this box is less than the total sample count, or there is no sample-to-group box that applies to some samples (e.g., it is absent from a track fragment), then the reader should associate the samples that have no explicit group association with the default group defined in the SampleDescriptionGroup box, if any, or else with no group. It is an error for the total in this box to be greater than the sample_count documented elsewhere, and the reader behaviour would then be undefined.

group_description_index may be an integer that gives the index of the sample group entry which describes the samples in this group. The index ranges from 1 to the number of sample group entries in the SampleGroupDescription Box, or takes the value 0 to indicate that this sample is a member of no group of this type.

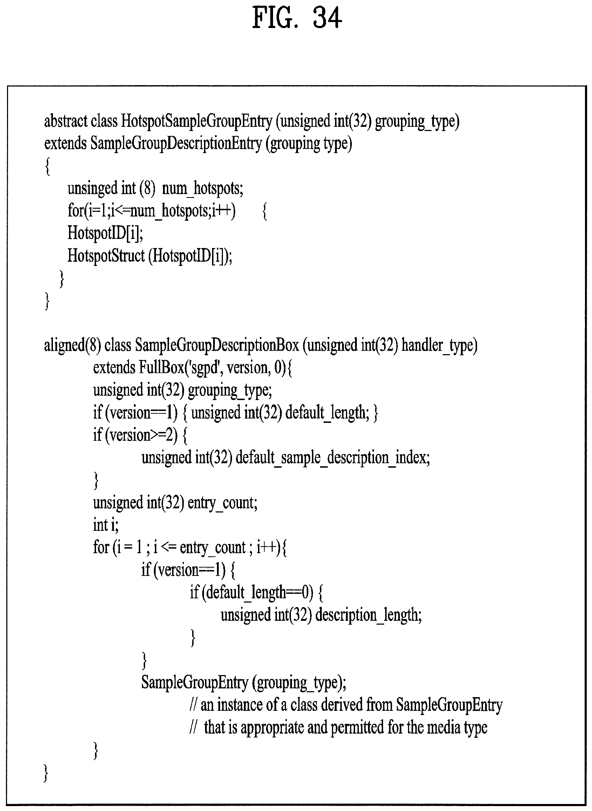

FIG. 34 illustrates a sample group entry for delivering grouped VR contents in a predetermined order.

HotspotSampleGroupEntry may be used in delivering the grouped groups in order as necessary following the sample grouping described above.

num_hotspots: may indicate the number of hotspots. When this information is present in a sample entry, it may refer to the number of hot spots included in each sample. When the information is present in a sample, it may refer only to the number of hotspots included in the sample.

HotspotID: This may indicate an identifier of the hotspot.

version may be an integer indicating the version of the box.

grouping_type may be an integer that identifies the SampleToGroup box that is associated with this sample group description. If grouping_type_parameter is not defined for a given grouping_type, then there shall be only one occurrence of this box with this grouping_type.

default_sample_description_index: specifies the index of the sample group description entry which applies to all samples in the track for which no sample to group mapping is provided through a SampleToGroup box. The default value of this field may be zero (indicating that the samples are mapped to no group of this type).

entry_count may be an integer that gives the number of entries in the following table.

default_length may indicate the length of every group entry (if the length is constant), or zero (0) if it is variable.

description_length may indicate the length of an individual group entry, in the case it varies from entry to entry and default_length is therefore 0.

Information present in the Hotspotstruct and HotspotRegion proposed above may be defined in SEI or DASH MPD of HEVC/AVC.

<Structure for providing a user guide for the content that is currently being played while multiple content are linked >

When a plurality of VR contents to be played is linked during interaction with the orientation of a user, a guide on a relative position and direction in each VR content may be needed. In other words, guide information on a relative position of a VR content being played among all linked contents and/or a viewing direction may be needed. An example described below may provide a navigator to a window by declaring the size and position of a sub-window in the entire window. In a specific example, the navigator may be provided in a form consistent with the intention of the manufacturer.

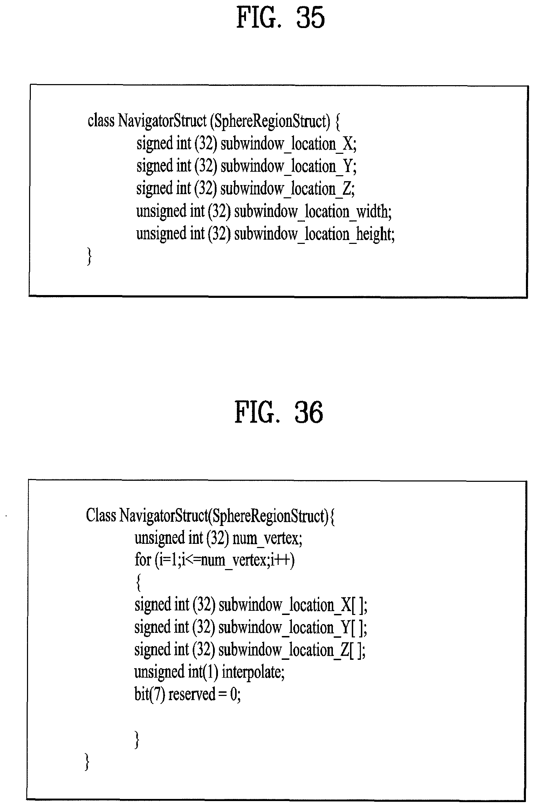

FIG. 35 illustrates a data structure including navigation information according to an example of the present disclosure.

SphereRegionStruct may be a structure that declares a viewport in the moving picture expert group (MPEG) omnidirectional media application format (OMAF). SphereRegionStruct is a structure having a function of declaring a part of the entire region to be played, and may be replaced by a specification other than the specification of the omnidirectional media application format (OMAF).

subwindow_location_X, subwindow_location_Y, and subwindow_location_Z may indicate a center of a region to be declared as a sub-window in three-dimensional content. If a sub-window is declared in a two-dimensional region, subwindow_location_Z may have a value of zero. The ranges of subwindow_location_X, subsindow_location_Y, and subwindow_location_Z are not allowed to exceed the area where the sub-window is played. That is, subwindow_location_X, subsindow_location_Y, and subwindow_location_Z are not allowed to have values outside the area where the sub-window is played.

subwindow_location_width and subwindow_location_height may declare the size of a sub-window. That is, subwindow_location_width and subwindow_location_height may declare the size of a sub-window having a center indicated by subwindow_location_X, subwindow_location_Y, and subwindow_location_Z. subwindow_location_width may indicate the width of a sub-window, and subwindow_location_height may indicate the height of the sub-window. The sub-window defined by subwindow_location_width and subwindow_location_height cannot be larger than the area of the entire frame that is played.

FIG. 36 illustrates a data structure including navigation information according to another example of the present disclosure.

The shape of the sub-window of the navigator may be rectangular as in the previous example, or may have a shape other than a rectangle. In one example, the sub-window may have a different shape than a rectangle depending on the intention of the producer.

SphereRegionStruct may be a structure that declares a viewport in the moving picture expert group (MPEG) omnidirectional media application format (OMAF). SphereRegionStruct is a structure having a function of declaring a part of the entire region to be played, and may be replaced by a specification other than the specification of the omnidirectional media application format (OMAF).

num_vertex may indicate the number of vertices that configure a sub-window when the area of the sub-window is declared based on vertices.

subwindow_location_X[], subwindow_location_Y[], and subwindow_location_Z[] may indicate X, Y, and Z coordinates of vertex values of the sub-window, respectively. Each element is not allowed to have a value outside the entire frame area. One or more coordinate values may represent the area of the sub-window as vertices. In one example, three or more subwindow_location_X[], subwindow_location_Y[], and subwindow_location_Z[] may indicate three or more coordinate values, and the three or more coordinate values may represent the area of the sub-window as vertices.

"interpolate" may indicate whether a value provided from NavigatorStruct() is to be applied or a linearly interpolated value is to be applied. In an example, when the interpolate value is 0, the value delivered from NavigatorStruct() is presented in the target media sample. When the interpolate value is 1, the linearly interpolated value may be applied.

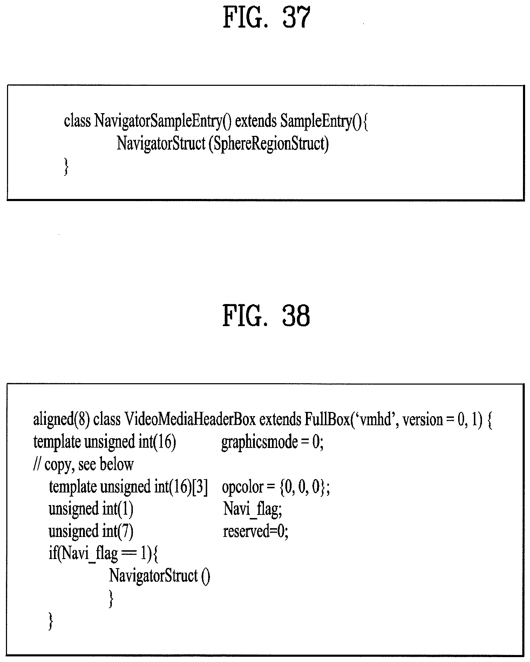

FIG. 37 illustrates a case where navigation information is included in NavigatorSampleEntry according to various examples of the present disclosure.

The navigation information may be located in a sample entry of a timed metadata track in ISOBMFF. The navigator may be declared in the sample entry because the exposure time or the exposure position may vary from sample to sample.

FIG. 38 illustrates an example of signaling a data structure including navigation information according to various examples of the present disclosure through an ISO BMFF box.

A data structure including metadata for the navigation information described above may be included in a video media header ('vmhd') box of ISO BMFF as shown in the figure. The video media header box may be included in the trak box in the moov box.

"version" may be an integer specifying the version of the box.

"graphicsmode" may specify a composition mode for the video track.

"opcolor" may be a set of values of three colors (red, green, blue) available in the graphics mode.

Navi_flag may be a flag indicating whether navigation information is included in the video track. In one example, when the value of Navi_flag is 1, it may indicate that navigation information is included in the video track. When the value of Navi_flag is 0, it may indicate that navigation information is not included in the video track.

<Declaration of track reference type that indicates presence or absence of Navigator for provision of VR contents user guide currently being played in playing multiple VR contents>

A method for signaling a relationship between a metadata track and a 360-degree video track is described. Metadata tracks related to navigation information may be stored and delivered separately from the VR video tracks. When metadata related to navigation information is delivered in a separate metadata track, referencing between the metadata track related to the navigation information and a VR video track associated with the metadata track may be required.

According to an example of the present disclosure, a metadata track related to a hot spot and a VR video track associated with the metadata track may be referenced using a 'cdsc' reference type pre-defined in a TrackReferenceBox ('tref') box, which is one of the boxes of ISO BMFF.

According to another example, a new reference type named 'nvhd' may defined in the TrackReferenceBox ('tref') box to reference a metadata track related to navigation and a VR video track associated with the metadata track. 'nvhd' may be used as a track reference for announcing that navigation information is present in a corresponding track, and may provide track_ID to which navigation is linked.

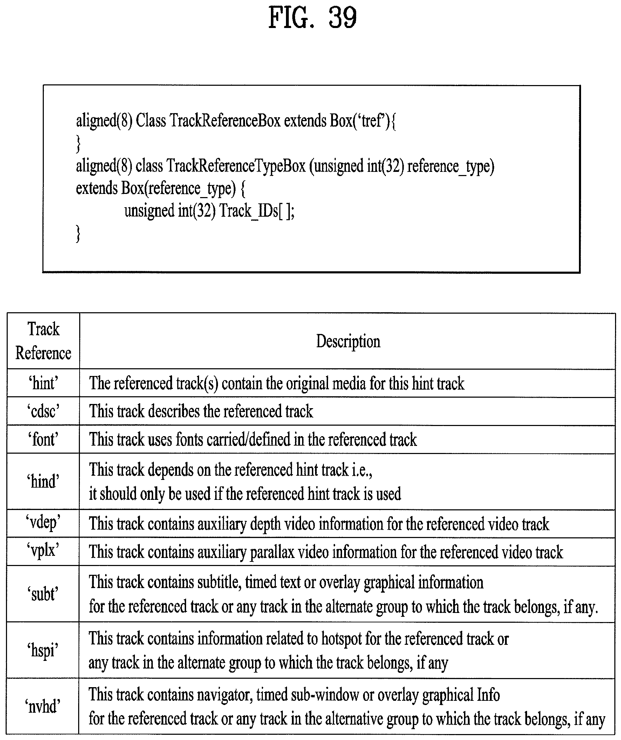

FIG. 39 illustrates a tref box according to another example of the present disclosure.

The TrackReference ('tref') box is a box that provides a reference between the track and another track included in the box. The TrackReference ('tref') box may include one or more track reference type boxes having a predetermined reference type and an identifier.

track_ID may be an integer that provides a reference to another track in the presentation in the track including the same. track_ID is not reused and cannot be 0.

reference_type may be set to one of the following values. Furthermore, reference_type may be set to a value not defined below.

The track referenced by 'hint' may contain the original media of the hint track.

The 'cdsc' track describes the referenced track. This track may contain timed metadata about the reference track.

The 'font' track may use fonts carried/defined in the referenced track.

The 'hind' track depends on the referenced hint track. In other words, this track may be used when the referenced hint track is used.

The 'vdep' track may contain auxiliary depth video information for the referenced video track.

The 'vplx' track may contain auxiliary parallax video information for the referenced video track.

The 'subt' track may contain a subtitle, a timed text, and/or overlay graphic information for the referenced track or any track in the alternate group to which the track belongs.

The 'hspi' track may contain hot spot related information for the referenced track or any track in the alternate group to which the track belongs.

The 'nvhd' track may contain a navigator, a timed sub-window, or overlay graphical information for the referenced track or any track in an alternate group to which the track belongs.

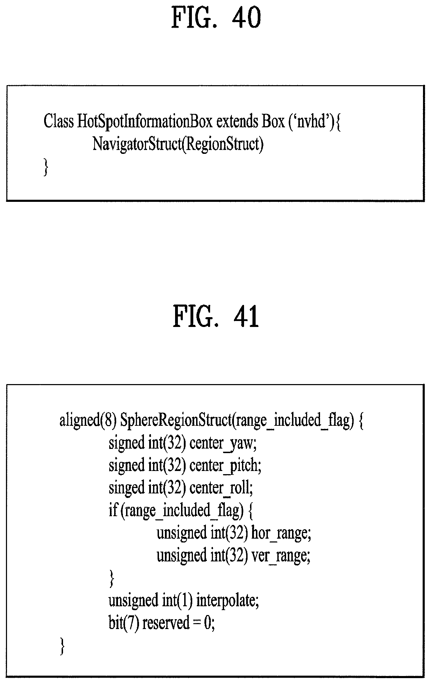

A specific example of a navigation transfer data selection/play method declared in the handler (hdlr) box at the file format level is illustrated in FIG. 40.

FIG. 40 illustrates a data structure including navigation information according to another example of the present disclosure.

The handler box is HotspotInformationBox ('nvhd'), and may be configured as shown in the figure.

HotspotInformationBox ('nvhd') may indicate the position where the NavigatorStruct exists on a partial 2D frame region to be played in the VR content. The partial 2D frame region may be a part of the region of a sphere, or a combination of one or more faces of a cube. When a function of invoking a part of the VR play region is provided, the partial 2D frame region may be any area of the VR play region.

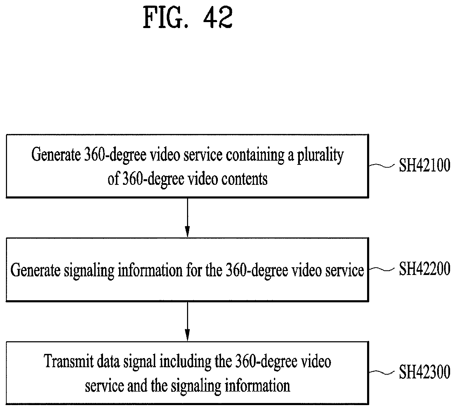

In another example, SphereRegionStruct is metadata defined in the omnidirectional media application format (OMAF) to define a specific region in a three-dimensional space, and may be defined as shown in FIG. 42. In this example, SphereRegionStruct may be used in defining a background region to define the position of the Navigator. In another example, metadata having a function of specifying and displaying a specific region in 360 video may be used.

FIG. 41 illustrates SphereRegionStruct according to an example of the present disclosure.

When SphereRegionStruct() is included in the SphereRegionSample() structure, the following may apply. center_yaw, center_pitch, and center_roll may specify the viewport direction in 2-16 degree units with respect to the global coordinate axes. center_yaw and center_pitch may indicate the center of the viewport and center_roll may indicate the roll angle of the viewport. center_yaw should be in the range from -180*216 to 180*216-1, and center_pitch should be in the range from -90*216 to 90*216. center_roll should be in the range from -180*216 to 180*216-1.

hor_range and ver_range may specify the horizontal and vertical ranges of a sphere region specified in the sample in 2-16 degree units, respectively. hor_range and ver_range may specify a range through the center of the sphere region. hor_range should be in the range from 0 to 720*216, and ver_range should be in the range from 0 to 180*216.

The sphere region specified by the sample may be derived as follows.

When both hor_range and ver_range are zero, the sphere region specified in this sample may correspond to a point on the surface of the sphere; otherwise, the sphere region may be defined using variables cYaw1, cYaw2, cPitchl, and cPitch2 given below.

$$cYaw1 = (center\_yaw - (range\_included\_flag\ hor\_range : static\_hor\_range) \div 2) \div 65536$$

$$cYaw2 = (center\_yaw + (range\_included\_flag\ hor\_range : static\_hor\_range) \div 2) \div 65536$$

$$cPitch1 = (center\_pitch - (range\_included\_flag\ ver\_range : static\_ver\_range) \div 2) \div 65536$$

$$cPitch2 = (center\_pitch + (range\_included\_flag\ ver\_range : static\_ver\_range) \div 2) \div 65536$$

The sphere region may be defined as follows.

When shape_type is 0, the sphere region may be specified by four points (cYawl, cYaw2, cPitchl, and cPitch2), and four great circles defined by the center defined by center_pitch and center_yaw.

When shape_type is 1, the sphere region may be specified by four points (cYaw1, cYaw2, cPitch1, and cPitch2), and two yaw circles and two pitch circles defined by the center defined by center_pitch and center_yaw.

When Interpolate is 0, it may indicate that the values of center_yaw, center_pitch, center_roll, hor_range (if any), and ver_range (if any) of this sample applies to the target media sample. When Interpolate is 1, center_yaw, center_pitch, center_roll, hor_range (if any), and ver_range (if any) applied to the target media sample may have values linearly interpolated from the values of the corresponding field in the sample and the previous sample.

The information present in the NavigatorStruct proposed above may be defined in the SEI or DASH MPD of HEVC/AVC.

According to one aspect of the present disclosure, a method for transmitting a 360-degree video is disclosed.

FIG. 42 is a flowchart illustrating a method for transmitting a 360-degree video according to an example of the present disclosure.

According to an example of the present disclosure, a method for transmitting a 360-degree video may include generating a 360-degree video service containing a plurality of 360-degree video contents (SH42100), generating signaling information for the 360-degree video service (SH42200), and transmitting a data signal including the 360-degree video service and the signaling information (SH42300).

The 360-degree video service generated in the generating of a 360-degree video service containing a plurality of 360-degree video contents (SH42100) may contain a plurality of 360-degree video contents. In addition, at least two 360-degree video contents of the plurality of 360-degree video contents may be linked to each other through a hot spot.

The signaling information may include hot spot related information. Here, the hot spot related information may be the hot spot related information described with reference to FIGS. 14 to 34.

In one example, the hot spot related information may include hot spot number information indicating the number of hot spots present in a scene included in the 360-degree video content, hot spot identification information for identifying each hot spot, and hot spot location information indicating the location of each hot spot. The hot spot location information may be information indicating the location of a hot spot in the 360 degree video content.

In one example, the hot spot location in the screen may be specified through center information and range information.

As a specific example, the hot spot location information may include center information indicating a center of the hot spot and range information indicating horizontal and vertical ranges with respect to the center of the hot spot.

In an alternative example, the hot spot location in the screen may be specified as a definite/indefinite region based on the vertices described above.

In a specific example, the hot spot location information may include coordinate values of at least three vertices defining a boundary of the hot spot.

In one example, the hot spot related information may include at least one of content indication information indicating 360-degree video content linked through each hot spot, start time information about the 360-degree video content indicated by the content indication information, or initial viewport information about the 360-degree video content indicated by the content indication information.

In one example, the signaling information may further include navigation information that provides location and orientation information about the 360-degree video content being played. The navigation information may be the navigation information described with reference to FIGS. 35 to 41. The location and orientation information about the 360-degree video content being played may indicate a relative location and orientation in relation to the 360-degree video service.

The navigation information may further include window area information defining an area of a navigator window displayed in the viewport of the 360-degree video content being played.

The method for transmitting a 360-degree video according to an example of the present disclosure may include generating a 360-degree video. For a specific operation of generating a 360-degree video and a specific operation of generating metadata containing related signaling information, the description given above with reference to FIGS. 1 to 11 may be applied.

In the transmitting of the data signal (SH42300), the data signal may be transmitted over a broadcast network and/or a broadband network. That is, all data signals may be transmitted over the broadcast network or broadband network, or some of the data signals may be transmitted over the broadcast network and the others may be transmitted over the broadband network. Alternatively, some or all of the data signals may be transmitted over the broadcast network and the broadband network.

According to another aspect of the present disclosure, a device for transmitting a 360-degree video is disclosed.

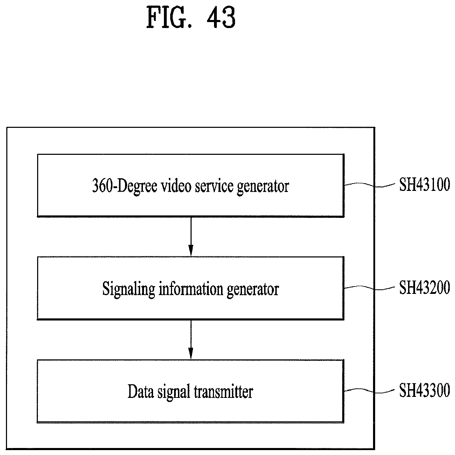

FIG. 43 is a block diagram illustrating a configuration of a 360-degree video transmission device according to an example of the present disclosure.

The 360-degree video transmission device according to an example of the present disclosure may include a 360-degree video service generator H43100 configured to generate a 360-degree video service containing a plurality of 360-degree video contents, a signaling information generator H43200 configured to generate signaling information for the 360-degree video service, a data signal transmitter H43300 configured to transmit a data signal including the 360-degree video service and the signaling information.

The 360-degree video service generated by the 360-degree video service generator H43100 may contain a plurality of 360-degree video contents. In addition, at least two 360-degree video contents of the plurality of 360-degree video contents may be linked to each other through a hot spot.

The signaling information may include hot spot related information. Here, the hot spot related information may be the hot spot related information described with reference to FIGS. 14 to 34.

In one example, the hot spot related information may include hot spot number information indicating the number of hot spots present in a scene included in the 360-degree video content, hot spot identification information for identifying each hot spot, and hot spot location information indicating the location of each hot spot. The hot spot location information may be information indicating the location of a hot spot in the 360 degree video content.

In one example, the hot spot location in the screen may be specified through center information and range information.

As a specific example, the hot spot location information may include center information indicating a center of the hot spot and range information indicating horizontal and vertical ranges with respect to the center of the hot spot.

In an alternative example, the hot spot location in the screen may be specified as a definite/indefinite region based on the vertices described above.

In a specific example, the hot spot location information may include coordinate values of at least three vertices defining a boundary of the hot spot.

In one example, the hot spot related information may include at least one of content indication information indicating 360-degree video content linked through each hot spot, start time information about the 360-degree video content indicated by the content indication information, or initial viewport information about the 360-degree video content indicated by the content indication information.

In one example, the signaling information may further include navigation information that provides location and orientation information about the 360-degree video content being played. The navigation information may be the navigation information described with reference to FIGS. 35 to 41. The location and orientation information about the 360-degree video content being played may indicate a relative location and orientation in relation to the 360-degree video service.

The navigation information may further include window area information defining an area of a navigator window displayed in the viewport of the 360-degree video content being played.

The device for transmitting a 360-degree video according to an example of the present disclosure may optionally include an element confugred to generate a 360 degree video. For a specific operation of generating a 360-degree video and the elements for generating a 360-degree video, the description given above with reference to FIGS. 1 to 11 may be applied.

The data signal transmitter H43300 may transmit the data signal over a broadcast network and/or a broadband network. That is, all data signals may be transmitted over the broadcast network or broadband network, or some of the data signals may be transmitted over the broadcast network and the others may be transmitted over the broadband network. Alternatively, some or all of the data signals may be transmitted over the broadcast network and the broadband network.

According to another aspect of the present disclosure, a device for receiving a 360-degree video is disclosed.

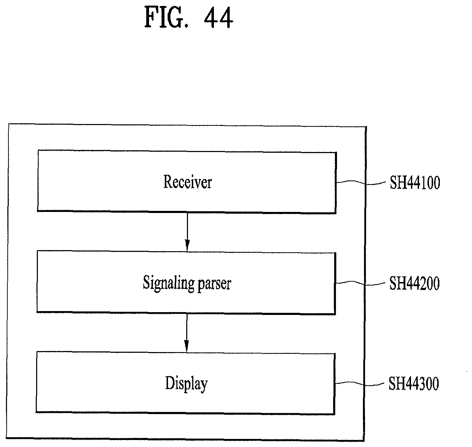

FIG. 44 is a block diagram illustrating a configuration of a 360-degree video reception device according to an example of the present disclosure.

The 360-degree video reception device according to an example of the present disclosure may include a receiver H44100 configured to receive a data signal including a 360-degree video service containing a plurality of 360-degree video contents and signaling information for the 360 degree video service, a signaling parser H44200 configured to parse the signaling information, and a display H44300 configured to display the 360-degree video service.

The 360-degree video service contained in the data signal may contain a plurality of 360-degree video contents. In addition, at least two 360-degree video contents of the plurality of 360-degree video contents may be linked to each other through a hot spot. The signaling information contained in the data signal may include hot spot related information. Here, the hot spot related information may be the hot spot related information described with reference to FIGS. 14 to 34.

In one example, the hot spot related information may include hot spot number information indicating the number of hot spots present in a scene included in the 360-degree video contents, hot spot identification information for identifying each of the hot spots, and hot spot location information indicating the location of each hot spot. The hot spot location information may be information indicating a location of a hot spot in the 360 degree video content.

In one example, the hot spot location in the screen may be specified through center information and range information.

As a specific example, the hot spot location information may include center information indicating a center of the hot spot and range information indicating horizontal and vertical ranges with respect to the center of the hot spot.

In an alternative example, the hot spot location in the screen may be specified as a definite/indefinite region based on the vertices described above.

In a specific example, the hot spot location information may include coordinate values of at least three vertices defining a boundary of the hot spot.

In one example, the hot spot related information may include at least one of content indication information indicating 360-degree video content linked through each hot spot, start time information about the 360-degree video content indicated by the content indication information, or initial viewport information about the 360-degree video content indicated by the content indication information.

In one example, the signaling information may further include navigation information that provides location and orientation information about the 360-degree video content being played. The navigation information may be the navigation information described with reference to FIGS. 35 to 41. The location and orientation information about the 360-degree video content being played may indicate a relative location and orientation in relation to the 360-degree video service.

The navigation information may further include window area information defining an area of a navigator window displayed in the viewport of the 360-degree video content being played.

The device for receiving a 360-degree video according to an example of the present disclosure may optionally include an element confugred to process the 360-degree video. For a specific operation of processing the 360-degree video and the elements for processing the 360-degree video, the description given above with reference to FIGS. 1 to 11 may be applied. For example, the 360-degree video reception device may further include a renderer configured to render the 360-degree video in a 3D space.

In the operation of the receiver H44100, the data signal may be transmitted over a broadcast network and/or a broadband network. That is, all data signals may be transmitted over the broadcast network or broadband network, or some of the data signals may be transmitted over the broadcast network and the others may be transmitted over the broadband network. Alternatively, some or all of the data signals may be transmitted over the broadcast network and the broadband network.

According to another aspect of the present disclosure, a method for receiving a 360-degree video is disclosed.

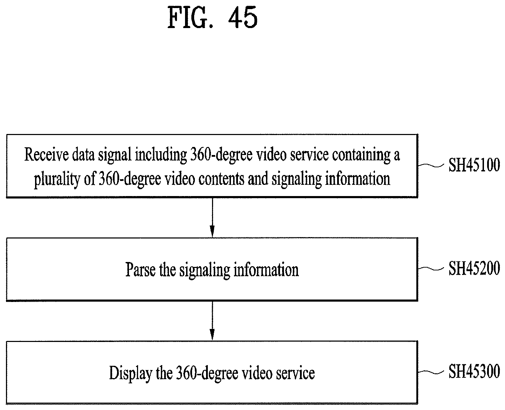

FIG. 45 is a flowchart illustrating a method for receiving a 360-degree video according to an example of the present disclosure.

According to an example of the present disclosure, a method for receiving a 360-degree video may include receiving a data signal including a 360-degree video service containing a plurality of 360-degree video contents and signaling information for the 360-degree video service (SH45100), parsing the signaling information (SH45200), and displaying the 360-degree video service (SH45300).

The 360-degree video service contained in the data signal may contain a plurality of 360-degree video contents. In addition, at least two 360-degree video contents of the plurality of 360-degree video contents may be linked to each other through a hot spot. The signaling information contained in the data signal may include hot spot related information. Here, the hot spot related information may be the hot spot related information described with reference to FIGS. 14 to 34.

In one example, the hot spot related information may include hot spot number information indicating the number of hot spots present in a scene included in the 360-degree video content, hot spot identification information for identifying each hot spot, and hot spot location information indicating the location of each hot spot. The hot spot location information may be information indicating the location of a hot spot in the 360 degree video content.

In one example, the hot spot location in the screen may be specified through center information and range information.

As a specific example, the hot spot location information may include center information indicating a center of the hot spot and range information indicating horizontal and vertical ranges with respect to the center of the hot spot.

In an alternative example, the hot spot location in the screen may be specified as a definite/indefinite region based on the vertices described above.

In a specific example, the hot spot location information may include coordinate values of at least three vertices defining a boundary of the hot spot.

In one example, the hot spot related information may include at least one of content indication information indicating 360-degree video content linked through each hot spot, start time information about the 360-degree video content indicated by the content indication information, or initial viewport information about the 360-degree video content indicated by the content indication information.

In one example, the signaling information may further include navigation information that provides location and orientation information about the 360-degree video content being played. The navigation information may be the navigation information described with reference to FIGS. 35 to 41. The location and orientation information about the 360-degree video content being played may indicate a relative location and orientation in relation to the 360-degree video service.

The navigation information may further include window area information defining an area of a navigator window displayed in the viewport of the 360-degree video content being played.

The method for receiving a 360-degree video according to an example of the present disclosure may include processing the 360-degree video. For a specific operation of processing the 360-degree video and a specific operation of generating metadata containing related signaling information, the description given above with reference to FIGS. 1 to 11 may be applied.

In the receiving of the data signal (SH45100), the data signal may be transmitted over a broadcast network and/or a broadband network. That is, all data signals may be transmitted over the broadcast network or broadband network, or some of the data signals may be transmitted over the broadcast network and the others may be transmitted over the broadband network. Alternatively, some or all of the data signals may be transmitted over the broadcast network and the broadband network.

The internal components of the above-described device may be processors to execute the successive execution procedures stored in the memory, or other hardware components configured as hardware. These components may be positioned inside or outside the device.

According to examples, the above-described modules may be omitted or replaced by other modules performing the similar/same operations.

Each part, module, or unit described above may be a processor or hardware part that executes successive procedures stored in a memory (or storage unit). Each of the operations described in the examples above may be performed by processors or hardware parts. Each module/block/unit described in the examples above may operate as a hardware/processor. In addition, the above-mentioned methods of the present disclosure may be realized by code. The code may be written in a recoding medium readable by a processor so that the code may be read by the processor provided by the apparatus.

Although the description of the present disclosure is explained with reference to each of the accompanying drawings for clarity, it is possible to design new examples by merging the examples shown in the accompanying drawings with each other. If a recording medium readable by a computer, in which programs for executing the examples mentioned in the foregoing description are recorded, is designed by those skilled in the art, it may fall within the scope of the appended claims and their equivalents.

The devices and methods according to the present disclosure may be non-limited by the configurations and methods of the examples mentioned in the foregoing description. The examples mentioned in the foregoing description may be configured in a manner of being selectively combined with one another entirely or in part to enable various modifications.

In addition, a method according to the present disclosure may be implemented with processor-readable code in a processor-readable recording medium provided to a network device. The processor-readable medium may include all kinds of recording devices capable of storing data readable by a processor. The processor-readable medium may include one of ROM, RAM, CD-ROM, magnetic tapes, floppy disks, optical data storage devices, and the like and also include carrier-wave type implementation such as a transmission via Internet. Furthermore, as the processor-readable recording medium is distributed to a computer system connected via a network, processor-readable code may be saved and executed in a distributed manner.

Although the disclosure has been described with reference to the exemplary examples, those skilled in the art will appreciate that various modifications and variations can be made in the present disclosure without departing from the spirit or scope of the disclosure described in the appended claims. Such modifications are not to be understood individually from the technical idea or viewpoint of the present disclosure

It will be appreciated by those skilled in the art that various modifications and variations may be made in the present disclosure without departing from the spirit or scope of the disclosures. Thus, it is intended that the present disclosure covers the modifications and variations of this disclosure provided they come within the scope of the appended claims and their equivalents.

Both apparatus and method disclosures are mentioned in this specification and descriptions of both the apparatus and method disclosures may be complementarily applicable to each other.

[Mode for Invention]

Various examples have been described in the best mode for carrying out the disclosure.

[Industrial Applicability]

The present disclosure is used in a series of VR related fields.
It will be apparent to those skilled in the art that various modifications and variations may be made in the present disclosure without departing from the spirit or scope of the disclosure. Thus, it is intended that the present disclosure cover the modifications and variations of this disclosure provided they come within the scope of the appended claims and their equivalents.

**Claims**

1.  A device for receiving a 360-degree video, comprising:

    a receiver configured to receive a data signal including a 360-degree video service containing a plurality of 360-degree video contents and signaling information for the 360-degree video service,
    wherein at least two 360-degree video contents of the plurality of 360-degree video contents are linked to each other through a hot spot,
    wherein the signaling information comprises hot spot related information,
    wherein the hot spot related information comprises hot spot number information indicating the number of hot spots present in a scene included in the 360-degree video contents, hot spot identification information for identifying each of the hot spots, and hot spot location information indicating a location of each of the hot spots;
    a signaling parser configured to parse the signaling information; and
    a display configured to display the 360-degree video service.

2.  The device of claim 1, wherein the hot spot location information is information indicating a location of a hot spot in the 360-degree video contents.

3.  The device of claim 2, wherein the hot spot location information comprises center information indicating a center of the hot spot and range information indicating horizontal and vertical ranges with respect to the center of the hot spot.

4.  The device of claim 2, wherein the hot spot location information comprises coordinate values of at least three vertices defining a boundary of the hot spot.

5.  The device of claim 1, wherein the hot spot related information further comprises content indication information indicating a 360-degree video content linked through each of the hot spots, start time information about the 360-degree video content indicated by the content indication information, and initial viewport information about the 360-degree video content indicated by the content indication information.

6.  The device of claim 1, wherein the signaling information further comprises navigation information for providing location and orientation information about a 360-degree video content being played,
    wherein the location and orientation information about the 360-degree video content being played indicates a relative location and orientation in relation to the 360-degree video service.

7.  The device of claim 1, wherein the navigation information comprises window area information defining an area of a navigator window displayed in a viewport of the 360-degree video content being played.

8.  The device of claim 1, further comprising:
    a renderer configured to render the 360 degree video service in a 3D space.

9.  A method for transmitting a 360-degree video, the method comprising:

    generating a 360-degree video service containing a plurality of 360-degree video contents,
    wherein at least two 360-degree video contents of the plurality of 360-degree video contents are linked to each other through a hot spot;

generating signaling information for the 360-degree video service,

wherein the signaling information comprises hot spot related information,

wherein the hot spot related information comprises hot spot number information indicating the number of hot spots present in a scene included in the 360-degree video contents, hot spot identification information for identifying each of the hot spots, and hot spot location information indicating a location of each of the hot spots; and transmitting a data signal including the 360-degree video service and the signaling information.

10. The method of claim 9, wherein the hot spot location information is information indicating a location of a hot spot in the 360-degree video contents.

11. The method of claim 10, wherein the hot spot location information comprises center information indicating a center of the hot spot and range information indicating horizontal and vertical ranges with respect to the center of the hot spot.

12. The method of claim 10, wherein the hot spot location information comprises coordinate values of at least three vertices defining a boundary of the hot spot.

13. The method of claim 9, wherein the hot spot related information further comprises content indication information indicating a 360-degree video content linked through each of the hot spots, start time information about the 360-degree video content indicated by the content indication information, and initial viewport information about the 360-degree video content indicated by the content indication information.

14. The method of claim 9, wherein the signaling information further comprises navigation information for providing location and orientation information about a 360-degree video content being played,

wherein the location and orientation information about the 360-degree video content being played indicates a relative location and orientation in relation to the 360-degree video service.

15. The method of claim 9, wherein the navigation information comprises window area information defining an area of a navigator window displayed in a viewport of the 360-degree video content being played.

# FIG. 1

t1010

t1020

t1030

t1040

| Capture | | Preparation | | Delivery | | Processing | | Rendering |
|---|---|---|---|---|---|---|---|---|
| Raw data (video, 3D point cloud, 3D model) | → | Stitching editing, image processing, encoding | → | Broadcast or unicast transmission | → | image processing: decoding, upscaling, re-projection | → | Video display & head-tracking interaction |

**Feedback**

Head orientation for region of interest

EP 3 641 321 A1

# FIG. 2

```
┌─────────────────────────────────────────────────────────────────────────┐
│ 360 Video transmission device                                             │
│                    ┌──────────────┐        ┌──────────────────┐           │
│                    │  Data entry  │───────▶│ Metadata processor│◀──┐      │
│                    └──────┬───────┘        └──────────────────┘   │      │
│                           │                         ▲              │      │
│                    ┌──────▼───────┐                 │              │      │
│                    │   Stitcher   │◀────────────────┤              │      │
│                    └──────┬───────┘                 │              │      │
│                           │                         │              │      │
│                    ┌──────▼───────────┐             │              │      │
│                    │Projection processor│◀──────────┤              │      │
│                    └──────┬───────────┘             │  ┌─────────────────────┐
│                           │                         │  │  (Transmission side) │
│                    ┌──────▼───────┐                 │  │  Feedback processor  │
│                    │ Data encoder │◀────────────────┤  └─────────────────────┘
│                    └──────┬───────┘                 │           ▲  │
│                           │                         │           │  │
│                    ┌──────▼────────────┐            │           │  │
│                    │Encapsulation processor│◀────────┤          │  │
│                    └──────┬────────────┘            │           │  │
│                           │                         │           │  │
│                    ┌──────▼─────────────┐           │           │  │
│                    │Transmission processor│◀─────────┘          │  │
│                    └──────┬─────────────┘                       │  │
│                           │                                     │  │
│                    ┌──────▼───────┐                             │  │
│                    │  Transmitter │                             │  │
│                    └──────┬───────┘                             │  │
└───────────────────────────┼─────────────────────────────────────┼─────────┘
                            │                                     │
                            ▼                                     │
                       Transmission                        Feedback information
```

# FIG. 3

Reception                          Feedback information

360 Video reception device

Receiver

Reception processor

| Metadata parser | Decapsulation processor | Feedback<br>information | (Reception side)<br>Feedback processor |

Data decoder    Feedback information

Reprojection processor    Feedback information

Renderer    Feedback information

## FIG. 4

(a)

Audio Metadata

A → Acquisition → $B_a$ → Audio Preprocessing → $D_a$ → Audio encoding → $E_a$ → File/segment encapsulation → $F_s$

$B_v$ → Visual stitching → projection, and mapping → $D_v$ → Video encoding → $E_v$ → File/segment encapsulation

→ Image encoding → $E_i$

Visual Metadata

F → File playback → Delivery

Loudspeakers/ headphones ← $A'_a$ ← Audio rendering ← $B'_a$ ← Audio encoding ← $E'_a$

Metadata

Display ← $A_v$ ← Audio rendering ← $D'$ ← Video encoding ← $E'_v$ ← File/segment encapsulation ← $F'$

→ Image encoding ← $E'_i$ ← $F'_s$

VR service platform

Head/eye tracking

Orientation/viewport metadata    Orientation/ viewport metadata

VR Application

(b)

Image stitching, projection, and region-wise packing

Input images → $B_i$ → Stitching and projection → C Projected frame → Region-wise packing (optional) → D Packed frame(s) → Image/video encoding

EP 3 641 321 A1

41

# FIG. 5

Pitch Axis

Roll Axis

Yaw Axis

# FIG. 6

(a)

| | top | | |
|---|---|---|---|
| right | front | left | back |
| | bottom | | |

| bottom | top | back |
|---|---|---|
| right | front | left |

(b)

side — top — bottom

top — bottom — side

(c)

| Left-top | | Right-top |
|---|---|---|
| | front | |
| Left-bottom | | Right-bottom |

# FIG. 7

(a)

Q1　　　　　　　　　　　Q2

Region of Interest

t6010

Transmitted tiles

Q3　　Encoded video　　Q4

(b)

Q1　　Q2

Region of Interest

Transmitted tiles

Q3　Encoded video　Q4

UHD encoder

4xUHD-1 encoding

Tiling system

DASH packager/titer

IP network

UHD decoder

VR decoder

# FIG. 8

```
.....
                <Basic metadata>
unsigned      int(8)           vr_geometry;
unsigned      int(8)           projection_schme;

            <Stereoscopic related metadata>
unsigned      int(1)           is_stereoscopic;
unsigned      int(3)           stereo_mode;

            <Initial View related metadata>
signed        int(8)           initial_view_yaw_degree;
signed        int(8)           initial_view_pitch_degree;
signed        int(8)           initial_view_roll_degree;

                <ROI related metadata>
unsigned int(1)                2d_roi_range_flag;
unsigned int(1)                3d_roi_range_flag;
if (2d_roi_region_flag ==1) {
   unsigned int(16) min_top_left_x;
   unsigned int(16) max_top_left_x;
   unsigned int(16) min_top_left_y;
   unsigned int(16) max_top_left_y;
   unsigned int(16) min_width;
   unsigned int(16) max_width;
   unsigned int(16) min_height;
   unsigned int(16) max_height;
   unsigned int(16) min_x;
   unsigned int(16) max_x;
   unsigned int(16) min_y;
   unsigned int(16) max_y;
}
if (3d_roi_region_flag ==1) {
   unsigned int(16) min_yaw;
   unsigned int(16) max_yaw;
   unsigned int(16) min_pitch;
   unsigned int(16) max_pitch;
   unsigned int(16) min_roll;
   unsigned int(16) max_roll;
   unsigned int(16) min_field_of_view;
   unsigned int(16) max_field_of_view;
}

            <Field Of View related metadata>
unsigned int(1)                content_fov_flag;
if (content_fov_flag == 1)  {
   unsigned int(16)            content_fov;
}

            <Cropped Region related metadata>
unsigned int(1)                is_cropped_region;
if(is_cropped_region == 1)  {
   unsigned int(16)            cr_region_left_top_x;
   unsigned int(16)            cr_region_left_top_y;
   unsigned int(16)            cr_region_width;
   unsigned int(16)            cr_region_height;
}

.....
```

# FIG. 9

t18010

| ftyp | moov | moof | mdaf | ... | moof | mdaf |
|------|------|------|------|-----|------|------|

moov: trak #1, trak #N, mvex

t18020

| ftyp | moov |
|------|------|

moov: trak #1, trak #N, mvex

t18030

| styp | sidx | moof | mdat | ... | moof | mdat |

t18040

| styp | sidx | styp | moof | mdat | ... | moof | mdat |

t18050

```
aligned(8) class Box (unsigned int(32) boxtype, optional
unsigned int(8)[16] extended_type)
{
    unsigned int(32) size;
    unsigned int(32) type = boxtype;
    if (size==1) {
        unsigned int(64) largesize;
    } else if (size==0) {
    // box extends to end of file
    }
    if (boxtype=='uuid') {
        unsigned int(8)[16] usertype = extended_type;
    }
}
aligned(8) class FullBox(unsigned int(32) boxtype, unsigned int(8)
v, bit(24) f) extends Box(boxtype) {
    unsigned int(8)              version = v;
    bit(24)                      flags = f;
}
```

# FIG. 10

# FIG. 11

t50010

**HTTP Server**

Media Presentation Description (MPD)

Segment
....
Segment

MPD delivery

Segment delivery

HTTP

**DASH Client**

DASH Client Controller

MPD Parser

Segment Parser

Media Engine

HTTP Client

---

t50020

**Media Presentation**

Period, start=0s

Period, start=100s

Period, start=195s

...

**Period**

Start=100s
baseURL=http://dash.com/

Adaptation Set 1
Audio

Adaptation Set 2
Video

Adaptation Set 3
Captions

...

**Representation 1**

bandwidth=850 kbps
width=1280, height=720, ...

Segment Information
Duration=10s
Template: ./video-1-$Number$

**Representation 2**

bandwidth=1250 kbps
baseURL=http://dash.com/

...

**Representation M**

**Segment Information**

Initialization Segment

http://dash.com/video-1

Media Segment 1
start=100s
http://dash.com/video-1-1

Media Segment 2
start=110s
http://dash.com/video-1-2

...

Media Segment 10
start=190s
http://dash.com/video-1-10

# FIG. 12

VR 1

VR 2

# FIG. 13

VR 1   VR 2

VR 3

VR 4

Use case #1 Link type

VR 2

VR 1

Use case #2 Bridge type

VR 5

VR 1   VR 2

VR 3

VR 4

VR 1   VR 2   VR 3

VR 4

VR 5

Use case #3 Hub type

# FIG. 14

```
class HotspotStruct(Hotspot_ID){
                signed int (32) hotspot_yaw;
                signed int (32) hotspot_pitch;
                signed int (32) hotspot_roll;
                signed int (32) hotspot_vertical_range;
                signed int (32) hotpost_horizontal_range;

                unsigned int(32) exposure_start_offset;
                unsigned int(32) exposure_duration;

                unsigned int (32) next_track_ID;
                unsigned int (32) hotspot_start_time_delta;
                signed int (32) con_initial_viewport_yaw;;
                signed int (32) con_initial_viewport_pitch;
                signed int (32) con_initial_viewport_roll;
        }
```

# FIG. 15

```
class HotspotStruct(Hotspot_ID){
            HotspotRegion (hotspot_ID);
            unsigned int(1) interpolate;
            bit(7) reserved = 0;

            unsigned int(32) exposure_start_offset;
            unsigned int(32) exposure_duration;

            unsigned int (32) next_track_ID;
            unsigned int (32) hotspot_start_time_delta;
            signed int (32) con_initial_viewport_yaw;;
            signed int (32) con_initial_viewport_pitch;
            signed int (32) con_initial_viewport_roll;
}
```

```
class HotspotRegion(Hotspot_ID){
            unsigned int(16) shape type;
            const unsigned int (16) reserved = 0;
            signed int (32) hotspot_center_yaw;
            signed int (32) hotspot_center_pitch;
            signed int (32) hotspot_center_roll;
            signed int (32) hotspot_vertical_range;
            signed int (32) hotpost_horizontal_range;

            }
```

# FIG. 16

( a )

Great circle

Small circles

( b )

(center_pitch, center_yaw)

cPitch1

cYaw1  cYaw2

cPitch2

( c )

(center_pitch, center_yaw)

cPitch1

cYaw1  cYaw2

cPitch2

# FIG. 17

```
class HotspotStruct(Hotspot_ID){
            HotspotRegion (hotspot_ID);
            unsigned int(32) exposure_start_offset;
            unsigned int(32) exposure_duration;

            unsigned int (32) next_track_ID;
            unsigned int (32) hotspot_start_time_delta;
            signed int (32) con_initial_viewport_yaw;;
            signed int (32) con_initial_viewport_pitch;
            signed int (32) con_initial_viewport_roll;
      }
```

```
class HotspotRegion(Hotspot_ID){
            unsigned int(16) shape type;
            const unsigned int (16) reserved = 0;
            signed int (32) hotspot_center_yaw;
            signed int (32) hotspot_center_pitch;
            signed int (32) hotspot_center_roll;

            unsigned int (32) hotspot_vertical_range;
            unsigned int (32) hotpost_horizontal_range;

      }
```

# FIG. 18

```
class HotspotStruct(Hotspot_ID){
            HotspotRegion (hotspot_ID);

            unsigned int(32) exposure_start_offset;
            unsigned int(32) exposure_duration;

            string hotspot_uri;
            unsigned int (32) hotspot_start_time_delta;
            signed int (32) con_initial_viewport_yaw;;
            signed int (32) con_initial_viewport_pitch;
            signed int (32) con_initial_viewport_roll;
    }
```

# FIG. 19

```
class HotspotStruct(Hotspot_ID){
            HotspotRegion (hotspot_ID);
            unsigned int(1) interpolate;
            bit(7) reserved = 0;

            unsigned int(32) exposure_start_offset;
            unsigned int(32) exposure_duration;

            string hotspot_uri;
            unsigned int (32) hotspot_start_time_delta;
            signed int (32) con_initial_viewport_yaw;;
            signed int (32) con_initial_viewport_pitch;
            signed int (32) con_initial_viewport_roll;
    }
```

# FIG. 20

```
class HotspotRegion(Hotspot_ID){
                unsigned int(16) shape type;
                const unsigned int (16) reserved = 0;
                signed int (32) hotspot_center_X;
                signed int (32) hotspot_center_Y;
                signed int (32) hotspot_center_Z;
                signed int (32) hotspot_vertical_range;
                signed int (32) hotpost_horizontal_range;

                }
```

# FIG. 21

```
Class HotspotStruct(Hotspot_ID){
        HotspotRegion(Hotspot_ID);
                unsigned int(1) interpolate;
                bit(7) reserved = 0;
                unsigned int(32) exposure_start_offset;
                unsigned int(32) exposure_duration;

                unsigned int (32) next_track_ID;
                unsigned int (32) hotspot_start_time_delta;
                signed int (32) con_initial_viewport_yaw;;
                signed int (32) con_initial_viewport_pitch;
                signed int (32) con_initial_viewport_roll;
        }
```

```
class HotspotRegion(Hotspot_ID){
                for (i=1;i<=num_vertex;i++)
        {
                signed int (32) hotspot_yaw[ ];
                signed int (32) hotspot_pitch[ ];
                signed int (32) hotspot_roll[ ];
        }
}
```

# FIG. 22

```
class HotspotRegion(Hotspot_ID){
                for (i=1;i<=num_vertex;i++)
        {
                signed int (32) hotspot_yaw[ ];
                signed int (32) hotspot_pitch[ ];
                signed int (32) hotspot_roll[ ];
        }
                unsigned int(1) interpolate;
                bit(7) reserved = 0;
}
```

# FIG. 23

```
class HotspotRegion(Hotspot_ID){
                for (i=1;i<=num_vertex;i++)
        {
                signed int (32) hotspot_X[ ];
                signed int (32) hotspot_Y[ ];
                signed int (32) hotspot_Z[ ];
        }
}
```

# FIG. 24

```
class HotspotRegion(Hotspot_ID){
                    for (i=1;i<=num_vertex;i++)
        {

                signed int (32) hotspot_X[ ];
                signed int (32) hotspot_Y[ ];
                signed int (32) hotspot_Z[ ];

        }

                unsigned int(1) interpolate;
                bit(7) reserved = 0;

}
```

# FIG. 25

```
Class HotspotStruct(Hotspot_ID){
        unsigned int (32) num_vertex;
        for (i=1;i<=num_vertex;i++)
        {

                signed int (32) hotspot_yaw[];
                signed int (32) hotspot_pitch[];
                signed int (32) hotspot_roll[];

        }

                unsigned int(32) exposure_start_offset;
                unsigned int(32) exposure_duration;

                unsigned int (32) next_track_ID;
                unsigned int (32) hotspot_start_time_delta;
                signed int (32) con_initial_viewport_yaw;;
                signed int (32) con_initial_viewport_pitch;
                signed int (32) con_initial_viewport_roll;

        }
```

# FIG. 26

```
class HotspotSampleEntry extends MetadataSampleEntry ('hspt') {
    unsinged int (8)          num_hotspots;
    for(i=1;i<=num_hotspots;i++)
      HotspotID[i];
      HotspotStruct (HotspotID[i]);
    }
}

Class HotspotSample(){
    unsinged int (8)          num_hotspots;
    for(i=1;i<=num_hotspots;i++)
      HotspotID[i];
      HotspotStruct (HotspotID[i]);
    }
}
```

# FIG. 27

```
aligned(8) class TrackHeaderBox extends FullBox('tkhd', version, flags){
     if (version==1) {
          unsigned int(64)        creation_time;
          unsigned int(64)        modification_time;
          unsigned int(32)        track_ID;
          const unsigned int(32)  reserved = 0;
          unsigned int(64)        duration;
     } else { // version==0
          unsigned int(32)        creation_time;
          unsigned int(32)        modification_time;
          unsigned int(32)        track_ID;
          const unsigned int(32)  reserved = 0;
          unsigned int(32)        duration;
     }
     const unsigned int(32)[2]    reserved = 0;
     template int(16)             layer = 0;
     template int(16)             alternate_group = 0;
     template int(16)             volume = {if track_is_audio 0x0100 else 0};
     const unsigned int(16)       reserved = 0;
     template int(32)[9]          matrix=
     { 0x00010000,0,0,0,0x00010000,0,0,0,0x40000000 };// unity matrix
     unsigned int(32)             width;
     unsigned int(32)             height;
     unsigned int(1)              hotspot_flag;
     unsigned int(7)              reserved=0;
     if(hotspot_flag == 1){
     unsinged int (8)                  num_hotspots;
          for(i=1;i<=num_hotspots; i++) {
                                        HotspotID[i];
                                        HotspotStruct (HotspotID[i]);
          }
     }
```

# FIG. 28

```
aligned(8) class VideoMediaHeaderBox extends FullBox('vmhd', version = 0, 1) {
template unsigned int(16)          graphicsmode = 0;
// copy, see below
    template unsigned int(16)[3]   opcolor = {0, 0, 0};
    unsigned int(1)                hotspot_flag;
    unsigned int(7)                reserved=0;
    if(hotspot_flag == 1){
    unsinged int (8)               num_hotspots;
        for(i=1;i<=num_hotspots; i++) {
                        HotspotID[i];
                        HotspotStruct (HotspotID[i]);
            }
    }
```

# FIG. 29

```
aligned(8) Class TrackReferenceBox extends Box('tref'){
}
aligned(8) class TrackReferenceTypeBox (unsigned int(32) reference_type)
extends Box(reference_type) {
        unsigned int(32) Track_IDs[ ];
}
```

| Track Reference | Description |
|---|---|
| 'hint' | The referenced track(s) contain the original media for this hint track |
| 'cdsc' | This track describes the referenced track |
| 'font' | This track uses fonts carried/defined in the referenced track |
| 'hind' | This track depends on the referenced hint track i.e., it should only be used if the referenced hint track is used |
| 'vdep' | This track contains auxiliary depth video information for the referenced video track |
| 'vplx' | This track contains auxiliary parallax video information for the referenced video track |
| 'subt' | This track contains subtitle, timed text or overlay graphical information for the referenced track or any track in the alternate group to which the track belongs, if any. |
| 'hspi' | This track contains information related to hotspot for the referenced track or any track in the alternate group to which the track belongs, if any |

# FIG. 30

```
Class HotSpotInformationBox extends Box ('hspi'){
        unsigned int(32) num_hotspot;
        for (i=1;i<=num_hotspot;i++)
        {
        unsigned int(32) exposure_start_offset;
        unsigned int(32) exposure_duration;

        signed int(32)  hotspot_yaw;
        signed int(32)  hotspot_pitch;
        signed int(32)  hotspot_roll;
        signed int (32) hotspot_vertical_range;
        signed int (32) hotpost_horizontal_range;
        unsigned int(32) next_trackID;
        unsigned int (32) hotspot_start_time_delta;
        signed int (32) con_initial_viewport_yaw;;
        signed int (32) con_initial_viewport_pitch;
        signed int (32) con_initial_viewport_roll;
        }
    }
```

# FIG. 31

```
Class HotSpotInformationBox extends Box ('hspi'){
        unsinged int (8)  num_hotspot;

for(i=1;i<=num_hotspot; i++) {
    HotspotID[i];
    HotspotStruct (HotspotID[i]);
        }
    }
```

FIG. 32

FIG. 33

```
aligned(8) class SampleToGroupBox
        extends FullBox('sbgp', version, 0)
{
        unsigned int(32) grouping_type;
        if (version == 1) {
        unsigned int(32) grouping_type_parameter;
        }
        unsigned int(32) entry_count;
        for (i=1; i <= entry_count; i++)
        {
                unsigned int(32) sample_count;
                unsigned int(32) group_description_index;
        }
}
```

# FIG. 34

```
abstract class HotspotSampleGroupEntry (unsigned int(32) grouping_type)
extends SampleGroupDescriptionEntry (grouping type)
{
    unsinged int (8)  num_hotspots;
    for(i=1;i<=num_hotspots;i++)      {
    HotspotID[i];
    HotspotStruct (HotspotID[i]);
    }
}


aligned(8) class SampleGroupDescriptionBox (unsigned int(32) handler_type)
        extends FullBox('sgpd', version, 0){
        unsigned int(32) grouping_type;
        if (version==1) { unsigned int(32) default_length; }
        if (version>=2) {
                unsigned int(32) default_sample_description_index;
        }
        unsigned int(32) entry_count;
        int i;
        for (i = 1 ; i <= entry_count ; i++){
                if (version==1) {
                        if (default_length==0) {
                                unsigned int(32) description_length;
                        }
                }
                SampleGroupEntry (grouping_type);
                        // an instance of a class derived from SampleGroupEntry
                        // that is appropriate and permitted for the media type
        }
}
```

# FIG. 35

```
class NavigatorStruct (SphereRegionStruct) {
        signed int (32) subwindow_location_X;
        signed int (32) subwindow_location_Y;
        signed int (32) subwindow_location_Z;
        unsigned int (32) subwindow_location_width;
        unsigned int (32) subwindow_location_height;
}
```

# FIG. 36

```
Class NavigatorStruct(SphereRegionStruct){
        unsigned int (32) num_vertex;
        for (i=1;i<=num_vertex;i++)
        {
        signed int (32) subwindow_location_X[ ];
        signed int (32) subwindow_location_Y[ ];
        signed int (32) subwindow_location_Z[ ];
        unsigned int(1) interpolate;
        bit(7) reserved = 0;


        }
}
```

## FIG. 37

```
class NavigatorSampleEntry() extends SampleEntry(){
        NavigatorStruct (SphereRegionStruct)
}
```

## FIG. 38

```
aligned(8) class VideoMediaHeaderBox extends FullBox('vmhd', version = 0, 1) {
template unsigned int(16)        graphicsmode = 0;
// copy, see below
    template unsigned int(16)[3]   opcolor = {0, 0, 0};
    unsigned int(1)                Navi_flag;
    unsigned int(7)                reserved=0;
    if(Navi_flag == 1){
            NavigatorStruct ()
            }
    }
}
```

# FIG. 39

```
aligned(8) Class TrackReferenceBox extends Box('tref'){
}
aligned(8) class TrackReferenceTypeBox (unsigned int(32) reference_type)
extends Box(reference_type) {
        unsigned int(32) Track_IDs[ ];
}
```

| Track Reference | Description |
|---|---|
| 'hint' | The referenced track(s) contain the original media for this hint track |
| 'cdsc' | This track describes the referenced track |
| 'font' | This track uses fonts carried/defined in the referenced track |
| 'hind' | This track depends on the referenced hint track i.e., it should only be used if the referenced hint track is used |
| 'vdep' | This track contains auxiliary depth video information for the referenced video track |
| 'vplx' | This track contains auxiliary parallax video information for the referenced video track |
| 'subt' | This track contains subtitle, timed text or overlay graphical information for the referenced track or any track in the alternate group to which the track belongs, if any. |
| 'hspi' | This track contains information related to hotspot for the referenced track or any track in the alternate group to which the track belongs, if any |
| 'nvhd' | This track contains navigator, timed sub-window or overlay graphical Info for the referenced track or any track in the alternative group to which the track belongs, if any |

# FIG. 40

```
Class HotSpotInformationBox extends Box ('nvhd'){
        NavigatorStruct(RegionStruct)
}
```

# FIG. 41

```
aligned(8) SphereRegionStruct(range_included_flag) {
        signed int(32) center_yaw;
        signed int(32) center_pitch;
        singed int(32) center_roll;
        if (range_included_flag) {
                unsigned int(32) hor_range;
                unsigned int(32) ver_range;
        }
        unsigned int(1) interpolate;
        bit(7) reserved = 0;
}
```

# FIG. 42

Generate 360-degree video service containing a plurality of 360-degree video contents ⁓ SH42100

Generate signaling information for the 360-degree video service ⁓ SH42200

Transmit data signal including the 360-degree video service and the signaling information ⁓ SH42300

# FIG. 43

| | |
|---|---|
| 360-Degree video service generator | SH43100 |
| Signaling information generator | SH43200 |
| Data signal transmitter | SH43300 |

# FIG. 44

| | |
|---|---|
| Receiver | SH44100 |
| Signaling parser | SH44200 |
| Display | SH44300 |

# FIG. 45

```
┌─────────────────────────────────────────────────────┐
│ Receive data signal including 360-degree video       │
│ service containing a plurality of 360-degree video    │ ── SH45100
│ contents and signaling information                    │
└─────────────────────────────────────────────────────┘
                          │
                          ▼
┌─────────────────────────────────────────────────────┐
│ Parse the signaling information                       │ ── SH45200
└─────────────────────────────────────────────────────┘
                          │
                          ▼
┌─────────────────────────────────────────────────────┐
│ Display the 360-degree video service                  │ ── SH45300
└─────────────────────────────────────────────────────┘
```

## INTERNATIONAL SEARCH REPORT

| International application No. |
|---|
| **PCT/KR2018/002052** |

### A. CLASSIFICATION OF SUBJECT MATTER

*H04N 21/434(2011.01)i, H04N 21/4725(2011.01)i, H04N 21/81(2011.01)i*

According to International Patent Classification (IPC) or to both national classification and IPC

### B. FIELDS SEARCHED

Minimum documentation searched (classification system followed by classification symbols)
H04N 21/434; G01C 21/32; G06F 15/00; B41J 1/00; H04N 7/00; H04N 5/445; H04N 13/04; H04N 21/4725; H04N 21/81

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: 360 degrees video content, a plurality of videos, hotspot, marker, connection, position, outline

### C. DOCUMENTS CONSIDERED TO BE RELEVANT

| Category* | Citation of document, with indication, where appropriate, of the relevant passages | Relevant to claim No. |
|---|---|---|
| X | KR 10-2011-0024774 A (DAUM COMMUNICATIONS CORP.) 09 March 2011 See paragraphs [0004]-[0005], [0015]-[0017], [0022]-[0025], [0038], [0042]; claims 1, 12; and figures 1-7. | 9-10,14-15 |
| Y | | 1-8,11-13 |
| Y | KR 10-2013-0136478 A (LG ELECTRONICS INC.) 12 December 2013 See paragraphs [0159], [0162]; and claim 1. | 1-8 |
| Y | US 2002-0085219 A1 (RAMAMOORTHY, Victor) 04 July 2002 See paragraphs [0189]-[0192]. | 3-4,11-12 |
| Y | US 2015-0015680 A1 (HTC CORPORATION) 15 January 2015 See paragraph [0049]. | 5,13 |
| A | US 2004-0010367 A1 (POLLARD, Stephen Bernard) 15 January 2004 See paragraphs [0021]-[0025] and figure 1. | 1-15 |
| A | US 2010-0220174 A1 (MENDOZA, Felipe et al.) 02 September 2010 See paragraphs [0042]-[0050] and figures 4-7. | 1-15 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 JUNE 2018 (25.06.2018) | **25 JUNE 2018 (25.06.2018)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/002052**

| Patent document cited in search report | Publication date | Patent family member | Publication date |
|---|---|---|---|
| KR 10-2011-0024774 A | 09/03/2011 | KR 10-1049416 B1 | 14/07/2011 |
| KR 10-2013-0136478 A | 12/12/2013 | CA 2819141 A1 | 07/06/2012 |
| | | CA 2819141 C | 20/06/2017 |
| | | CN 103339946 A | 02/10/2013 |
| | | CN 103339946 B | 07/10/2015 |
| | | CN 105120370 A | 02/12/2015 |
| | | DE 112011103739 T5 | 19/09/2013 |
| | | GB 2500330 A | 18/09/2013 |
| | | US 2013-0250052 A1 | 26/09/2013 |
| | | US 9712804 B2 | 18/07/2017 |
| | | WO 2012-074328 A2 | 07/06/2012 |
| | | WO 2012-074328 A3 | 26/07/2012 |
| US 2002-0085219 A1 | 04/07/2002 | AU 8646601 A | 25/02/2002 |
| | | WO 02-014982 A2 | 21/02/2002 |
| | | WO 02-014982 A3 | 01/08/2002 |
| | | WO 02-014982 A9 | 27/03/2003 |
| US 2015-0015680 A1 | 15/01/2015 | CN 104284173 A | 14/01/2015 |
| | | TW 201503676 A | 16/01/2015 |
| | | TW 1535282 B | 21/05/2016 |
| | | US 2015-0110467 A1 | 23/04/2015 |
| US 2004-0010367 A1 | 15/01/2004 | GB 2386488 A | 17/09/2003 |
| | | GB 2386488 B | 26/10/2005 |
| | | US 6965828 B2 | 15/11/2005 |
| US 2010-0220174 A1 | 02/09/2010 | US 2007-0273758 A1 | 29/11/2007 |
| | | US 7746376 B2 | 29/06/2010 |
| | | US 8624958 B2 | 07/01/2014 |

Form PCT/ISA/210 (patent family annex) (January 2015)